# EUROPEAN PATENT APPLICATION

(11) **EP 4 779 957 A1**
(43) Date of publication of application: **22.07.2026**
(21) Application number: 24865789.2
(22) Date of filing: 09.09.2024
(51) Int. Cl.: H04L 67/141, F17C 5/06, H04L 69/24, H04L 69/323, H04W 76/10, H04L 69/16, H04L 67/51

(54) **BIDIRECTIONAL COMMUNICATION METHOD AND APPARATUS FOR HYDROGEN FUEL SUPPLY**

(30) Priority: 11.09.2023 KR 20230120337; 13.10.2023 KR 20230136536
(71) Applicant: Hyundai Motor Company, Seoul 06797 (KR); Kia Corporation, Seoul 06797 (KR); Myongji University Industry and Academia Cooperation Foundation, Gyeonggi-do 54538 (KR)
(72) Inventor: SHIN, Min Ho, Yongin-si, Gyeonggi-do 17058 (KR)
(74) Representative: Hoffmann Eitle
(86) International application number: PCT/KR2024/013607
(87) International publication number: WO 2025/058350

(57) **Abstract**

A method according to an embodiment of the present disclosure comprises the steps of: broadcasting a dispenser discovery protocol (DDP) request message via a communication network including a dispenser for supplying hydrogen to a mobility means; receiving, from the dispenser, a DDP response message including identification information about the dispenser on the communication network; and performing authentication for pairing between the mobility means and the dispenser by using the identification information about the dispenser in the DDP response message between the mobility means and the dispenser.

## Description

### [Technical Field]

The present disclosure relates to communication technology for hydrogen fueling from a station or a dispenser to hydrogen fueled mobility, and more particularly, to a hydrogen fueling process capable of improving safety, compatibility, efficiency, and reliability of hydrogen fueling, a bidirectional communication method for the hydrogen fueling process, and an apparatus using the bidirectional communication method.

### [Background Art]

The content described in this section merely provides background information regarding exemplary embodiments and does not provide prior art.

Hydrogen vehicles or hydrogen electric vehicles refer to zero-emission vehicles powered by electrical energy generated by a reaction between high-pressure hydrogen stored in the vehicle and atmospheric air. Hydrogen electric vehicles are also referred to as fuel cell electric vehicles (FCEV). Most hydrogen electric vehicles utilize hydrogen as an energy source to generate electricity using a fuel cell system. In hydrogen electric vehicles, only pure water (H₂O) is emitted during the electricity generation process, and hydrogen electric vehicles have the advantage of removing ultrafine dust from the atmosphere during driving, and therefore hydrogen electric vehicles are regarded as next-generation eco-friendly mobility. Based on the fact that hydrogen as a fuel exists infinitely on Earth and that the energy production process is eco-friendly, hydrogen electric vehicles are widely recognized as a technology with potential for use across various industries.

Hydrogen fueled mobility refers to mobility that uses hydrogen as an energy source or fuel to generate electrical energy and drives an electric motor using the electrical energy. Hydrogen fueled mobility may include not only the hydrogen electric vehicle described above but also aerial mobility, industrial trucks, trains, ships, and aircraft, and may include devices that generate electrical energy using hydrogen as a fuel and operate using the electrical energy.

Most hydrogen electric vehicles deliver high-pressure hydrogen safely stored in a hydrogen fuel storage tank and oxygen introduced through an air supply system to a fuel cell stack, and generate electrical energy through an electrochemical reaction between the hydrogen and the oxygen. The generated electrical energy is converted into kinetic energy through a driving motor to operate the hydrogen electric vehicle, and the hydrogen electric vehicle traveling on the road discharges only pure water through an exhaust outlet.

Meanwhile, the concept of a hydrogen fueled car, which is not a hydrogen electric vehicle, also refers to a vehicle using hydrogen as a fuel, and the hydrogen fueled car operates the electric motor using heat generated by directly combusting hydrogen in an internal combustion engine (ICE). The method of supplying hydrogen fuel for the hydrogen fueled car is not significantly different from the method of supplying hydrogen fuel for the hydrogen electric vehicle.

In a control technique for supplying hydrogen to a vehicle using hydrogen as a fuel, a final control objective is to operate a compressed hydrogen storage system (CHSS) of a fuel cell within a limit temperature and a limit pressure required for the safety of hydrogen fueling.

A conventional hydrogen electric vehicle hydrogen fueling process, control technique, and protocol for the hydrogen fueling process were defined in the past when wireless or wired communication technology and computing techniques for control were not matured, and therefore the conventional technologies do not properly reflect advancements of recently developed information and communication technology (ICT). Accordingly, conventional hydrogen fueling technology for hydrogen electric vehicles is inefficient, slow, and not suitable for high-capacity hydrogen fueling.

In particular, in hydrogen fueling communication, in wireless communication, most hydrogen fueling control equipment uses unidirectional infrared communication devices, and therefore even in wireless-based hydrogen fueling communication, limitations and vulnerabilities of unidirectional communication remain.

### [Disclosure]

### [Technical Problem]

Based on solving the above-described problems, an objective of the present disclosure is to provide a hydrogen fueling process of hydrogen fueled mobility and, in a communication protocol for the hydrogen fueling process, to provide a hydrogen fueling process capable of overcoming limitations and vulnerabilities of conventional unidirectional communication and improving safety, compatibility, efficiency, and reliability of hydrogen fueling, a communication protocol negotiation for the hydrogen fueling process, a fueling protocol negotiation, a fueling parameter negotiation method, a monitoring control method, a safety check-in method, a safety check-out method, and an apparatus using the hydrogen fueling process.

Another objective of the present disclosure is to provide an error handling method and an emergency handling method for the hydrogen fueling process to handle one or more errors or emergencies occurring during communication protocol negotiation, fueling protocol negotiation, fueling parameter negotiation, monitoring control, safety check-in, and safety check-out for the hydrogen fueling process, and to provide an apparatus using the error handling method and the emergency handling method.

Another objective of the present disclosure is to provide a bidirectional hydrogen fueling communication process capable of controlling a hydrogen fueled mobility and a dispenser to determine a conventional communication medium or an advanced communication medium to effectively achieve a fueling goal, a communication protocol negotiation process considering bidirectional or unidirectional communication, and an apparatus using the communication protocol negotiation process.

Another objective of the present disclosure is to propose and provide a Dispenser Discovery Protocol (DDP)-related process performed between the hydrogen fueled mobility and the dispenser.

### [Technical Solution]

A communication method for hydrogen fueling performed by a hydrogen-fueled mobility, according to embodiments of the present disclosure, may comprise broadcasting, via a communication network including a dispenser configured to supply hydrogen to the mobility, a Dispenser Discovery Protocol (DDP) request message; receiving, from the dispenser, a DDP response message including identification information of the dispenser on the communication network; and performing authentication for pairing between the mobility and the dispenser based on the identification information of the dispenser included in the DDP response message.

The communication method may further comprise, prior to the broadcasting of the DDP request message, determining an IP address of the mobility being determined, which is to be used in the communication network including the dispenser, and connecting the mobility being connected to the communication network via a communication channel based on the IP address of the mobility.

In the communication method, the IP address of the mobility may be generated based on a random number.

In the communication method, the DDP request message may include a pairing identifier (ID) of the mobility, and the identification information of the dispenser included in the DDP response message may include a pairing identifier (ID) of the dispenser.

In the performing of the authentication for pairing between the mobility and the dispenser, the authentication may be performed using the pairing identifier of the mobility and the pairing identifier of the dispenser.

In the performing of the authentication for pairing between the mobility and the dispenser, the authentication for pairing between the mobility and the dispenser may be performed using the pairing identifier of the mobility and the pairing identifier of the dispenser via a pairing channel different from a communication channel connected to the communication network.

The performing of the authentication for pairing between the mobility and the dispenser, may comprise: binding a pairing channel for pairing between the mobility and the dispenser to the communication channel using the pairing identifier of the mobility and the pairing identifier of the dispenser; and performing authentication for pairing between the mobility and the dispenser within the pairing channel using the pairing identifier of the mobility and the pairing identifier of the dispenser.

In the communication method, the identification information of the dispenser included in the DDP response message may comprise one or more of an IP address of the dispenser, a TCP port number of the dispenser, or a UDP port number of the dispenser.

The communication method may further comprise, after the pairing between the mobility and the dispenser is performed, negotiating one or more of a communication protocol or a fueling protocol between the mobility and the dispenser.

The communication method may further comprise, after the pairing between the mobility and the dispenser is performed, establishing a secure channel between the mobility and the dispenser for negotiating a communication protocol or a fueling protocol.

In the communication method, the negotiating one or more of the communication protocol or fueling protocol, may comprise: negotiating the communication protocol between the mobility and the dispenser; negotiating the fueling protocol between the mobility and the dispenser based on the communication protocol; and negotiating fueling parameters between the mobility and the dispenser based on the fueling protocol.

A communication method for hydrogen fueling performed by a communication device of a dispenser configured to supply hydrogen to a hydrogen-fueled mobility according to embodiments of the present disclosure, may comprise: receiving, via a communication network including the dispenser, a Dispenser Discovery Protocol (DDP) request message broadcasted from the mobility; transmitting, to the mobility, a DDP response message including identification information of the dispenser on the communication network; and performing authentication for pairing between the mobility and the dispenser based on the identification information of the dispenser included in the DDP response message.

In the communication method, the DDP request message may include a pairing identifier (ID) of the mobility, and the identification information of the dispenser included in the DDP response message may include a pairing identifier (ID) of the dispenser.

In the performing of the authentication for pairing, the authentication may be performed using the pairing identifier of the mobility and the pairing identifier of the dispenser.

In the performing of the authentication for pairing between the mobility and the dispenser, the authentication for pairing between the mobility and the dispenser may be performed using the pairing identifier of the mobility and the pairing identifier of the dispenser via a pairing channel different from a communication channel connected to the communication network.

In the communication method, the identification information of the dispenser included in the DDP response message may comprise one or more of an IP address of the dispenser, a TCP port number of the dispenser, or a UDP port number of the dispenser.

The communication method may further comprise: after the pairing between the mobility and the dispenser is performed, negotiating one or more of a communication protocol or a fueling protocol between the mobility and the dispenser; and based on the fueling protocol, monitoring and controlling a hydrogen fueling process performed by the dispenser for the mobility.

A communication device disposed in a hydrogen-fueled mobility and configured for hydrogen fueling communication, according to embodiments of the present disclosure, may comprise: a processor executing the at least one instruction, the processor, based on the at least one instruction, may cause the hydrogen-fueled mobility to broadcast, via a communication network including a dispenser configured to supply hydrogen to the mobility, a Dispenser Discovery Protocol (DDP) request message; receive, from the dispenser, a DDP response message including identification information of the dispenser on the communication network; and cause perform authentication for pairing between the mobility and the dispenser to be performed based on the identification information of the dispenser included in the DDP response message.

In the communication device, prior to the broadcasting of the DDP request message, an IP address of the mobility to be used in the communication network including the dispenser may be determined, and the mobility may be connected to the communication network via a communication channel based on the IP address of the mobility.

In the communication device, the DDP request message may include a pairing identifier (ID) of the mobility, and the identification information of the dispenser included in the DDP response message may include a pairing identifier (ID) of the dispenser.

In the communication device, when the authentication for pairing is performed, authentication for pairing between the mobility and the dispenser may be performed using the pairing identifier of the mobility and the pairing identifier of the dispenser.

In the communication device, when the authentication for pairing is performed, the authentication for pairing may be performed via a pairing channel different from a communication channel connected to the communication network using the pairing identifier of the mobility and the pairing identifier of the dispenser.

In the communication device, the identification information of the dispenser included in the DDP response message may comprise one or more of an IP address of the dispenser, a TCP port number of the dispenser, or a UDP port number of the dispenser.

A communication device of a dispenser configured to supply hydrogen to a hydrogen-fueled mobility, according to embodiments of the present disclosure, may comprise: a processor executing the at least one instruction, the processor, based on the at least one instruction, may cause the hydrogen-fueled mobility to receive, via a communication network including the dispenser, a Dispenser Discovery Protocol (DDP) request message broadcasted from the mobility; transmit, to the mobility, a DDP response message including identification information of the dispenser on the communication network; and perform authentication for pairing between the mobility and the dispenser based on the identification information of the dispenser included in the DDP response message.

### [Advantageous Effects]

According to a communication method for hydrogen fueling and an apparatus using the communication method, namely a hydrogen fueling control apparatus or a communication control apparatus of a vehicle or mobility according to an exemplary embodiment of the present disclosure, a hydrogen fueling process and a communication protocol for the hydrogen fueling process of hydrogen fueled mobility including a fuel cell electric vehicle (FCEV) and a hydrogen fuel engine may overcome limitations and vulnerabilities of conventional unidirectional communication and may improve safety, compatibility, efficiency, and reliability of hydrogen fueling.

According to an exemplary embodiment of the present disclosure, communication protocol negotiation, fueling protocol negotiation, a parameter exchange method, and a communication protocol fallback rule for hydrogen fueling may be provided, in which mobility and a dispenser select a communication protocol required to execute a protocol for hydrogen fueling based on maximizing interoperability and considering backward compatibility between the mobility and the dispenser while considering a priority based on a preference of the mobility or the dispenser.

According to an exemplary embodiment of the present disclosure, rules and procedures necessary for communication protocol negotiation, fueling protocol negotiation, and fueling parameter exchange may be provided so that the mobility and the dispenser cooperate to effectively determine a conventional communication medium or an advanced communication medium to effectively achieve a fueling goal.

According to an exemplary embodiment of the present disclosure, rules and procedures necessary for monitoring and control, safety check-in, and safety check-out may be provided so that the mobility and the dispenser cooperate to effectively achieve the fueling goal.

According to an exemplary embodiment of the present disclosure, rules and procedures necessary for a use case in which monitoring and control, safety check-in, and safety check-out are interlinked with communication protocol negotiation, fueling protocol negotiation, and fueling parameter exchange may be provided so that the mobility and the dispenser cooperate to effectively achieve the fueling goal.

According to an exemplary embodiment of the present disclosure, rules and procedures necessary for a use case in which error handling and emergency handling for the hydrogen fueling process are interlinked with communication protocol negotiation, fueling protocol negotiation, fueling parameter negotiation, monitoring and control, safety check-in, and safety check-out to handle one or more errors or emergencies occurring during the hydrogen fueling process may be provided so that the mobility and the dispenser cooperate to effectively achieve the fueling goal.

According to an exemplary embodiment of the present disclosure, rules and procedures necessary to implement a process related to a Dispenser Discovery Protocol (DDP) performed between the hydrogen fueled mobility and the dispenser may be provided.

### [Brief Description of Drawings]

FIG. 1 is a conceptual diagram of a hydrogen fueling system for a fuel cell electric vehicle (FCEV) in which a bidirectional communication process for hydrogen fueling according to an exemplary embodiment of the present disclosure may be applied.
FIG. 2 is an enlarged partial view for explaining a physical coupling structure between the FCEV and a dispenser in the hydrogen fueling system of FIG. 1.
FIG. 3 is a graph for explaining a state change of hydrogen fuel occurring during a hydrogen fueling process performed by the hydrogen fueling system of FIG. 1.
FIG. 4 is a framework of functional blocks that perform a series of hydrogen fueling procedures in which the bidirectional communication process for hydrogen fueling according to an exemplary embodiment of the present disclosure may be adopted.
FIG. 5 is an exemplary view illustrating a communication stack related to each use case applicable to the bidirectional communication process for hydrogen fueling according to an exemplary embodiment of the present disclosure, based on a seven-layer Open Systems Interconnection (OSI) reference model.
FIG. 6 is an exemplary view for explaining a pairing procedure of a discovery and pairing process applicable to the bidirectional communication process for hydrogen fueling according to an exemplary embodiment of the present disclosure.
FIG. 7 is an exemplary view for explaining backward compatibility applicable to the bidirectional communication process for hydrogen fueling according to an exemplary embodiment of the present disclosure.
FIG. 8 is an exemplary view for explaining backward compatibility applicable to the bidirectional communication process for hydrogen fueling according to an exemplary embodiment of the present disclosure.
FIG. 9 is an exemplary view for explaining classification of communication data usage and backward compatibility in the classification of communication data usage applicable to the bidirectional communication process for hydrogen fueling according to an exemplary embodiment of the present disclosure.
FIG. 10 is a flowchart for explaining an authentication procedure of a communication security process applicable to the bidirectional communication process for hydrogen fueling according to an exemplary embodiment of the present disclosure.
FIG. 11 is a flowchart for explaining a communication protocol negotiation procedure applicable to the bidirectional communication process for hydrogen fueling according to an exemplary embodiment of the present disclosure.
FIG. 12 is a flowchart for explaining a fueling protocol negotiation procedure performed during the bidirectional communication process for hydrogen fueling according to an exemplary embodiment of the present disclosure.
FIG. 13 is a flowchart for explaining a fueling parameter exchange or negotiation procedure applicable to the bidirectional communication process for hydrogen fueling according to an exemplary embodiment of the present disclosure.
FIG. 14 is a conceptual diagram illustrating a table of parameters transmitted from mobility to a dispenser in a fueling parameter negotiation or exchange process according to an exemplary embodiment of the present disclosure.
FIG. 15 is a conceptual diagram illustrating a table of parameters transmitted from the dispenser to mobility in a fueling parameter negotiation or exchange process according to an exemplary embodiment of the present disclosure.
FIG. 16 is an operational flowchart illustrating one alternative exemplary embodiment of FIG. 4.
FIG. 17 is an operational flowchart illustrating a communication method for hydrogen fueling according to another exemplary embodiment of the present disclosure.
FIG. 18 is an operational flowchart illustrating an exemplary embodiment of S401 of the communication method for hydrogen fueling according to an exemplary embodiment of the present disclosure.
FIG. 19 is a conceptual block diagram illustrating an internal structure of a generalized computing system that may be mounted in hydrogen fueled mobility, a dispenser, or a fueling station, as a communication apparatus, a communication control apparatus, and/or an electronic control apparatus for the communication method for hydrogen fueling according to an exemplary embodiment of the present disclosure.

### [Best mode of the Invention]

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

A hydrogen-fueled vehicle may broadly include not only a fuel cell electric vehicle (FCEV) using a fuel cell, but also a vehicle based on an internal combustion engine (ICE) that directly uses hydrogen as fuel. In this specification, the hydrogen-fueled vehicle may be referred to as a hydrogen electric vehicle or simply a hydrogen vehicle.

In the following embodiments, a hydrogen fuel cell vehicle is described as a primary embodiment; however, other embodiments of the present disclosure may include an internal combustion engine (ICE)-based hydrogen electric vehicle that uses hydrogen as a fuel. In the following embodiments, a hydrogen fueling protocol and/or a communication protocol for hydrogen fueling are disclosed mainly with respect to a hydrogen fuel cell vehicle, and according to other embodiments of the present disclosure, the hydrogen fueling protocol and/or the communication protocol for hydrogen fueling disclosed in the following embodiments may also be applied to an ICE-based hydrogen electric vehicle.

Hydrogen fluid fuel may include gaseous hydrogen fuel or liquid hydrogen fuel.

"Compressed Hydrogen Storage System (CHSS)": An apparatus including at least one tank mounted on a vehicle to compress and store the hydrogen.

"Pressure Relief Device (PRD)": A device disposed in the CHSS and capable of isolating stored hydrogen from the other part of the fueling system and environment and exhausting the hydrogen to the outside.

Hydrogen fueling basically refers to a process in which high-pressure hydrogen is supplied from a dispenser of a hydrogen station and compressed and stored in a tank of a vehicle. Hydrogen fueling may be used interchangeably with fueling in a simplified sense in terms of supplying hydrogen fuel to a hydrogen electric vehicle. That is, in the present specification, the term "fueling" may be used to mean fuel supply, hydrogen fuel supply, or fueling, and the fuel supply may mean the supply of hydrogen fuel. For example, a fueling protocol may be referred to as a fueling protocol, a fueling session may be referred to as a fueling session, and a fueling method may be referred to as a hydrogen fueling method or a fueling method.

"Pressure Ramp Rate (PRR)": An increase rate of a pressure of CHSS and measured in mega-pascals per minute (MPa/min).

"Average Pressure Ramp Rate (APRR)": An average of the increase rate of the pressure from the beginning to the end of the hydrogen fueling.

"Precooling": A process of cooling the hydrogen in a hydrogen fueling station before the fueling.

"Dispenser": A component supplying precooled hydrogen to the CHSS. The dispenser may be arranged at the hydrogen fueling station to perform a hydrogen fueling operation between the hydrogen storage tank of the hydrogen fueling station and the CHSS of the vehicle.

"Nozzle": A device that is connected to a hydrogen dispensing system of the hydrogen fueling station and may be coupled to a receptacle of the hydrogen electric vehicle and to supply the hydrogen fuel to the hydrogen electric vehicle.

"Fueling session": A communication session occurring over an entire range of use cases for the hydrogen fueling.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

The correlation or association process may include a process of establishing a relationship between two peer communication entities.

"Command and control communications": Communications for exchanging information required for initiating, controlling, and terminating a hydrogen fueling process between a hydrogen dispenser and a hydrogen fueled mobility.

Meanwhile, in the following detailed description, embodiments related to a hydrogen electric vehicle or a fuel cell electric vehicle (fuel cell electric vehicle, FCEV) are illustrated; however, it will be apparent to those skilled in the art that the spirit of the present disclosure may be applied to various types of hydrogen fueled mobility. The hydrogen fueled mobility refers to mobility that uses hydrogen as an energy source or fuel to generate electrical energy and drives an electric motor using the generated electrical energy. The hydrogen fueled mobility may include, in addition to hydrogen electric vehicles, aerial mobility, as well as industrial trucks, trains, ships, and aircraft that generate electrical energy using hydrogen as fuel and are driven using the generated electrical energy.

In addition, the bidirectional communication process for hydrogen fueling according to the present disclosure may be partially applied not only to hydrogen fueled mobility but also to buildings or facilities that use hydrogen as an energy source.

Further, in the following description, the hydrogen fuel may include at least one of gaseous hydrogen and liquid hydrogen, and may basically refer to compressed hydrogen, but is not limited thereto.

In addition, although vehicles using the bidirectional communication process for hydrogen fueling are described mainly with reference to hydrogen electric vehicles (FCEVs) for convenience of explanation, the present disclosure is not limited thereto and may include hybrid-type electric vehicles (EVs) using hydrogen as fuel, internal combustion engine (ICE) vehicles, and the like.

In the following specification, some or all of processes of a communication method, a communication protocol negotiation method, a hydrogen fueling (fuel supply, fueling) protocol negotiation method, and a hydrogen fueling (fuel supply, fueling) parameter negotiation method performed in the hydrogen fueled mobility may be performed by an electronic control unit (ECU), a communication device, or a communication control device in the hydrogen fueled mobility.

In the following specification, some or all of processes of a communication method, a communication protocol negotiation method, a hydrogen fueling (fuel supply, fueling) protocol negotiation method, a hydrogen fueling (fuel supply, fueling) parameter negotiation method, a hydrogen fueling (fuel supply, fueling) method, and a hydrogen fueling (fuel supply, fueling) control method performed at the dispenser may be performed by a controller, an electronic control unit, a communication device, or a communication control device of the dispenser. In addition, some processes of the above-described methods may be performed by a controller, an electronic control unit, a communication device, or a communication control device of a fueling station associated with the dispenser.

Meanwhile, even if a technology is known prior to the filing date of the present application, it may be included as a part of the configuration of the present disclosure when necessary, and will be described in the present specification within a range that does not obscure the spirit of the present disclosure. However, in describing the configuration of the present disclosure, detailed descriptions of matters that are known prior to the filing date of the present application and can be clearly understood by those skilled in the art may obscure the spirit of the present disclosure, and thus overly detailed descriptions of known technologies are omitted. Further, the spirit of the present disclosure is not intended to claim rights to such known technologies, and the contents of the known technologies may be included as a part of the present disclosure within a range that does not depart from the spirit of the present disclosure.

For example, in the case of one-way communication, IrDA technology, in the case of bidirectional communication, short-range wireless communication technologies (Bluetooth, WLAN, UWB), or wired communication technologies for one-way/bidirectional communication may be known technologies prior to the filing of the present disclosure, and at least some of such known technologies may be applied as elemental technologies required to implement the present disclosure.

Hereinafter, preferred embodiments of the present disclosure will be described in detail with reference to the accompanying drawings.

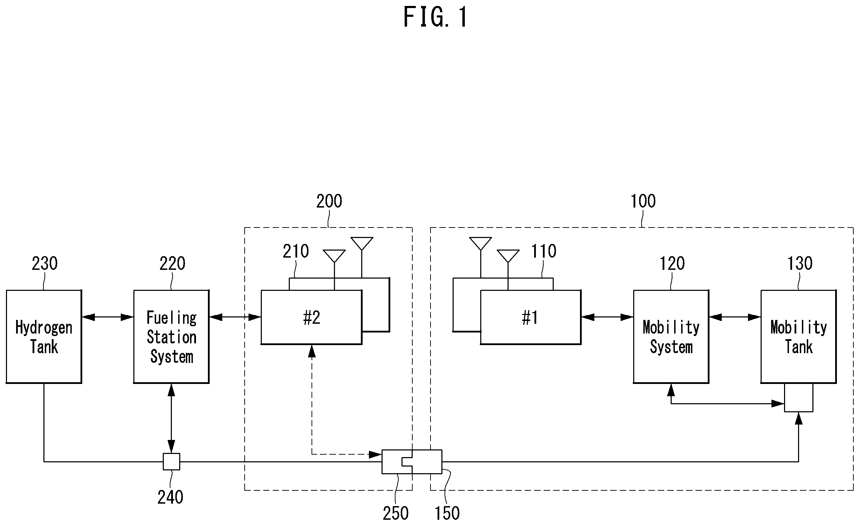

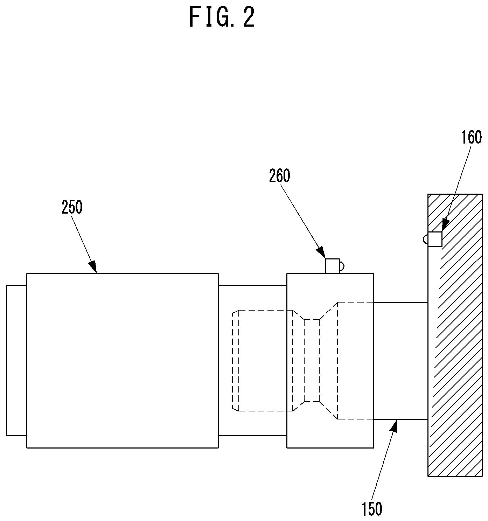

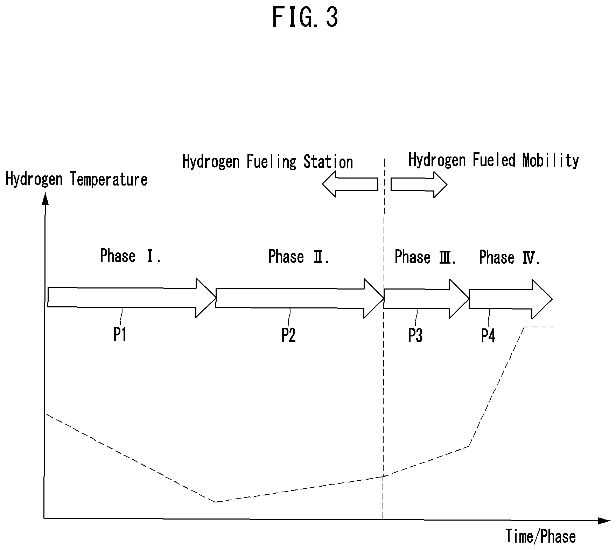

FIG. 1 is a conceptual diagram of a hydrogen fueling system for an FCEV to which a bidirectional communication process for hydrogen fueling according to an exemplary embodiment of the present disclosure may be applied. FIG. 2 is an enlarged partial view for explaining a physical coupling structure between the FCEV and a dispenser in the hydrogen fueling system of FIG. 1. FIG. 3 is a graph for explaining a state change of hydrogen fuel occurring during a hydrogen fueling process performed by the hydrogen fueling system of FIG. 1.

As shown in FIG. 1, the hydrogen fueling system may be configured to include a hydrogen fueling station and an FCEV 100 in a broad sense.

The FCEV 100 may include, in addition to mechanical devices, mechanical equipment, electrical devices, electronic devices, and communication devices required for a vehicle, an electronic control apparatus 110, a vehicle system 120, a vehicle tank 130, and a receptacle 150 for hydrogen fueling.

The electronic control apparatus 110 may transmit and receive, in wireless or wired channel, signals and data with a hydrogen fueling station or an electronic control apparatus 210 of the hydrogen fueling station for hydrogen fueling, and may process the signals and data to control hydrogen fueling on a vehicle side. The electronic control apparatus 110 may be configured as at least a portion of another electronic control apparatus mounted in the vehicle or vice versa, and may be referred to as a first electronic control apparatus or electronic control apparatus #1.

The vehicle system 120 may be connected to the first electronic control apparatus 110 and may be configured to control hydrogen fueling or hydrogen release of the vehicle tank 130 and monitor a state of the vehicle tank 130 based on a signal or command of the first electronic control apparatus 110. The vehicle system 120 may control an operation of a fuel cell system depending on an implementation or may include or be combined with a component performing such control. The vehicle system 120 also performs a vehicle safety function and, in this case, may also be referred to as a vehicle safety system.

The vehicle tank 130 may include at least one, and preferably a plurality. The vehicle tank 130 may compress and store hydrogen supplied from the hydrogen fueling station under control of the vehicle safety system and may release stored hydrogen.

In addition, the vehicle tank 130 may correspond to a hydrogen storage system installed in the vehicle. In this case, the hydrogen storage system may include a high-pressure hydrogen storage tank, a pressure control mechanism, a high-pressure pipe, and an external frame. The high-pressure hydrogen storage tank may have a capacity of several tens to several hundreds of liters and may have a configuration in which small tanks are connected in parallel. A boss unit that allows hydrogen fuel to flow in and out may be coupled to the high-pressure hydrogen storage tank, and hydrogen fueling and hydrogen discharge may be controlled through the boss unit. A valve, a pressure reduction mechanism, and sensors for various measurements may be attached to the boss unit. Such a hydrogen storage system is known as a compressed hydrogen storage system (CHSS), and the expression "vehicle tank" in the present specification may refer to the CHSS for convenience.

The above-described FCEV 100 may include a fuel cell system including a fuel cell stack, but the FCEV 100 is not limited thereto, and for convenience, the FCEV 100 may simply be referred to as an "FCEV," a "vehicle," or mobility 100. In the following specification, a subject simply referred to as the vehicle or mobility may be understood to include, in addition to the FCEV 100, a hydrogen fueled vehicle or hydrogen fueled mobility using hydrogen as a fuel.

The hydrogen fueling station may include a dispenser 200, an electronic control apparatus 210, a station system 220, a hydrogen tank 230, a station box 240, and a nozzle 250.

The dispenser 200 may supply hydrogen to the vehicle through the nozzle 250 firmly coupled to the receptacle 150 of the vehicle based on control of the station system 220 using hydrogen supplied from the hydrogen tank 230. The dispenser 200 may include the electronic control apparatus 210 inside a housing but is not limited thereto. The nozzle 250 may be installed at a distal end of a cable extending a predetermined length outside the housing of the dispenser 200.

The electronic control apparatus 210 may transmit and receive, in wireless or wired channel, signals and data with the first electronic control apparatus 110 of the vehicle for hydrogen fueling and may process the signals and data to control hydrogen fueling on a hydrogen fueling station side. The electronic control apparatus 210 may exchange preset signals and data with the station system 220. The electronic control apparatus 210 may also be referred to as a second electronic control apparatus or electronic control apparatus #2.

Each of the first electronic control apparatus 110 and the second electronic control apparatus 210 described above may be configured with a plurality of electronic control apparatuses, and different electronic control apparatuses may be matched and operated depending on each communication protocol. In this case, the configuration may be useful when falling back to ensure backward compatibility and when bidirectional communication cannot be used and unidirectional communication must be used. In addition, the configuration may be useful when combining different communication methods such as performing pairing using NFC and then using Wi-Fi for actual fueling.

The station system 220 may monitor or adjust pressure, flow rate, and temperature of hydrogen released from the hydrogen tank 230 based on a signal and/or data from the second electronic control apparatus. For this purpose, the station system 220 may control an operation of the station box 240 coupled to a discharge outlet or discharge valve of the hydrogen tank 230. The station system 220 may also be referred to as a station safety system.

In another exemplary embodiment of the present disclosure, a communication entity related to the dispenser 200 for communicating with the vehicle or mobility 100 may be the electronic control apparatus 210, a separate communication device mounted in the dispenser 200, or an electronic control apparatus or a separate communication device in the station system 220 that communicates with the vehicle or mobility 100 instead of the dispenser 200.

In still another exemplary embodiment of the present disclosure, a communication control apparatus for communicating with the dispenser 200 on the vehicle or mobility 100 side may be the first electronic control apparatus 110 or a separate communication control apparatus.

The hydrogen tank 230 stores hydrogen or compressed hydrogen. The hydrogen tank 230 may release stored hydrogen under control of a safety management module of the station system 220 at a predetermined pressure or flow rate. The hydrogen tank 230 may also be referred to as a hydrogen storage tank.

The station box 240 may include a control valve whose inlet is connected to a discharge outlet or discharge valve of the hydrogen tank 230 and whose outlet is connected to the dispenser 200 or the nozzle 250 coupled to the dispenser 200. The station box 240 may include means or a component performing a function corresponding to the means for adjusting pressure, flow rate, temperature, etc. of hydrogen being discharged. In addition, the station box 240 may include sensors for measuring pressure, flow rate, temperature, etc. of hydrogen being discharged.

The nozzle 250 may be connected to a hydrogen fuel supply system of the dispenser 200 through a predetermined length of conduit or flexible pipe. The nozzle 250 may have a shape and structure that airtight and firmly engage with the receptacle of the vehicle.

As shown in FIG. 2, the nozzle 250 may engage with the receptacle 150. In this case, a signal or information regarding a coupling state between the nozzle 250 and the receptacle 150 may be transmitted to the first electronic control apparatus or the vehicle safety system and also to the second electronic control apparatus or the station safety system through a first sensor 160 installed in the vehicle and a second sensor 260 attached to the nozzle 250.

Hydrogen fuel pre-cooled from the hydrogen fueling station is supplied to the FCEV 100 through the dispenser 200. At this time, the hydrogen fueling process may be described by parameters including a pressure ramp rate (PRR) and/or an average pressure ramp rate (APRR).

An interface between the hydrogen fueling station and the vehicle 100 may be handled by the dispenser 200. The dispenser 200 may be configured to control a target pressure and injection flow rate for hydrogen fueling based on information indirectly obtained from the vehicle tank 130 and fueling information of the hydrogen fueling station.

In existing technology, a method of transmitting information from the vehicle 100 to the dispenser 200 includes a communication method and a noncommunication method. Based on using communication, in existing technology, temperature and pressure values of the vehicle tank 130 of the vehicle 100 are merely transmitted in a unidirectional manner to the dispenser 200, and the dispenser 200 does not actively utilize the information and merely uses the information as a safety criterion such as an emergency stop based on a limit temperature and pressure. In addition, a hydrogen fueling protocol for safe and rapid fueling is managed by the dispenser 200, and only a minimum safety management device that automatically releases hydrogen through a pressure relief device (PRD) is provided without active safety management for the vehicle tank 130.

Meanwhile, to respond to an increase in temperature of hydrogen gas during hydrogen fueling (refer to FIG. 3), the hydrogen fueling station may include a pre-cooler. The pre-cooler may lower a temperature of hydrogen fuel through pre-cooling. The pre-cooler may be installed in or coupled to at least one of the hydrogen tank 230 and the station box 240. In addition, the pre-cooler may be installed in or coupled to piping that transports hydrogen in the hydrogen fueling station.

A fueling control logic may be mounted inside the dispenser 200 or the second electronic control apparatus, and the fueling control logic may be used to control a hydrogen fueling process by utilizing state information such as temperature and pressure of hydrogen fuel supplied to the vehicle or supplied to the vehicle tank 130 and fueling state information such as a state of charge (SOC) of the CHSS.

As described above, the dispenser 200 is responsible for control between the vehicle 100 and the hydrogen fueling station during the hydrogen fueling process, and the dispenser 200 may include a protocol for supplying hydrogen fuel to the vehicle based on predetermined procedures. The hydrogen fueling protocol may also be mounted in the vehicle. A protocol mounted in the vehicle or the dispenser 200 may include at least a portion of a communication protocol based on SAE standards, ISO standards, etc.

For minimum requirements for safety, a simulation may be performed through thermodynamic modeling for various scenarios, and a table-based method or a partial real-time correction method based on an MC-formula may be used by utilizing parameters derived therefrom. The minimum requirements for safety may include an upper limit of temperature and pressure conditions of the CHSS and guidelines on a state of charge (SOC).

When the dispenser 200 does not actively control state values related to hydrogen fueling, the table-based method of existing technology has extremely low efficiency because a temperature of pre-cooled hydrogen fuel supplied from a hydrogen fueling station or a temperature of the vehicle tank 130 measured in the vehicle 100 is not utilized and is not flexible against environmental changes. In addition, the MC-Formula-based method of existing technology dynamically corrects a temperature of pre-cooled hydrogen fuel, but the calculation and application are complicated, and expansion is difficult because of limitations in applicability. As such, the existing communication protocol was developed with the main objective of safely completing fueling and does not provide an alternative capable of actively controlling unexpected conditions such as excessive pre-cooling or overheating of the vehicle tank 130, and therefore operational cost increase due to excessive cooling and fueling delay due to overheating may occur.

For example, when hydrogen fuel is supplied to the vehicle tank (refer to the vehicle tank 130 in FIG. 1), an internal temperature of the vehicle tank increases based on compression heat, and therefore a temperature of hydrogen fuel inside the vehicle tank increases. The vehicle tank is configured such that a dome and body of the vehicle tank are wrapped with carbon fiber having low heat transfer efficiency to block heat exchange between an outside atmosphere and hydrogen fuel stored inside. Therefore, when a temperature of hydrogen fuel inside the vehicle tank increases during fueling, an increase in external temperature of the vehicle tank may be insignificant compared with the increase in internal temperature due to low heat transfer characteristics of the vehicle tank.

Meanwhile, a temperature control objective of the hydrogen fueling process may be to maintain an internal temperature of the vehicle tank 130 at or below 85°C at a final fueling completion time while supplying pre-cooled hydrogen gas. That is, as shown in a characteristic curve of hydrogen temperature during hydrogen fueling in FIG. 3, the temperature of the hydrogen fuel may decrease at a fixed rate during Phase I (P1), which is a pre-cooling stage of the hydrogen fueling station. During Phase II (P2), which is a stage of supplying hydrogen fuel from the hydrogen fueling station to hydrogen mobility such as the vehicle, the temperature of the hydrogen fuel may gradually increase based on thermal mass of the hydrogen fueling station. During Phase III (P3), which is a stage of transporting hydrogen fuel from inside the vehicle to the vehicle tank, the temperature of the hydrogen fuel may gradually increase based on thermal mass of the vehicle. During Phase IV (P4), which is a stage of compressing and storing hydrogen fuel in the vehicle tank, the temperature of the hydrogen fuel may rapidly increase based on compression heat.

Accordingly, in the exemplary embodiment, a hydrogen fueling procedure may be effectively performed through active state variable control based on real-time measurement data through a bidirectional hydrogen fueling communication process, and a hydrogen fueling protocol for the procedure may be provided.

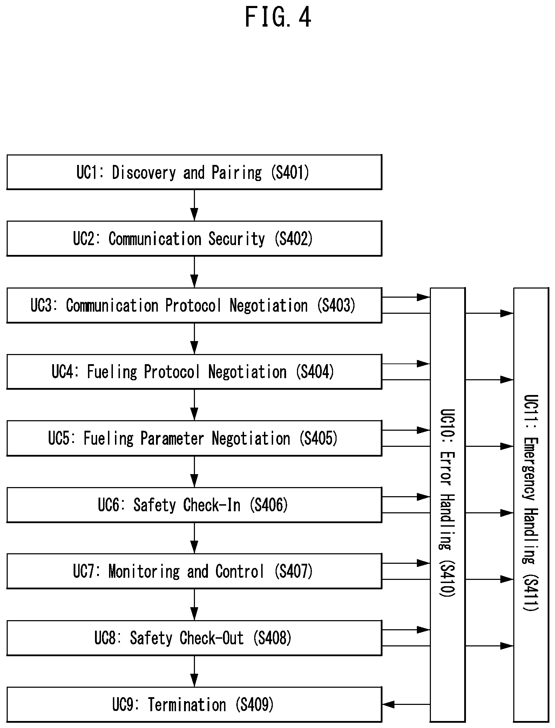

FIG. 4 is a framework of functional blocks that perform a series of hydrogen fueling procedures in which the bidirectional communication process for hydrogen fueling according to an exemplary embodiment of the present disclosure may be adopted (hereinafter, referred to as the "hydrogen fueling framework").

As shown in FIG. 4, the hydrogen fueling framework may include, as functional blocks for each use case (UC), a discovery and pairing functional block (hereinafter, simply referred to as UC1 or UC-1), a communication security functional block (UC2 or UC-2), a communication protocol negotiation functional block (UC3 or UC-3), a fueling protocol negotiation functional block (UC4 or UC-4), a fueling parameter negotiation functional block (UC5 or UC-5), a safety check-in functional block (UC6 or UC-6), a monitoring and control functional block (UC7 or UC-7), a safety check-out functional block (UC8 or UC-8), a termination functional block (UC9 or UC-9), an error handling functional block (UC10 or UC-10), and an emergency handling functional block (UC11 or UC-11).

Each of UC1 through UC11 may correspond to chronological stages S401 through S411 as illustrated in FIG. 4. In this case, FIG. 4 may be understood as an operational flowchart including chronological stages S401 through S411.

UC10 and UC11 may be individually connected to each of UC3 through UC8 so that error handling and/or emergency handling may be performed in each corresponding use case.

The above-described use cases are functional blocks that collectively provide the entire hydrogen fueling procedures of the hydrogen fueling system for safe and secure fueling communication in a consistent manner. The vehicle and the dispenser may sequentially perform each use case in a predetermined order to achieve a hydrogen fueling goal.

In addition, after the dispenser nozzle is connected to the vehicle receptacle, the vehicle and the dispenser may perform fueling communication by implementing each use case in the order illustrated in FIG. 4. However, the vehicle and the dispenser may omit a specific use case when necessary based on predefined requirements.

Each of the above-described use cases may be implemented through communication between a dispenser control system of the dispenser supplying hydrogen fuel to the hydrogen fuel vehicle according to a fueling protocol for the hydrogen fuel vehicle and the hydrogen fuel vehicle.

Meanwhile, the vehicle implementing the use cases (hereinafter, also simply referred to as the "vehicle") and the dispenser may perform data exchange for vehicle identification in UC-1. For this purpose, the vehicle may include sensors, an electronic control unit (ECU), a transmitter, and a receiver. The receiver may be integrated with the transmitter in the case of bidirectional communication.

The dispenser may be configured to receive specific data from the vehicle. The dispenser may store data logging data or store designated data to a programmable logic controller (PLC) of the fueling station for use in the fueling protocol. Data logging may refer to a process of collecting data for a predetermined period to analyze a specific operation state of the hydrogen fueling system or record one or more data-based events or operations of the system or network environment, or may refer to the data collected by the process. In the case of bidirectional communication, the fueling station may include one or more sensors specified by the fueling protocol, and the fueling station PLC or the electronic control apparatus may acquire measurement values from the sensors and transfer the measurement values to the vehicle. The vehicle or the fueling station described above may use existing communication protocol standards for communication such as infrared, Wi-Fi, or Bluetooth.

In addition, the vehicle and the dispenser may establish a communication channel between the vehicle and the dispenser physically connected at a vehicle-dispenser interface. A pairing process establishing the communication channel may be performed using wired, optical, or wireless technology.

The discovery and pairing procedure or pairing process may have pre-conditions in which the dispenser nozzle is inserted into the vehicle fueling receptacle and securely connected. The vehicle fueling receptacle may simply be referred to as the vehicle receptacle or the receptacle.

In addition, the vehicle and the dispenser basically know which communication protocol will be followed. Therefore, communication following UC-1 may depend only on the communication protocol agreed upon in the discovery and pairing procedure or pairing process as post-conditions of the current use case. Based on a communication protocol being selected beyond an agreed scope by the vehicle or the dispenser, the selected communication is not performed. That is, even though the pairing process is successfully completed, approval for fueling or approval for fuel delivery may not be granted.

All methods used for pairing the vehicle and the dispenser are configured to not increase ignition or explosion risk above an acceptable level. For example, all wired pairing methods are configured to mitigate or eliminate spark risks caused by electrostatic discharge.

In terms of validity of physical pairing, all methods used to pair the vehicle and the dispenser may be integrated into the vehicle-dispenser interface or installed such that proximity exists between the vehicle fueling receptacle and the nozzle and hose assembly of the dispenser. Here, the interface may refer to a configuration physically integrated into the nozzle and receptacle interface. The proximity may be defined by hardware associated with the pairing method. For example, the proximity may specify a physical geometry used for infrared communication, including an allowable distance between the transmitter and the receiver. In addition, a physical geometry of hydrogen fueling hardware may be predetermined and, in this case, the proximity may not include pairing methods using relatively long-range wireless communication technologies, such as Bluetooth, that may risk pairing a vehicle and a dispenser that are not physically connected. Infrared communication may be referred to as IrDA communication and may include bi-IrDA communication.

Referring again to FIG. 4, a communication method for hydrogen fueling according to an exemplary embodiment of the present disclosure may be a communication method for hydrogen fueling performed by a communication apparatus of hydrogen fueled mobility and may include negotiating a communication protocol with a dispenser that supplies hydrogen fuel to the mobility in stage S403, negotiating a fueling protocol with the dispenser to receive hydrogen fuel from the dispenser in stage S404, and negotiating fueling parameters with the dispenser based on the fueling protocol in stage S405.

A communication method for hydrogen fueling performed by a dispenser supplying hydrogen fuel to hydrogen fueled mobility according to an exemplary embodiment of the present disclosure may include negotiating a communication protocol with the mobility in stage S403, negotiating a fueling protocol with the mobility to supply hydrogen to the mobility in stage S404, and negotiating fueling parameters with the mobility based on the fueling protocol in stage S405.

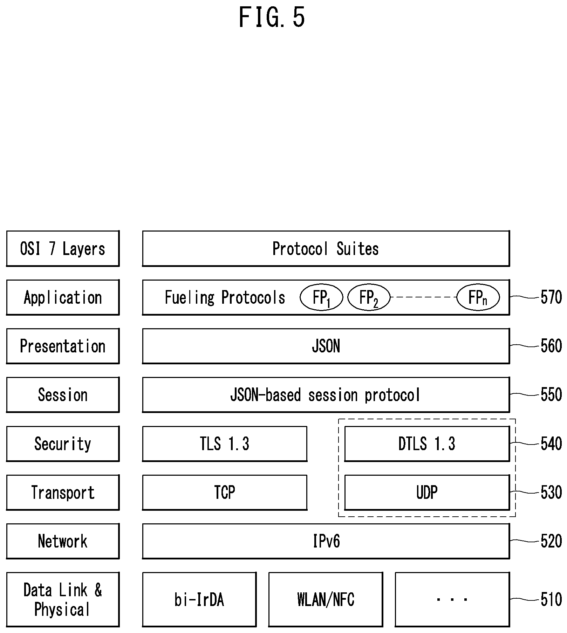

FIG. 5 is an exemplary view illustrating a communication stack related to each use case applicable to the bidirectional communication process for hydrogen fueling according to an exemplary embodiment of the present disclosure, based on a seven-layer Open Systems Interconnection (OSI) reference model.

As illustrated in FIG. 5, a communication stack related to use cases of the bidirectional communication process for hydrogen fueling (hereinafter, simply referred to as a "hydrogen fueling communication stack") may be expressed as protocol suites corresponding to each of the data link and physical layers, network layer, transport layer, security layer, session layer, presentation layer, and application layer belonging to the OSI seven layers.

That is, the hydrogen fueling communication stack may include at least one first protocol 510 selected from bi-IrDA, WLAN, NFC, etc. as a protocol of the data link and physical layers of the OSI seven layers.

In addition, the hydrogen fueling communication stack may include an IPv6 (Internet protocol version 6) protocol 520 as a protocol of the network layer of the OSI seven layers.

In addition, the hydrogen fueling communication stack may include at least one third protocol 530 selected from TCP (Transmission Control Protocol), UDP (User Datagram Protocol), etc. as a protocol of the transport layer of the OSI seven layers.

In addition, the hydrogen fueling communication stack may include at least one fourth protocol 540 selected from TLS (Transport Layer Security), DTLS (Datagram Transport Layer Security), etc. as a protocol of the security layer of the OSI seven layers. TLS may include TLS 1.2, TLS 1.3, etc., and DTLS may include DTLS 1.2, DTLS 1.3, etc. TLS may be implemented based on a TCP socket, and DTLS may be implemented based on a UDP socket.

In addition, the hydrogen fueling communication stack may include a JSON-based session protocol 550 as a protocol of the session layer of the OSI seven layers. The JSON-based session protocol 550 may be used when transmitting data between the vehicle and the dispenser or between the electronic control apparatus of the vehicle and the electronic control apparatus of the fueling station.

In addition, the hydrogen fueling communication stack may include JSON (JavaScript Object Notation) 560 as a protocol of the presentation layer of the OSI seven layers. JSON may be one of the formats used when transmitting data from a server to a client. Based on using JSON, protocol messages may be expressed in JSON between the vehicle and the dispenser or between the electronic control apparatus of the vehicle and the electronic control apparatus of the fueling station.

In addition, the hydrogen fueling communication stack may include fueling protocols (FP) 570 related to hydrogen fueling as a protocol of the application layer of the OSI 7 layers. The fueling protocols 570 may include a first fueling protocol FP1, a second fueling protocol FP2, and an nth fueling protocol FPn. n may be any natural number equal to or greater than 3.

In addition, in another exemplary embodiment, the hydrogen fueling communication stack may be configured to use PLC or WLAN as a protocol of the data link and physical layers and the network layer, use TCP and/or IPv6 as a protocol of the transport layer and the security layer, use a binary extensible markup language protocol as a protocol of the session layer corresponding to an encoding layer, and use one of existing protocols used in electric vehicles as a protocol of the presentation layer and application layer. An existing protocol used in electric vehicles may include at least one protocol for direct current (DC) fueling, alternating current (AC) fueling, wireless power transfer (WPT), or an automatic connection device pantograph (ACDP).

Through the above-described hydrogen fueling communication stack, overall communication data items exchanged between the vehicle and the fueling station are summarized in Table 1 below.

**[Table 1]**

| Type | Station → Vehicle | Vehicle → Station |
|---|---|---|
| | - Supplied hydrogen pressure | - Receptacle type |
| | - Supplied hydrogen temperature | - Rated receptacle working pressure |
| Communication Data Items | - Supplied hydrogen flow rate | |
| | - Maximum allowable hydrogen supply pressure | - Tank volume |
| | | - Tank pressure |
| | - Maximum allowable hydrogen supply temperature | - Tank temperature |
| | | - Maximum operating pressure |
| | - Minimum allowable hydrogen supply temperature | - Maximum operating temperature |
| | - Maximum allowable hydrogen supply flow rate | |
| | - Ambient temperature | |
| | - Whether communication-based fueling is enabled | |
| | - Target value(s) | |
| | - Charging progress status | |
| | - Emergency stop status | |
| | - Hydrogen fueling protocol category | |
| | - Supplied hydrogen amount | |
| | - Estimated fueling completion time | |

Meanwhile, the use case UC1 of the discovery and pairing stage S401 of FIG. 4 enables identification of a communication counterpart (a communication module of the vehicle or the dispenser) responsible for controlling the receptacle or nozzle to which the apparatus is physically connected. In addition, UC1 may define a method for identifying incompatibility and may define a safety mechanism.

In the use case UC1, the vehicle and the dispenser may attempt to find a common communication technology to execute a fueling protocol. Based on a discovery mechanism provided at a basic data link and physical layer, the vehicle and the dispenser may discover each other and start communication. An additional pairing procedure may be required so that a communication channel is established with the apparatus connected to a fueling hose assembly. Based on the communication channel not guaranteeing correct pairing, for example in the case of wireless communication, a separate pairing channel may be required to convey pairing information. Based on pairing being implicitly guaranteed, for example when the communication channel integrated with the hose assembly alone is sufficient, a separate pairing channel may not be required.

Table 2 is a table illustrating objectives, pre-conditions, and post-conditions of the use case UC1 of the discovery and pairing stage S401 of FIG. 4.

**[Table 2]**

| | Description |
|---|---|
| Use case name | UC-1: "Discovery and Pairing" |
| Objectives | UC-1 allows devices to identify the communication counterparty (communication module of vehicle or dispenser) that is responsible for the control of the physically connected receptacle or nozzle, respectively. UC-1 also defines how to identify incompatibility and may define a failsafe mechanism. |
| Short Description | During this use case, vehicle and dispenser try to find out any common communication technologies to run a fuelling protocol. Depending on the discovery mechanism provided by the underlying physical/data-link layer, the vehicle and dispenser discovers each other and start communication. To ensure that the communication channel is established with the devices that are bound to the fuelling hose assembly, extra pairing procedure may need to be involved. When communication channel does not guarantee the correct pairing (e.g., wireless communication), we may need an extra pairing channel that delivers pairing information. When pairing is implicitly guaranteed (e.g., communication integrated with hose assembly), only communication channel should be sufficient. |
| Pre-conditions | The dispenser nozzle is securely connected to the vehicle receptacle |
| Post-conditions | Vehicle and Dispenser knows what communication medium to use for the communication. After this use case, subsequent communication solely depends on the communication protocol that was agreed on in this use case. If an out-of-scope communication protocol is chosen, no further ISO 19985 communication is performed. |

Table 3 is a table illustrating supported communication technologies and corresponding clauses that may be used in the use case UC1 of the discovery and pairing stage S401 of FIG. 4.

**[Table 3]**

| Clause | Communication Technology | Communication Channel | Pairing Channel |
|---|---|---|---|
| Annex P.1 | Unidirectional irDA | (irDA references) | N/A |
| Annex P.2 | Bidirectional IrDA | (irDA references) | N/A |
| Annex P.3 | WLAN with NFC | IEEE 802.11 | NFC Forum Specifications |

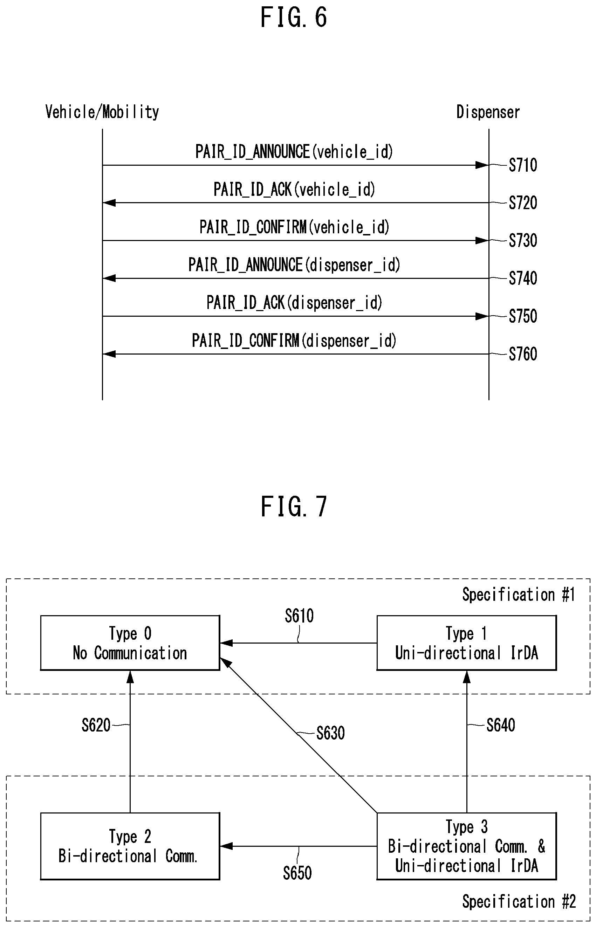

FIG. 6 is an operational flowchart illustrating stage S401 in detail according to an exemplary embodiment of the present disclosure.

As shown in FIG. 6, in the discovery and pairing stage S401 of FIG. 4, when pairing at a UCDC level 2 or a UCDC level 3, the vehicle and the dispenser may exchange pairing IDs and verify pairing IDs of each other.

For example, the vehicle may broadcast a message PAIR_ID_ANNOUNCE including a vehicle pairing ID (PAIR_ID), that is, a vehicle ID (vehicle_id). The dispenser may transmit a message PAIR_ID_ACK to the vehicle to acknowledge receipt of the vehicle ID from the vehicle. The vehicle may then transmit a message PAIR_ID_CONFIRM to the dispenser to verify that the ACK message indicating the dispenser received the vehicle ID has been successfully received.

Next, the dispenser may broadcast a message PAIR_ID_ANNOUNCE including a dispenser pairing ID, that is, a dispenser ID (dispenser_id). The vehicle may transmit a message PAIR_ID_ACK to acknowledge receipt of the dispenser ID from the dispenser. The dispenser may then transmit a message PAIR_ID_CONFIRM to the vehicle to verify that the ACK message indicating the vehicle received the dispenser ID has been successfully received.

Based on the above-described transmit-echo-verify method, the vehicle and the dispenser may use session-specific randomized pairing IDs. Based on this, a privacy protection issue related to pairing ID exchange may be resolved. That is, based on the pairing process being trusted through a later process, the session-specific pairing ID may be included in data used to establish trust.

Meanwhile, based on secure communication being supported at a specific UCDC level, at least one of the vehicle and the dispenser may verify whether all methods used to pair the vehicle and the dispenser provide sufficient information to protect the communication channel. For example, pairing may include exchanging encryption keys that allow the vehicle and the dispenser to secure communication during fueling.

For reference, based on UCDC level 1 not supporting bidirectional communication, security of the communication channel may not be possible. Pairing the vehicle and the dispenser at UCDC level 2 or UCDC level 3 may be configured to provide sufficient information to protect communication to satisfy a specific security level, for example, IEC 62443 security level 3. The IEC 62443 security level 3 may correspond to a security level for actors with moderate resources and moderate motivation.

FIG. 7 is an exemplary view for explaining backward compatibility applicable to the bidirectional communication process for hydrogen fueling according to an exemplary embodiment of the present disclosure.

As shown in FIG. 7, a hydrogen fueling apparatus may be implemented as a compatible apparatus having backward compatibility with existing apparatuses considering interoperability. Based on classifying apparatuses based on interoperability, a hydrogen fueling apparatus or a communication apparatus thereof may be classified as a Type 0, Type 1, Type 2, or Type 3 apparatus.

Type 0 may refer to an apparatus that does not support communication for fueling or does not receive such communication messages.

Type 1 may refer to an apparatus that supports IrDA communication for fueling. A Type 1 apparatus may fall back to a Type 0 apparatus.

Type 2 may refer to an apparatus that supports advanced communication (AC). A Type 2 apparatus may fall back to a Type 0 apparatus.

Type 3 may refer to an apparatus that supports both IrDA and advanced communication. A Type 3 apparatus may fall back to any one of Type 0, Type 1, or Type 2.

Advanced communication may refer to communication using a specific protocol and a medium such as WLAN, Bluetooth (BT), NFC, Wi-Fi, UWB, RFID, 4G, or 5G. In addition, advanced communication may include bi-IrDA, serial communication, automotive Ethernet (ETH), or high-level communication. Here, the specific protocol may include TCP/IP or fueling protocols. The high-level communication may handle all information beyond the information handled for command and control communication. A data link for the high-level communication may use PLC (Power Line Communication), but is not limited thereto.

In addition, advanced communication, in a hybrid form, may include a combination of IrDA and wired communication or a combination of IrDA and wireless communication. Based on combining IrDA and wired communication, modifications to the nozzle and receptacle may be required.

That is, advanced communication may be wired or wireless bidirectional communication technology and may include various wireless communication methods such as 5G, WLAN, BLE, ETH, UWB, RFID, or NFC. Known protocols such as TCP/IP may be used as protocols for such communication methods. For example, wireless communication methods considered may include Bluetooth, WLAN, Wi-Fi (ISO 15118 for inductive or ACD), or UWB (IEC limited consideration for ACD).

In practice, hydrogen fueling apparatuses may be implemented to support communication using different technologies. Accordingly, the bidirectional communication process for hydrogen fueling of the exemplary embodiment is configured to maximize interoperability between apparatuses.

Referring again to FIG. 7, a Type 1 apparatus supporting specification #1 according to a predetermined standard may fall back to a Type 0 apparatus or a Type 2 apparatus when encountering the Type 0 apparatus or the Type 2 apparatus in stage S610.

In addition, based on a Type 2 apparatus supporting specification #2 according to a predetermined standard encountering a Type 0 apparatus or a Type 1 apparatus, the Type 2 apparatus may fall back to the Type 0 apparatus in stage S620.

Based on a Type 3 apparatus supporting specification #2 encountering a Type 0 apparatus, the Type 3 apparatus may fall back to the Type 0 apparatus in stage S630. Based on the Type 3 apparatus encountering a Type 1 apparatus, the Type 3 apparatus may fall back to the Type 1 apparatus in stage S640. In addition, based on the Type 3 apparatus encountering a Type 2 apparatus, the Type 3 apparatus may fall back to the Type 2 apparatus in stage S650.

The above-described specification #1 may include a Society of Automotive Engineers (SAE) standard. The specification #2 may include an ISO 19885-3 standard.

In addition, to support interoperability, the hydrogen fueling apparatus may perform a connection compatibility check. For example, based on whether WLAN, one of the advanced communications, is supported, the hydrogen fueling apparatus may perform the connection compatibility check as in scenarios 1 through 3 below.

In scenario 1, the dispenser may prepare an access point (AP) that is a wireless router. The dispenser may support fueling methods for FCEV beaconing at a fueling station and xVSE (x-vehicle supply equipment). An FCEV near the dispenser may scan and find the dispenser and establish a WLAN link with the found dispenser.

In scenario 2, the dispenser may not support WLAN communication and may support IrDA communication. The dispenser corresponds to a Type 1 apparatus. An FCEV located near the dispenser is a Type 3 apparatus and cannot find the dispenser, which is the Type 1 apparatus, through scanning. When the receptacle of the FCEV is connected to the nozzle attached to a cable of the dispenser, IrDA communication between the FCEV and the dispenser may begin.

In scenario 3, the dispenser may support WLAN and IrDA communication. In this case, the dispenser corresponds to a Type 3 apparatus. An FCEV, which is a Type 1 apparatus, may park near the dispenser. The dispenser may not yet detect any WLAN client. When the receptacle of the FCEV is connected to the nozzle attached to the cable of the dispenser, IrDA communication between the FCEV and the dispenser may begin.

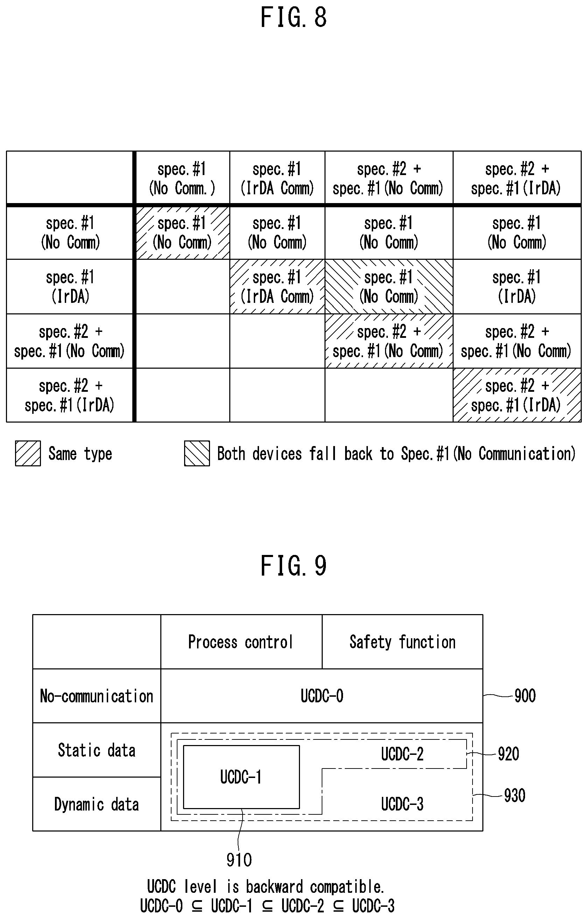

FIG. 8 is an exemplary view for explaining backward compatibility applicable to the bidirectional communication process for hydrogen fueling according to an exemplary embodiment of the present disclosure.

As shown in FIG. 8, the bidirectional communication process for hydrogen fueling of the exemplary embodiment may provide principles and fallback rules such that FCEVs and dispensers do not necessarily select the most preferred communication method and fueling methods and communication protocols fall back to maximize interoperability.

That is, based on one of the vehicle and the dispenser encountering the other, a device having a relatively high Type or UCDC level may fall back to a Type or level of the device having a relatively low Type or level.

For example, based on the vehicle and the dispenser having the same Type or the same UCDC level, both apparatuses may maintain a current Type or UCDC level. Meanwhile, based on one apparatus being a Type 1 apparatus and the other apparatus being a Type 2 apparatus, both apparatuses may be configured to fall back to a Type 0 apparatus. In addition, based on one apparatus being a Type 3 apparatus and the other apparatus not being a Type 3 apparatus, the Type 3 apparatus may be configured to fall back to the Type or UCDC level of the other apparatus.

The above-described specification #1 may be a communication protocol of an SAE standard, and the specification #2 may be a towing protocol of an ISO 19885 standard.

Based on the above-described configuration, when two apparatuses having the same implementation exist, the vehicle and the dispenser may select a result supported by both and the best among them. Based on a no-communication apparatus encountering a one-way communication apparatus (hereinafter, simply referred to as a "unidirectional communication apparatus"), the unidirectional communication apparatus may fall back to a no-communication (No comm) apparatus that does not support communication. In addition, based on two apparatuses supporting bidirectional communication encountering each other, the two apparatuses may maintain the bidirectional communication method. Here, UCDC compatibility may be treated separately. In addition, based on any apparatus encountering a no-communication apparatus, the apparatus may rely on no communication. This may apply to all apparatuses supporting bidirectional communication (hereinafter, simply referred to as a "bidirectional communication apparatus").

In addition, based on a unidirectional communication apparatus encountering a bidirectional communication apparatus, based on the bidirectional communication apparatus supporting both a unidirectional communication method and a bidirectional communication method, the bidirectional communication apparatus may fall back to the unidirectional communication method. Based on the bidirectional communication apparatus not supporting unidirectional communication, the bidirectional communication apparatus may fall back to a no-communication apparatus to rely on no communication.

The above-described bidirectional communication apparatus may be configured to support a fueling method based on unidirectional communication regardless of whether unidirectional communication exists. The bidirectional communication apparatus may verify whether a counterpart supports bidirectional communication. Based on the FCEV or the dispenser not supporting bidirectional communication, the bidirectional communication apparatus may fall back to a unidirectional communication apparatus that uses a compatible unidirectional communication method.

FIG. 9 is an exemplary view for explaining communication data usage classification and backward compatibility in the communication data usage classification applicable to the bidirectional communication process for hydrogen fueling according to an exemplary embodiment of the present disclosure.

As shown in FIG. 9, the vehicle and the dispenser may have a pairing identity (ID: identity/identification), and requirements for exchanging the identity may be classified by the use classification of communication data (UCDC) level. The UCDC level may include a UCDC level 1 (UCDC-1) 910, a UCDC level 2 (UCDC-2) 920, and a UCDC level 3 (UCDC-3) 930. The UCDC level may further include a UCDC level 0 (UCDC-0) 900.

The UCDC level 0 (900) may refer to communication in which data is not transmitted or communication in which transmitted data is not used by a fueling protocol for dispensing hydrogen or associated safety functions. In the UCDC level 0 (900), because communication between the vehicle and the dispenser is not supported (no communication), the dispenser may not convey the pairing ID to the vehicle during process control or safety functions.

Based on pairing at the UCDC level 1 (910), the vehicle may transmit the pairing ID to the dispenser. The data transmitted in the UCDC level 1 (910) may not be used for safety functions; however, transmitted static data may be used to improve performance of the fueling protocol, and transmitted dynamic data may be used to reduce risk against process deviations in the fueling protocol.

Static data transmitted at the UCDC level2 (920) may be used for safety functions. The static data of the UCDC level 2 (920) may be in addition to the allowed usage of static data and dynamic data defined for the UCDC level 1.

Static data and dynamic data at the UCDC level 3 (930) may be used for dynamic control within the protocol or safety functions. The dynamic data of the UCDC level 3 (930) may be in addition to the allowed usage of static data and dynamic data defined for the UCDC level 2.

As described above, the UCDC level may be structured such that the UCDC level 1 is included in the UCDC level 2, and the UCDC level 2 is included in the UCDC level 3, meaning that a higher level includes a lower level. A device supporting a specific UCDC level may support devices having a lower UCDC level. Devices supporting different UCDC levels may use the highest UCDC level supported by both devices. The above-described UCDC levels may be regarded as easily supporting the UCDC level 0. The UCDC level may be backward compatible. In another exemplary embodiment of the present disclosure, backward compatibility may be effectively applied to each of Non-Comm, Uni-directional Comm, and Bidirectional Comm and combinations thereof regardless of the UCDC level.

As shown in FIG. 4 through FIG. 8 together, in the discovery and pairing stage S401 of FIG. 4, information regarding interoperability and/or compatibility between the vehicle/mobility and the dispenser may be shared. Here, the interoperability and/or compatibility may be used in a communication protocol negotiation stage S403, a fueling protocol negotiation stage S404, and/or a fueling parameter negotiation stage S405 described later.

In another exemplary embodiment of the present disclosure, information regarding interoperability and/or compatibility shared between the vehicle/mobility and the dispenser in the discovery and pairing stage S401 may be updated or reshared during the communication protocol negotiation stage S403, the fueling protocol negotiation stage S404, and/or the fueling parameter negotiation stage S405. Based on a change in a communication environment or a change in parameters influencing a fueling process, the information regarding interoperability and/or compatibility may be updated.

In another exemplary embodiment of the present disclosure, the discovery and pairing stage S401 of FIG. 4 may be referred to as a dispenser discovery protocol (DDP).

The DDP may be initiated by a DDP request message [DDPRequest] broadcast by the mobility. The DDPRequest may include a pairing ID "pairing_id" of the mobility.

Based on the dispenser receiving the DDPRequest, the dispenser may transmit a DDPResponse in response to the DDPRequest. The DDPResponse may include an IP address "IPAddr" of the dispenser, a TCP port number "TCPPort" of the dispenser, a UDP port number "UDPPort" of the dispenser, and a pairing ID "pairing_id" of the dispenser.

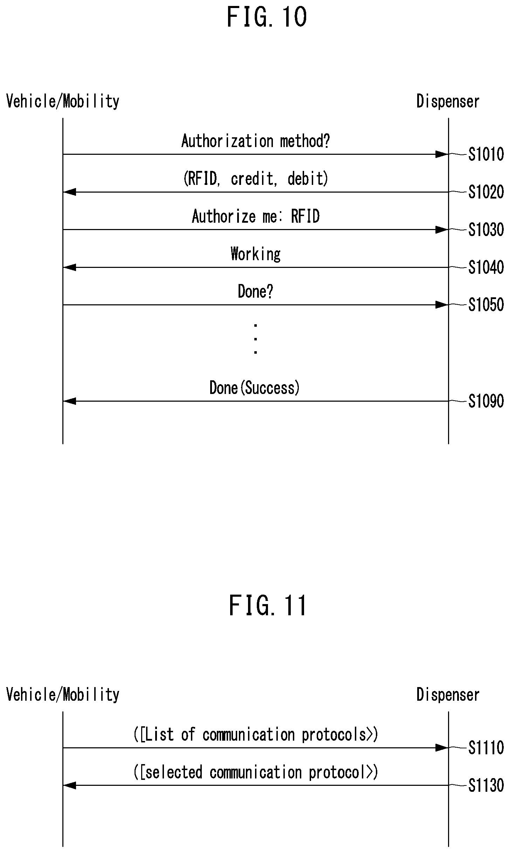

FIG. 10 is a flowchart illustrating an authentication process of a communication security procedure S402 applicable to the bidirectional communication process for hydrogen fueling according to an exemplary embodiment of the present disclosure.

As shown in FIG. 10, the mobility may transmit a message requesting a list of authorization methods to the dispenser in stage S1010. The dispenser may transmit a response message to the mobility in response to the request for the list of authorization methods in stage S1020. The response message may include authorization method list information related to external authentication procedures such as radio frequency identification (RFID), credit cards, debit cards, etc., or internal authentication procedures.

Next, the mobility may transmit an authentication request message to the dispenser including a specific method selected from the authorization method list, for example, RFID, in stage S1030. The dispenser may transmit a response message to the mobility in response to the authentication request of the mobility in stage S1040. This response message may include information indicating that the selected authentication method is working.

Next, based on the response from the dispenser, the mobility may perform authentication using the previously selected authentication method and transmit a confirmation request message (Done?) regarding completion of authentication to the dispenser in stage S1050. Based on authentication not being confirmed or authentication not being completed, the above-described sequence of stages S1010 through S1050 may be repeatedly performed. Based on authentication being completed, the dispenser may transmit an authentication complete message (Done(success)) to the mobility in stage S1090.

Based on the above-described configuration, before further proceeding with a hydrogen fueling process, the dispenser may verify whether the mobility is authorized, that is, whether a user of the mobility has authority for hydrogen fueling.

To secure the authentication process, a hydrogen fueling apparatus including at least one of the mobility and the dispenser may set a TCP connection after establishing a data link and physical connection between the mobility and the dispenser, and then perform a TLS handshake for authentication and key exchange to establish a secure communication channel. In addition, Datagram Transport Layer Security (DTLS)-protected UDP communication may be used while sensitive information related to security is exchanged.

In addition, the mobility and the dispenser may successfully perform the discovery and pairing procedure and establish a connection at the data link and physical layers. Then, credentials required for authentication and key exchange may be prepared. Based on this, a communication channel between the mobility and the dispenser may be encrypted and protected for integrity. The dispenser may authenticate the mobility and, optionally, the mobility may authenticate the dispenser.

Meanwhile, during the above-described TLS handshake, mobility authentication may be mandatory and dispenser authentication may be optional. In this case, the dispenser may operate as a client and the mobility may operate as a server.

For the TLS handshake, the mobility and the dispenser may prepare required credentials. The mobility and the dispenser may store a certificate chain, a private key corresponding to a certificate, and a trust anchor certificate in secure storage protected from unauthorized access.

During the TLS handshake, the mobility may transmit a predefined CertificateRequest message to request client authentication from the dispenser. Based on the dispenser receiving the CertificateRequest message, the dispenser may operate to transmit a certificate and a CertificateVerify message together with the certificate to the mobility.

Based on the dispenser not transmitting the certificate and the CertificateVerify message when the mobility transmits handshake messages including ServerHello together with the CertificateRequest message, the mobility may transmit an alert message including a warning code "certificate_required" and stop the TLS handshake.

In another exemplary embodiment of the present disclosure, the purpose, preconditions, and postconditions of stage S402 may be illustrated in Table 4 below.

**[Table 4]**

| Type | Description |
|---|---|
| Use case name | UC-2: "Communication Security" |
| Objectives | \Vehicle and Dispenser establish a secure channel over the discovered communication channel to achieve communication security goals including confidentiality, integrity, and privacy. |
| Short Description | After the physical and data-link layer connection is made between vehicle and dispenser, they setup layer-3 and establish a TCP connection, then perform a TLS handshake to authenticate and exchange keys to establish a secure communication channel. |
| Pre-conditions | Vehicle and dispenser performed discovery and pairing use case successfully and made a data-link layer connection. Credentials necessary for the authentication and key exchange are prepared. |
| Post-conditions | Dispenser authenticated the vehicle and the vehicle authenticated dispenser successfully. Communication channel between vehicle and dispenser are encrypted and integrity protected. |

FIG. 11 is a flowchart illustrating a communication protocol negotiation stage S403 applicable to the bidirectional communication process for hydrogen fueling according to an exemplary embodiment of the present disclosure.

As shown in FIG. 11, the communication protocol negotiation stage S403 may include receiving, at the dispenser, a message from the mobility including information regarding a first communication protocol supported by the mobility in stage S1110, and receiving, at the mobility, a message from the dispenser including information regarding a second communication protocol selected from among common communication protocols commonly applicable between the mobility and the dispenser in stage S1130.

Referring to the exemplary embodiment of FIG. 11, the dispenser may receive, from the mobility, the message including information regarding the first communication protocol supported by the mobility in stage S1110, compare the first communication protocol with communication protocols applicable by the dispenser, select the second communication protocol from among the common communication protocols commonly applicable between the mobility and the dispenser, and transmit to the mobility a message including information regarding the selected second communication protocol in stage S1130.

Although not illustrated in FIG. 11, before stage S1110, a stage in which the dispenser requests the mobility to transmit information including a list of the first communication protocols supported by the mobility may be further included.

In another exemplary embodiment of the present disclosure, the dispenser may first transmit to the mobility a message including information regarding communication protocols supported by the dispenser, the mobility may select a specific communication protocol from among the common communication protocols, and the mobility may transmit to the dispenser a message including information regarding the selected communication protocol.

In this case, a stage in which the mobility requests the dispenser to transmit information including a list of communication protocols supported by the dispenser may be further included.

According to an exemplary embodiment of the present disclosure, the purpose, preconditions, and postconditions of stage S403 may be illustrated in Table 5 below.

**[Table 5]**

| Type | Description |
|---|---|
| Use case name | UC-3: "Communication Protocol Negotiation" |
| Objectives | Vehicle and Dispenser determine which communication protocol to use throughout the fueling. |
| Short Description | Once TLS handshake is successfully finished, the vehicle and the dispenser negotiates on the communication protocol to use throughout the fuelling session. The negotiation starts when the vehicle sends a list of its supported protocols and then the dispenser picks a common protocol supported by both and the vehicle prefers the most. |
| Pre-conditions | A secure authenticated communication channel is established using TLS 1.3. |
| Post-conditions | The vehicle and the dispenser reached an agreement on which communication protocol to use for their fuelling communication. |

According to an exemplary embodiment of the present disclosure, contents of messages transmitted and received in stage S1110 may be illustrated in Table 6 below.

**[Table 6]**

| Element Name | Type | Semantics |
|---|---|---|
| protocols | CommProtocolType | Communication protocols supported by the vehicle |
| CommProtocolType | | |
| Index | Unsigned integer | Index of the protocol |
| Name | String | Name of the protocol |
| Ver | String | Version of the protocol |
| pref | Unsigned integer | Preference of protocols. Smaller number represents higher preference. |

Information regarding the first communication protocol may include at least one of an index of the first communication protocol, a name of the first communication protocol, a version of the first communication protocol, and a preference for the first communication protocol.

According to an exemplary embodiment of the present disclosure, contents of a response message transmitted and received in stage S1130 may be illustrated in Table 7 below.

**[Table 7]**

| Element Name | Type | Semantics |
|---|---|---|
| Index | Unsigned integer | Optional:Index of chosen protocol |
| Result | resultType | Result of the protocol negotiation. 'OK' if successful. |
| | | 'FAILED_INCOMPAT' otherwise. |

The response message including information regarding the second communication protocol may further include information indicating whether the negotiation of the communication protocol has succeeded.

The above-described communication protocol negotiation procedure is a procedure for identifying a communication protocol to be followed during a fueling session for hydrogen fueling after the vehicle and the dispenser discover each other and are paired on a compatible communication channel. In particular, in the exemplary embodiment, the dispenser may take the lead and exchange the communication protocol and parameters with the vehicle.

That is, the communication method according to an exemplary embodiment of the present disclosure may perform the stage S401 of performing a discovery and pairing process with the dispenser by using a first communication technology.

Based on a result of the communication protocol negotiation stage S403 being related to a second communication technology, a stage S404 of negotiating a fueling protocol and a stage S405 of negotiating fueling parameters, which will be described later, may be performed by using the second communication technology.

In the stage S401 of performing the discovery and pairing process, information regarding interoperability and/or compatibility between the mobility and the dispenser may be shared.

During execution of stages S403 through S405 of the present disclosure, based on communication environment changes or changes in environmental variables related to hydrogen fueling, the information regarding interoperability and/or compatibility shared between the mobility and the dispenser in the stage S401 of performing the discovery and pairing process may be updated.

The communication protocol negotiation procedure may be implemented by all available communication protocols to ensure successful negotiation among multiple fueling protocols corresponding to respective communication technologies. For example, a fueling protocol using a communication technology such as WLAN may use a communication protocol (hereinafter also referred to as a "common protocol") commonly supported by the vehicle and the dispenser to determine the communication protocol to be used in a bidirectional communication process for hydrogen fueling.

In practice, at each site, a mobility and a dispenser may have numerous possible combinations based on hydrogen fueling communication-related standards, communication modes, fueling methods, communication levels, and other parameters. Here, the hydrogen fueling communication-related standards may include SAE J2601 series, ISO 19885-3, ISO 19885-4, etc. The communication modes may include no communication, IrDA, or XYZ (ISO). The fueling methods may include a table-based fueling method such as a lookup table or an MC-formula-based fueling method. The communication levels may include UCDC levels, and the other parameters may include pressure classes, CHSS (compressed hydrogen storage system) categories, fueling tables, etc.

Meanwhile, based on the mobility or the dispenser being configured to perform a fallback process to a lower type or a lower UCDC level of the counterpart according to the type or UCDC level identified during the communication protocol negotiation procedure, the fallback process may be additionally performed.

In addition, based on incompatibility being found in parameters exchanged during execution of the negotiation procedures (UC3 through UC5) for hydrogen fueling in an environment with possible various combinations, the mobility and the dispenser may return to the communication protocol negotiation procedure and reperform the negotiation procedures.

In an exemplary embodiment of the present disclosure, communication protocols assigned priorities may include protocols having the priorities illustrated in Table 6 to be described later.

The dispenser may transmit to the mobility a response message including a selected protocol (<selected protocol>) selected from a protocol list in stage S1130. The selected protocol may be a common protocol selected by the dispenser and may be a protocol supported by both the dispenser and the mobility and having the highest preference priority of the mobility, for example, an ISO 19885-3-2023-UCDC-3 protocol (see Table 6).

Based on a common protocol, the mobility and the dispenser may reach agreement on the communication protocol to be used for fueling communication.

Meanwhile, the mobility may assign priorities to communication protocols supported by the mobility. The mobility may provide the prioritized communication protocols to the dispenser. An exemplary embodiment of prioritized communication protocols may be illustrated in Table 8 below.

**[Table 8]**

| Protocol ID | Priority |
|---|---|
| SAE J2601 - No comm. | 7 |
| SAE J2799 - IrDA | 6 |
| SAE J2601 - IrDA | 5 |
| ISO 19885-3-2023-UCDC-0 | 4 |
| ISO 19885-3-2023-UCDC-1 | 3 |
| ISO 19885-3-2023-UCDC-2 | 2 |
| ISO 19885-3-2023-UCDC-3 | 1 |

Once a communication protocol is selected in the above-described communication protocol negotiation use case (UC3), the vehicle and the dispenser may activate respective protocol implementations and begin negotiation of a fueling protocol. The fueling protocol negotiation is a procedure in which the vehicle and the dispenser search for and agree on a fueling protocol to be used during a fueling session. In this stage, the vehicle and the dispenser may select, from among protocols supported by both, a communication protocol most preferred by the vehicle.

A hydrogen fueling communication protocol negotiation method according to an exemplary embodiment of the present disclosure is a hydrogen fueling communication protocol negotiation method performed by a communication control device of hydrogen fueled mobility 100. The method may include transmitting, to a communication entity associated with the dispenser 200, a first message including a list of at least one first fueling protocol supported by the mobility 100 and a list of at least one first communication protocol required for executing the at least one first fueling protocol in stage S1110, and receiving, from the communication entity associated with the dispenser 200, a response message including a second communication protocol selected from among the at least one first communication protocol in stage S1130.

The communication entity associated with the dispenser 200 may be an electronic control unit 210 of the dispenser, a separate communication device mounted in the dispenser 200, or an electronic control device or a separate communication device in a station system 200 communicating with the vehicle/mobility 100 on behalf of the dispenser 200.

The first message may include priority information based on a preference of the mobility 100 as shown in Table 6. Each message may be defined based on Table 4 through Table 6.

The response message may include the second communication protocol selected based on priority information according to the preference. The second communication protocol may be selected by the mobility 100 or the dispenser 200 alone, or jointly, based on the priority information. In addition, a final approval message to complete the protocol negotiation procedure may primarily be transmitted by the mobility 100 but may be modified such that the dispenser 200 performs the completion. In this case, the dispenser 200 may first send a supported protocol list, and the mobility 100 may provide feedback regarding the selected protocol.

The response message may include the second communication protocol selected from among a set of common communication protocols commonly included in the at least one first communication protocol and communication protocols supported by the dispenser 200.

The response message may include the second communication protocol determined based on a fallback device type determined according to interoperability and backward compatibility between the mobility 100 and the dispenser 200 among multiple first communication protocols required to execute the first fueling protocol by a control unit of the dispenser 200.

According to an exemplary embodiment of the present disclosure, when a common communication protocol does not exist, a no-communication protocol may be selected as illustrated in FIG. 7 through FIG. 9, and a hydrogen fueling protocol corresponding to the no-communication protocol may be selected according to predetermined rules such that hydrogen may be fueled. In this case, the stages S404 through S405, which will be described later, may be simplified or omitted.

In another exemplary embodiment of the present disclosure, when a common communication protocol does not exist, communication between the mobility 100 and the dispenser 200 may be terminated in stage S409.

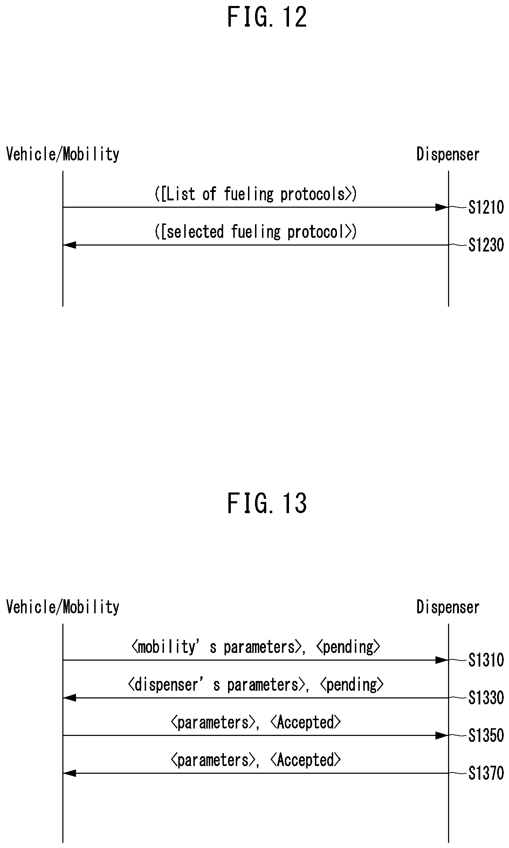

FIG. 12 is an operational flowchart illustrating a fueling protocol negotiation stage S404 in the bidirectional hydrogen fueling communication process according to an exemplary embodiment of the present disclosure.

As shown in FIG. 12, the stage S404 of negotiating a fueling protocol according to an exemplary embodiment of the present disclosure may include transmitting, to the dispenser, a message including information regarding a first fueling protocol applicable by the mobility based on a result of the communication protocol negotiation S403 in stage S1210, and receiving, from the dispenser, a message including information regarding a selected second fueling protocol among fueling protocols commonly applicable between the mobility and the dispenser in stage S1230.

Based on a second communication protocol being selected as a result of the communication protocol negotiation S403, the message including information regarding the at least one first fueling protocol applicable by the mobility may be transmitted to the dispenser as a hydrogen fueling protocol that supports the selected second communication protocol in stage S1210.

The dispenser may select the second fueling protocol by identifying common fueling protocols between fueling protocols applicable by the dispenser and the first fueling protocol, as hydrogen fueling protocols supporting the second communication protocol. In this case, the second fueling protocol may be selected based on interoperability and/or compatibility, and the second fueling protocol may also be selected based on a preference set by the mobility or the dispenser.

Referring to the exemplary embodiment of FIG. 12, the dispenser may receive, from the mobility, the message including information regarding the first fueling protocol applicable by the mobility in stage S1210, compare the first fueling protocol with fueling protocols applicable by the dispenser, select the second fueling protocol from among the common fueling protocols commonly applicable between the mobility and the dispenser, and transmit, to the mobility, a message including information regarding the selected second fueling protocol in stage S1230.

Although not illustrated in FIG. 12, before stage S1210, a stage in which the dispenser requests the mobility to transmit information including a list of first fueling protocols applicable by the mobility may be further included.

In another exemplary embodiment, the dispenser may first transmit, to the mobility, a message including information regarding fueling protocols applicable by the dispenser, the mobility may select a specific fueling protocol from among the common fueling protocols, and the mobility may transmit, to the dispenser, a message including information regarding the selected fueling protocol.

In this case, a stage in which the mobility requests the dispenser to transmit information including a list of fueling protocols applicable by the dispenser may be further included.

According to an exemplary embodiment of the present disclosure, the purpose, preconditions, and postconditions of stage S404 may be illustrated in Table 9 below.

**[Table 9]**

| Type | Description |
|---|---|
| Use case name | UC-4: "Fueling Protocol Negotiation" |
| Objectives | Vehicle and Dispenser determine which fuelling protocol to use for the fuelling. |
| Short Description | Once communication protocol selection is done, the vehicle and the dispenser negotiates on the fuelling protocol to use for the fuelling. The negotiation starts when the vehicle sends a list of its supported protocols and then the dispenser picks a common protocol supported by both and the vehicle prefers the most. |
| Pre-conditions | A communication protocol is selected. |
| Post-conditions | The vehicle and the dispenser reached an agreement on which fuelling protocol to use for their fuelling. |

According to an exemplary embodiment of the present disclosure, contents of messages transmitted and received in stage S1210 may be illustrated in Table 10 below.

**[Table 10]**

| Element Name | Type | Semantics |
|---|---|---|
| fuelProts | FuellingProtocolType | Fuelling protocols supported by the vehicle |
| FuellingProtocolType | | |
| idx | Unsigned integer | Index of the protocol |
| Name | String | Name of the protocol |
| Ver | String | Version of the protocol |
| subprot | String | Optional: Name of the sub-protocol |
| pref | Unsigned integer | Preference of protocols. Smaller number represents higher preference. |

Information regarding the first fueling protocol may include at least one of an index of the first fueling protocol, a name of the first fueling protocol, a version of the first fueling protocol, a sub-protocol of the first fueling protocol, and a preference value associated with the first fueling protocol.

According to an exemplary embodiment of the present disclosure, contents of a response message transmitted and received in stage S1230 may be illustrated in Table 11 below.

**[Table 11]**

| Element Name | Type | Semantics |
|---|---|---|
| Index | Unsigned integer | Optional: Index of chosen protocol |
| Result | Enumeration | Result of the protocol negotiation. 'OK' if successful. |
| | | 'FAILED_INCOMPAT' otherwise. |

The response message including the information on the second fueling protocol may further include information indicating whether the fueling protocol negotiation is successful.

According to an embodiment of the present disclosure, the content of the message transmitted in step S1210 may be represented as shown in Table 12 below.

**[Table 12]**

| Index | Name | Revision | Sub-protocol | Preference |
|---|---|---|---|---|
| 1 | PRHYDE | 2023 | TYPE3-T-initial | 4 |
| 2 | PRHYDE | 2024 | TYPE3-T-Special | 3 |
| 3 | RTR-HFP | | | 2 |
| 4 | ANN-MPC | | | 5 |
| 5 | HMC-FAST | 1.0 | | 1 |

As shown in Table 12, the mobility may provide the dispenser with a table-type parameter set including information such as an arbitrarily assigned name associated with each supported fueling method or fueling protocol, a revision year or version information, an indication of whether a sub-protocol is supported, and preference information.

In another embodiment of the present disclosure, the dispenser may actively exchange its communication protocols and corresponding parameters with the mobility on behalf of the mobility, and may provide the mobility with communication protocols supported by the dispenser together with associated priority information.

In Table 11, PRHYDE (Protocol for Heavy-Duty HYDrogEn Refueling) refers to a protocol proposed under one of the European projects developing heavy-duty vehicle fueling protocols, RTR-HFP refers to a type of protocol concept that aims to improve fueling efficiency based on real-time communication, and ANN-MPC refers to a type of protocol concept that collects and analyzes fueling site data and applies predictive modeling to an actual fueling scenario.

An example of a message transmitted in step S1230 according to an embodiment of the present disclosure is illustrated in Tables 13 and 14 below.

**[Table 13]**

| Fueling Protocol ID | ResultCode |
|---|---|
| 2 | OK |

According to Table 13, the dispenser may select the fueling protocol corresponding to index 2 and transmit a response message including the result code "OK" to the mobility.

**[Table 14]**

| Fueling Protocol ID | ResultCode |
|---|---|
| | FAIL_NO_COMMON_PROTOCOL |

According to Table 14, when the dispenser fails to find a compatible protocol from the list of fueling protocols supported by the mobility, which was received from the mobility, the dispenser may transmit a response message to the mobility including information in the ResultCode field indicating that no common protocol exists (e.g., FAIL_NO_COMMON_PROTOCOL).

The examples of Table 13 and Table 14 may also be similarly applied to the case in which the dispenser responds to the mobility by selecting a second communication protocol among the common communication protocols in step S1130 of FIG. 11.

FIG. 13 is a flowchart illustrating the fueling parameter exchange/negotiation step (S405) that may be adopted in the bidirectional communication process for hydrogen fueling according to an embodiment of the present disclosure.

The fueling parameter exchange/negotiation step (S405) may include a step in which the mobility and the dispenser exchange detailed parameters required to execute the fueling protocol.

As shown in FIG. 13, the step (S405) of negotiating fueling parameters may include transmitting, to the dispenser, a message including information regarding the mobility-side fueling parameters required by the second fueling protocol selected as a result of the fueling protocol negotiation (S404) (S1310), and receiving, from the dispenser, a message including compatibility information regarding the mobility-side fueling parameters (S1350).

The step (S405) of negotiating fueling parameters may include receiving, from the dispenser, a message including information regarding the dispenser-side fueling parameters required by the second fueling protocol selected as a result of the fueling protocol negotiation (S404) (S1330), and transmitting a message including compatibility information regarding the dispenser-side fueling parameters to the dispenser (S1370).

In step S1310, when transmitting a message including information regarding the mobility-side fueling parameters, the mobility may transmit the message to the dispenser with the Accepted field corresponding to the parameters set to <pending>.

Likewise, in step S1330, when transmitting a message including information regarding the dispenser-side fueling parameters, the dispenser may transmit the message to the mobility with the Accepted field corresponding to the parameters set to <pending>.

As a response to the message received in step S1330, the mobility may transmit a message including information regarding the dispenser-side fueling parameters while setting the Accepted field corresponding to the parameters to <OK> or <true> (S1350).

As a response to the message received in step S1310, the dispenser may transmit a message including information regarding the mobility-side fueling parameters while setting the Accepted field corresponding to the parameters to <OK> or <true> (S1370).

In this case, the mobility and the dispenser may respond while indicating whether each fueling parameter is accepted. The Accepted field of a parameter that is not agreed upon may be marked as <false>.

The mobility and the dispenser may repeatedly transmit and receive messages and respond to those messages to reach agreement on all parameters.

The exchanged parameters may include parameters supporting fueling method compatibility, parameters regarding physical characteristics, monitoring parameters, and parameters related to acceptance.

Here, the compatibility support parameters may include a pressure class and a CHSS category, the parameters regarding physical characteristics may include a maximum allowable CHSS pressure, a maximum allowable CHSS temperature, a maximum allowable dispensing rate, and a CHSS volume, the monitoring parameters may include a current CHSS pressure and a current CHSS temperature, and the acceptance-related parameter may include a parameter indicating acceptance, for example, true or false. The above parameters may include information corresponding to one of predetermined levels or configuration values, and information corresponding to the same or different main UCDC levels may be set for each of the parameters.

Meanwhile, the dispenser may transmit an OK message to the mobility indicating that the dispenser has received and accepted the supported parameters (<DIS's parameters>) (simply referred to as <DIS's params>) provided from the mobility (S1330, S1370).

The second parameters related to fueling parameter exchange/negotiation may include parameters for supporting fueling method compatibility, parameters related to physical characteristics, parameters related to the fueling goal, monitoring parameters, and acceptance-related parameters.

Here, the parameters related to fueling method compatibility may include a fueling delivery temperature and a selected fueling table, and the parameters related to physical characteristics may include a maximum fueling delivery pressure, a maximum fueling delivery temperature, a minimum fueling delivery temperature, and a maximum fueling delivery rate. The parameters related to the fueling goal may include a target SOC, a target final CHSS pressure, a target final CHSS temperature, a target APR, and an expected fueling duration. The monitoring parameters may include a current fueling delivery temperature and an ambient temperature, and the acceptance-related parameter may include a parameter indicating whether the fueling parameter is accepted. Each of the foregoing parameters may be set with a predetermined level or one of preset configuration values, and may also be set with information on main UCDC levels, which may be identical or different.

As described above, the mobility may provide the dispenser with the listed parameters in the form of a table. The listed parameters may include FCEV parameters compatible with the UCDC level agreed upon during the fueling protocol negotiation stage.

As described above, after the communication link is established and the communication protocol and fueling protocol are selected during the protocol negotiation stage, the mobility and the dispenser may exchange various parameters to determine whether a mutually compatible fueling procedure can be performed. Here, information necessary to perform a safe and efficient fueling procedure may include compatibility parameters, physical characteristics, fueling goal parameters, and monitoring parameters.

The compatibility parameters may include, for example, a pressure class and a fueling delivery temperature, the physical characteristics may include, for example, a maximum CHSS pressure and a maximum flow rate, the fueling goal may include a target SOC and a target CHSS pressure, and the monitoring parameters may include a current CHSS temperature and an ambient temperature.

If no compatible parameter can be found and fueling cannot continue, the FCEV may return to the communication protocol negotiation stage to attempt another protocol negotiation or operate to stop fueling by the dispenser. In addition, when returning to the communication protocol negotiation stage due to the failure of the fueling parameter exchange stage, the FCEV may be configured to propose, to the dispenser, a set of supported protocols excluding the protocol that failed during the fueling parameter exchange stage.

When the fueling protocol is negotiated through the above-described use case (UC-4), the vehicle and the dispenser may negotiate specific parameters for the fueling protocol, exchange notifications regarding static or dynamic states, and exchange detailed fueling parameters to determine the fueling goal. If the negotiation of fueling parameters fails due to incompatibility, the system may return to UC-3 to select a different fueling protocol or return to UC-1 to select a different communication protocol, and if these processes also fail, the current communication may be terminated.

According to the above configuration, some fueling protocols may be performed based on Non-Communication (Non Comm.). Some fueling protocols may require one-way IrDA communication, some may require bidirectional communication, and some may require both bidirectional communication and one-way IrDA.

Some fueling protocols may require a predetermined UCDC level or a higher UCDC level. Depending on the type of hydrogen-powered vehicle or the type of dispenser, at least one fueling protocol may be proposed. The proposed fueling protocols may have different priorities. The final communication protocol and fueling protocol between the hydrogen-powered vehicle and the dispenser may be determined based on whether the communication protocol required by the fueling protocol is supported by the hydrogen-powered vehicle and/or the dispenser while considering the priorities of the proposed fueling protocols.

According to another exemplary embodiment of the present disclosure, either the mobility or the dispenser may first transmit fueling parameters to the counterpart, and the counterpart may respond with a message including newly reconfigured fueling parameters in which accepted parameters are maintained and non-accepted parameters are modified.

According to another exemplary embodiment of the present disclosure, the mobility and the dispenser may perform parameter negotiation step-by-step. The mobility and the dispenser may first negotiate a portion of the parameters, and then perform an exchange/negotiation process for sub-parameters of the agreed parameters.

According to another exemplary embodiment of the present disclosure, each message including fueling parameters may be set such that if a response message is not received within a preset message processing time, the negotiation is regarded as unsuccessful.

Table 15 below illustrates contents of a message including the mobility-side fueling parameters according to an exemplary embodiment of the present disclosure.

**[Table 15]**

| Name | Unit | Precision | Range/Values | Type | Semantics |
|---|---|---|---|---|---|
| Pressure Class | N/A | N/A | {H35, H70} | Static | Pressure class of the tank |
| CHSS Volume | Liter | 2 decimals | Positive, No-max | Static | Volume of the tank |
| CHSS Pressure | MPa | 2 decimals | Positive, No-max | Dynamic | Current pressure of the tank |
| Emergency Policy | N/A | N/A | {Terminate, Fallback} | Static | Emergency handling policy |

Below, Table 16 illustrates contents of a message including dispenser-side fueling parameters according to an exemplary embodiment of the present disclosure.

**[Table 16]**

| Name | Unit | Precision | Range/Values | Type | Semantics |
|---|---|---|---|---|---|
| Fueling Delivery Temperature | N/A | N/A | {H35, H70} | Static | ... |
| Fueling Temperature | MPa | 2 decimals | Positive, No-max | Dynamic | Current pressure of the tank |
| Emergency Policy | N/A | N/A | {Terminate, Fallback} | Static | Emergency handling policy |

In stage (S405) of the fueling parameter negotiation, the mobility and the dispenser may generate and exchange messages containing a range or values for available fueling parameters.

The parameters may include physical characteristics parameters (hereinafter, "physical parameters"), monitoring parameters, safety policy-related parameters, acceptance-related parameters, and the like.

Here, the physical parameters may include a receptacle type, pressure class, CHSS category, CHSS type, CHSS volume, maximum allowable CHSS pressure, maximum allowable CHSS temperature, maximum allowable rate, and so forth. The monitoring parameters may include a current CHSS pressure and a current CHSS temperature. The safety policy-related parameters may include an emergency policy and a safety enforcement level. The acceptance-related parameters may include information indicating whether the parameter is accepted or not (for example, true, false, or pending).

The parameters may include information corresponding to predetermined parameter levels or predetermined setting values, and may further include information corresponding to different or identical main UCDC levels.

Fueling parameters associated with the fueling parameter negotiation may include physical parameters, monitoring parameters, fueling goal-related parameters, safety policy-related parameters, and acceptance-related parameters. Here, the physical parameters may include a fueling delivery temperature, maximum fueling delivery pressure, maximum fueling delivery temperature, minimum fueling delivery temperature, maximum fueling delivery rate, and so forth. The monitoring parameters may include a current fueling delivery temperature and an ambient temperature. The fueling goal-related parameters may include a selected fueling table, a target SOC, a target final CHSS pressure, a target final CHSS temperature, a target APR, and an expected fueling duration. The acceptance-related parameters may include information indicating acceptance. The parameters may include information corresponding to predetermined parameter levels or predetermined setting values, and may further include information corresponding to different or identical main UCDC levels.

As described above, the FCEV may provide the dispenser with listed parameters in the form of a parameter table. The listed parameters may include FCEV parameters compatible with a UCDC level negotiated during the fueling protocol negotiation stage.

Meanwhile, after receiving a fueling parameter negotiation request message and determining that the received fueling parameters are compatible with the dispenser, the dispenser may transmit, within a preset response time, a fueling parameter negotiation response message in which a result field is set to "OK", and respond with its own fueling parameters.

Additionally, when the dispenser receives the fueling parameter negotiation request and detects that the mobility's fueling parameters are incompatible, the dispenser may transmit a fueling parameter negotiation response message to the FCEV in which the result field is set to "fail" to indicate incompatibility. The result may be a value or information stored in the resultCode field, and the fail condition may be expressed as a representation indicating incompatibility (for example, "fail_incompat").

Further, when the FCEV receives the fueling parameter negotiation response message from the dispenser and determines that the dispenser-side fueling parameters are incompatible, the FCEV may transmit an error notification request message including a reason field set to a predefined error code in order to indicate incompatibility to the dispenser.

Meanwhile, before fueling begins, through a use case (UC6) for safety check-in, the vehicle and the dispenser may confirm that all safety conditions have been satisfied. Although this step may be optional, it may be preferable that the fueling protocol defines a dedicated safety check-in procedure to guarantee the desired level of safety in an accurate and explicit manner.

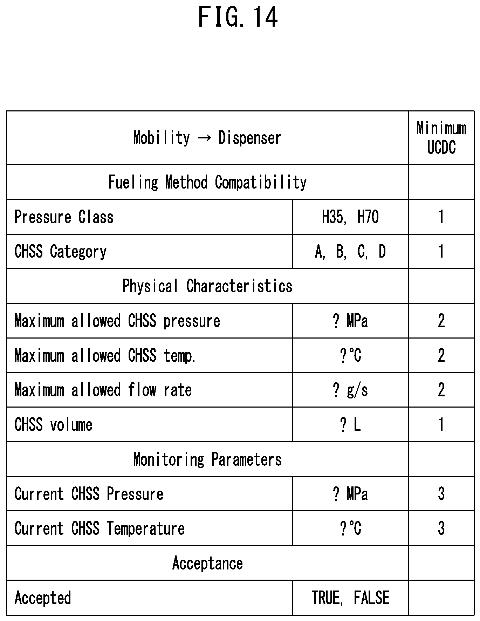

FIG. 14 is a conceptual diagram illustrating a parameter table transmitted from the mobility to the dispenser in the fueling parameter negotiation/exchange process according to an exemplary embodiment of the present disclosure.

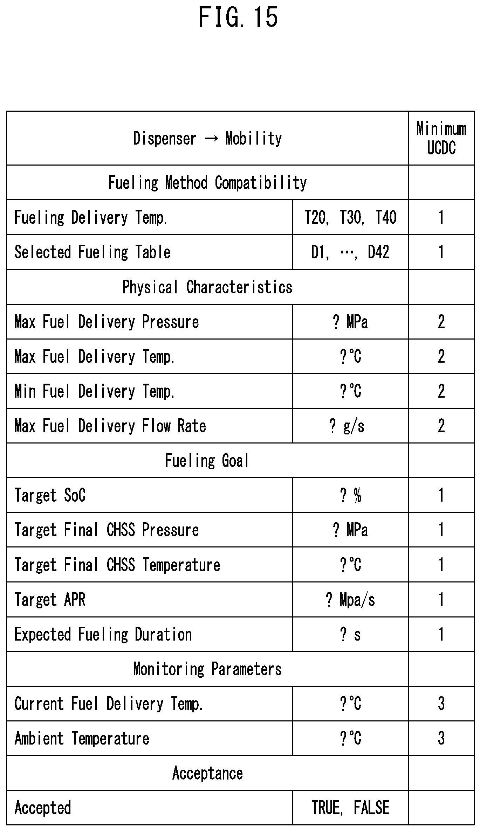

FIG. 15 is a conceptual diagram illustrating a parameter table transmitted from the dispenser to the mobility in the fueling parameter negotiation/exchange process according to an exemplary embodiment of the present disclosure.

As shown in FIG. 13 and FIG. 15 together, a communication-based fueling parameter exchange method for hydrogen fueling according to an exemplary embodiment of the present disclosure may be a communication-based fueling parameter exchange method performed by a communication control device of a hydrogen-fueled mobility (100, hereinafter "mobility"), and may include transmitting, to a communication entity associated with a dispenser (200), a first parameter including at least one of at least one first fueling method compatibility supported by the mobility (100), and at least one first physical characteristic supported by the mobility (100) (S1310); and receiving, from the communication entity associated with the dispenser (200), a response message including a second parameter including at least one of at least one second fueling method compatibility supported by the dispenser (200), at least one second physical characteristic supported by the dispenser (200), and a fueling goal (S1370).

The communication entity associated with the dispenser (200) may be an electronic control unit (210) of the dispenser (200), a separate communication device mounted on the dispenser (200), or a communication device or electronic control unit of a station system (200) communicating with the mobility (100) on behalf of the dispenser (200).

The first parameter may further include a first monitoring parameter supported by the mobility (100). The second parameter may further include a second monitoring parameter supported by the dispenser (200).

In the communication-based fueling parameter exchange method for hydrogen fueling according to an exemplary embodiment of the present disclosure, the parameter exchange process may be terminated based on a confirmation message (OK message) included in the response message. The parameter exchange process may terminate when both the mobility (100) and the dispenser (200) accept all exchanged parameters, and may also terminate when either the mobility (100) or the dispenser (200) does not accept the exchanged parameters. In a case of non-acceptance, a protocol negotiation procedure may subsequently be revisited or a fueling session may be terminated.

In the communication-based fueling parameter exchange method for hydrogen fueling according to an exemplary embodiment of the present disclosure, the at least one first fueling method compatibility may include at least one of a pressure class of the mobility (100) and a fuel tank category (CHSS category) of the mobility (100).

In the communication-based fueling parameter exchange method for hydrogen fueling according to an exemplary embodiment of the present disclosure, the at least one first physical characteristic may include at least one of a maximum allowed CHSS pressure, a maximum allowed CHSS temperature, a maximum allowed flow rate, and a CHSS volume.

In the communication-based fueling parameter exchange method for hydrogen fueling according to an exemplary embodiment of the present disclosure, the first parameter may further include an acceptance-related parameter of the mobility (100).

In the communication-based fueling parameter exchange method for hydrogen fueling according to an exemplary embodiment of the present disclosure, the first monitoring parameter may include at least one of a current CHSS pressure and a current CHSS temperature.

According to an exemplary embodiment of the present disclosure, in the communication-based parameter exchange method for hydrogen fueling, the at least one second fueling method compatibility may include at least one of a fueling delivery temperature of the dispenser (200) and a selected fueling table. The selected fueling table may include a sequence table of the fueling protocol selected during the protocol negotiation procedure and may be included in the OK message of step S1330.

According to an exemplary embodiment of the present disclosure, in the communication-based parameter exchange method for hydrogen fueling, the at least one second physical characteristic may include at least one of a maximum fuel delivery pressure, a maximum fuel delivery temperature, a minimum fuel delivery temperature, and a maximum fuel delivery flow rate.

According to an exemplary embodiment of the present disclosure, in the communication-based parameter exchange method for hydrogen fueling, the fueling goal may include at least one of a target state of charge (Target SoC), a target final CHSS pressure, a target final CHSS temperature, a target average fueling rate (Target APR), and an expected fueling duration.

According to an exemplary embodiment of the present disclosure, in the communication-based parameter exchange method for hydrogen fueling, the second parameter may further include an acceptance-related parameter of the dispenser (200).

According to an exemplary embodiment of the present disclosure, in the communication-based parameter exchange method for hydrogen fueling, the second monitoring parameter may include at least one of a current fuel delivery temperature and an ambient temperature.

Mobility (100) may provide the first parameters compatible with the UCDC level negotiated during the protocol negotiation procedure in a table format in step S1310.

The dispenser (200) may provide the second parameters compatible with the UCDC level negotiated during the protocol negotiation procedure in a table format in step S1330. In this case, the second parameters may be provided together with a message indicating acceptance of the first parameters provided in step S1310.

If mobility (100) or the dispenser (200) does not accept the exchanged parameters, mobility (100) may perform the protocol negotiation procedure again. Alternatively, if mobility (100) or the dispenser (200) does not accept the exchanged parameters, mobility (100) may terminate the fueling session.

In the protocol negotiation procedure performed again due to a failed parameter exchange caused by non-acceptance of exchanged parameters by mobility (100) or the dispenser (200), mobility (100) may propose a set of supported protocols excluding the protocol previously provided during the failed parameter exchange process.

Table 17 illustrates contents of a message including the mobility-side fueling parameters according to another exemplary embodiment of the present disclosure.

**[Table 17]**

| Physical Parameters | |
|---|---|
| Receptacle Type | ? |
| Pressure Class | H35/H70 |
| CHSS Category | A/B/C/D |
| CHSS Type | 1/2/3/4 |
| CHSS Volume | ? L |
| Maximum allowed CHSS Pressure | ? MPa |
| Maximum allowed BHSS temp. | ? °C |
| Maximum allowed flow rate | ? g/s |

| Monitoring Parameters | |
|---|---|
| Current CHSS Pressure | ? MPa |
| Current CHSS Temp. | ? °C |

| Safety Policy | |
|---|---|
| Emergency Policy | ? |
| Safety Enforcement Level | ? |

| Acceptance | |
|---|---|
| Accepted | TRUE/FALSE/PENDING |

Table 18 illustrates the contents of a message including the dispenser-side fueling parameters according to another exemplary embodiment of the present disclosure.

**[Table 18]**

| Physical Parameters | |
|---|---|
| Fueling Delivery temp. | T30 |
| Max Fuel Delivery Pressure | ? MPa |
| Max Fuel Delivery Temp. | ? °C |
| Min Fuel Delivery Temp. | ? °C |
| Mas Fuel Delivery Flow Rate | ? g/s |

| Monitoring Parameters | |
|---|---|
| Current Fuel Delivery Temp. | ? °C |
| Ambient Temperature | ? °C |

| Fueling Goal | |
|---|---|
| Selected Fueling Table | D1 |
| Target SoC | ? % |
| Target Final CHSS Pressure | ? MPa |
| Target Final CHSS Temperature | ? °C |
| Target APR | ? MPa/s |
| Expected Fueling Duration | ? °C |
| Safety Policy | ? s |

| Acceptance | |
|---|---|
| Accepted | TRUE/FALSE/PENDING |

According to an exemplary embodiment of the present disclosure, in the communication method, when the fueling parameters are incompatible between the mobility and the dispenser as a result of the fueling parameter negotiation (S405), the communication method may further include a step of renegotiating at least one of the communication protocol and the fueling parameters.

In this case, in the communication method according to an exemplary embodiment of the present disclosure, the renegotiation step may re-perform step (S403), step (S404), and step (S405). For example, by going back to step (S403), renegotiation may be performed again starting from step (S403), and then steps (S404) and (S405) may be performed again sequentially. In another embodiment, by going back to step (S404), renegotiation may be performed again starting from step (S404), and then step (S405) may be performed again sequentially.

In another exemplary embodiment of the communication method according to the present disclosure, the renegotiation step may simplify or omit parts of step (S403), step (S404), and step (S405). Alternatively, step (S403) and step (S404) may be combined to negotiate both the communication protocol and fueling protocol together. For example, based on the compatibility and/or interoperability information identified in the preceding step (S401), the communication protocol and the fueling protocol may be negotiated together based on a protocol list that includes both the communication protocol and the fueling protocol depending on whether they are supported.

In another exemplary embodiment of the communication method according to the present disclosure, the renegotiation step may be performed based on the remaining communication protocols and fueling protocol list excluding the communication protocol or fueling protocol selected in the preceding step (S403) and step (S404).

According to an exemplary embodiment of the communication method of the present disclosure, when the fueling parameters are incompatible between the mobility and the dispenser as a result of the fueling parameter negotiation (S405), the communication method may further include determining a third communication protocol and a third fueling protocol based on a predetermined policy, and supplying hydrogen based on the third communication protocol and the third fueling protocol. In this case, the third fueling parameter may be determined based on the third fueling protocol, and the step of supplying hydrogen may be performed based on the third fueling protocol and the third fueling parameters.

For example, when communication between the mobility and the dispenser becomes impossible due to a change in the communication environment, the dispenser may fall back to No Communication and may supply hydrogen based on the hydrogen fueling protocol corresponding to No Communication.

According to an exemplary embodiment of the communication method of the present disclosure, when the fueling parameters are incompatible between the mobility and the dispenser as a result of the fueling parameter negotiation, the step (S409) of terminating communication between the dispenser and the mobility may be performed.

Referring again to FIG. 4, a safety check-in step (S406), which may be adopted in a bidirectional communication process for hydrogen fueling according to an exemplary embodiment of the present disclosure, is illustrated.

In the safety check-in step (S406), the mobility and the dispenser may verify whether all safety conditions required before the actual fueling begins are satisfied.

When the fueling parameters are exchanged and the mobility and the dispenser are considered compatible, the mobility and the dispenser may perform a safety status check to verify whether fueling is safe. Depending on the fueling protocol, the safety check may be implicitly performed within the protocol, and depending on implementation, the safety check-in step (S406) may be omitted.

Additionally, in the safety check-in step (S406), the mobility and/or the dispenser may check whether the nozzle-receptacle is locked, check for leakage, and check the last-minute status.

Furthermore, after receiving the fueling parameter negotiation response message from the dispenser, when the fueling protocol supports safety check-in, the mobility may transmit a safety check-in request message to the dispenser within the message sequence time limit to initiate the safety check-in step (S406).

The mobility and the dispenser may exchange messages for a coupler check. The mobility may transmit a message including information representing its coupler check result (e.g., Mobility: OK) to the dispenser, and the dispenser may transmit a message including information representing its coupler check result (e.g., DP: OK) to the mobility.

Additionally, the mobility and the dispenser may exchange messages related to gas leak inspection. During the exchange of leak inspection messages, the dispenser may transmit information ("ongoing") to the mobility indicating that the leak inspection is in progress. The mobility may transmit information ("waiting") to the dispenser indicating that it is waiting for the dispenser's leak inspection result. When the leak inspection is completed, the dispenser may transmit leak-inspection-completion information ("Done") along with a message requesting the measured tank volume to the mobility.

Additionally, the dispenser may transmit a message to the mobility for checking an immobilized status, and the mobility may transmit a message to the dispenser indicating that it is ready for the status check.

As described above, when the mobility reports parameters regarding its current state or immobilization status to the dispenser, the dispenser may report parameters regarding the coupler lock status, the leak check status, and the predicted mobility tank capacity to the mobility.

When the above-described safety check-in step (S406) is passed, fueling may begin. During fueling, the mobility and the dispenser may exchange information to monitor various status parameters so that fueling is performed safely and efficiently. If necessary, the mobility or the dispenser may send a control message requesting the other party's action to control the fueling step (S406) or respond to a safety-related condition. The parameters and commands to be exchanged may vary depending on the actual fueling protocol.

Step (S407) is a monitoring and control step that can be adopted in the bidirectional communication process for hydrogen fueling according to an exemplary embodiment of the present disclosure.

In the monitoring and control step (S407), the mobility and/or the dispenser, including the mobility, may monitor the fueling status and control fueling when necessary. When all safety checks are confirmed, the mobility and the dispenser may initiate fueling according to the selected fueling protocol using the given parameters. During fueling, the mobility and the dispenser may exchange various measurement data to identify the fueling status and operate to rapidly detect safety-critical incidents.

Additionally, the mobility may transmit specific commands to the dispenser to control the fueling step (S407), such as initiating or terminating fueling. In this case, the mobility may use UDP with DTLS for communication to support black-channel communication. Black-channel communication may refer to communication applying a black-channel principle in which safe communication must be guaranteed despite the output characteristics of a communication channel having unsecured properties or properties irrelevant to the application.

To describe the monitoring and control step (S407) in more detail, the mobility, including the mobility, may transmit a message to the dispenser to start fueling control, and in response, the dispenser may transmit a message including confirmation information (e.g., OK) to the mobility.

Additionally, the mobility may transmit a message including information regarding its fueling loop (e.g., x, y, z) to the dispenser, and the dispenser may provide a message to the mobility including information regarding its fueling loop corresponding to the mobility's fueling loop (e.g., a, b, c).

Additionally, the mobility may transmit a fueling control request message including information for slowing down fueling or reducing fueling volume to the dispenser, and the dispenser may transmit a response message to the mobility including information (e.g., slowing) indicating a decrease in fueling status.

Additionally, the mobility may transmit a fueling control request message requesting a stop of fueling to the dispenser, and the dispenser may transmit a fueling status response message including information indicating that fueling is stopping or stopped to the mobility.

As described above, in the monitoring and control step (S407), the mobility and the dispenser may continuously or periodically exchange parameters related to the fueling status. The mobility may transmit the current tank temperature, current tank pressure, etc., to the dispenser, and the dispenser may provide parameters related to fueling start, stop, ramping up, ramping down, current injection pressure, and future fueling plans to the mobility.

A request message related to control transmitted from the mobility to the dispenser may include information or parameters regarding start, pause, resume, or terminate of fueling. Also, a message related to reporting transmitted from the mobility to the dispenser may include information or parameters regarding the current tank temperature, current tank pressure, etc.

A message related to reporting transmitted from the dispenser to the mobility may include information or parameters regarding status information, current ambient temperature, current pressure ramp rate (PRR [Mbar/min]), delivery fuel flow rate ([g/sec]), current fuel delivery temperature, pre-cooling temperature, current fuel delivery pressure, whether buffer refueling is being used, whether cooling dispenser is being used, whether fallback is being used, the reason for fueling stop, and the current amount of delivered hydrogen.

Also, a message related to target parameter update transmitted from the dispenser to the mobility may include information or parameters regarding the target final tank pressure, target final tank temperature, target fueling APR, target SOC, current SOC, and estimated remaining duration.

Meanwhile, when TCP is used in the above-described monitoring and control step (S407), if the safety check-in response message or the safety check-in step by the fueling protocol is omitted, the mobility may transmit a fueling loop request message to the dispenser within the message sequence time setting after receiving the fueling parameter negotiation response message from the dispenser. The request or response messages related to the fueling loop may be transmitted as DTLS messages.

After completing hydrogen fueling through the above-described monitoring and control step (S407), before disconnecting the nozzle and terminating the session, the mobility and the dispenser, including the mobility, may verify through a safety check-out use case whether each of the mobility and the dispenser satisfies all safety conditions. This safety check-out step is optional, but it is desirable to define a dedicated safety inspection step (S407) in the fueling protocol to ensure the desired safety level in an accurate and explicit manner.

The safety check-out step (S408) that can be adopted in the bidirectional communication process for hydrogen fueling according to an exemplary embodiment of the present disclosure may be performed as follows. The mobility and the dispenser, including the mobility, may verify through the safety check-out step (S408) whether all required safety conditions are satisfied before disconnecting the dispenser nozzle from the receptacle. In other words, the mobility and the dispenser may ensure that it is absolutely safe for a user or operator to disconnect the nozzle from the mobility after fueling is completed.

For example, after the mobility receives a fueling loop response message from the dispenser in which the "result" is set to "OK," or the "status" is set to "finished," or the prefix is "stopped," and when the hydrogen fueling protocol supports safety check-out, the mobility may begin safety check-out and may transmit a safety check-out request message to the dispenser within a message sequence timeout to perform the safety check-out step (S408).

The mobility and the dispenser may repeatedly report their respective status to one another until all safety checks have been confirmed. If the bidirectional communication process for hydrogen fueling does not require such final safety confirmation, the use case for safety check-out may be omitted.

To describe the above safety check-out step (S408) in further detail, the mobility may transmit a message to the dispenser including information (e.g., OK) indicating the result of the coupler check, and the dispenser may transmit a message to the mobility including information (e.g., Ongoing) indicating that the coupler check is in progress.

Additionally, the mobility may again transmit a message to the dispenser including coupler check result information (e.g., OK), and the dispenser may transmit a message including coupler check completion information (e.g., Done) to the mobility.

When the above coupler check completion information is confirmed as normally completed, the dispenser nozzle may be disconnected from the receptacle of the mobility by a user or operator.

In the above safety check-out step (S408), a report message transmitted from the dispenser to the mobility may include information or parameters regarding the coupler unlock status. The coupler unlock status information may include values such as locked, unlocked, icing, or problem.

When fueling is completed and the nozzle has been safely removed according to the above hydrogen fueling protocol, or when a non-safety-critical issue occurs during other use cases, a termination use case (UC9) may be performed.

The termination step (S409) that can be adopted in the bidirectional communication process for hydrogen fueling according to an exemplary embodiment of the present disclosure may be performed as follows.

The termination step (S409), as the final step of fueling, may allow the mobility and the dispenser, including the mobility, to exchange information regarding fueling performance and method, and/or reasons for unexpected interruption of fueling, thereby completing all steps (S409) for hydrogen fueling. The termination use case may also be configured to handle tasks related to non-safety-critical issues if they occur.

For example, after the mobility receives a safety check-out response message from the dispenser in which the "result" is set to "DONE," or receives a fueling loop response message in which the "status" is set to "finished," or the prefix is "stopped," the mobility may transmit a termination request message to the dispenser to perform the termination step (S409).

To describe the termination step (S409) in more detail, the mobility may transmit a message to the dispenser inquiring how much fueling has been performed. In response to the inquiry message from the mobility, the dispenser may transmit a response message including information (e.g., X gram) regarding the delivered hydrogen amount to the mobility.

Additionally, the mobility may transmit a request message to the dispenser requesting confirmation of fueling completion, and the dispenser may transmit a goodbye message to the mobility as a response message to the confirmation request.

Meanwhile, after fueling is completed and safety checks are confirmed, the mobility and the dispenser may exchange at least part of book-keeping information for the fueling session of hydrogen fueling in the termination step (S409). Before completing the termination step (S409), the mobility and the dispenser may exchange summary information regarding the fueling session of hydrogen fueling.

The book-keeping information may include all information related to hydrogen fueling that is recorded in the mobility or the dispenser according to predefined rules or policies over all fueling sessions for hydrogen fueling and before completing the termination step (S409) of use case UC9.

The book-keeping information or summary information may include information regarding how much fuel was supplied or which reports were generated. In addition, a reporting message transmitted from the mobility to the dispenser may include information or parameters regarding the current tank temperature and current tank pressure, and a reporting message transmitted from the dispenser to the mobility may include information regarding the final SOC, the final average fueling rate (APR), the final measured tank pressure, the actual fueling duration, and the actual delivered hydrogen amount.

When all necessary information regarding the fueling session has been stored, the fueling session may be completely terminated.

Examples of communication data among some of the above use cases (UC5 to UC9) are shown in Table 19 below.

**[Table 19]**

| UC Category | Station → Vehicle/Mobility | Vehicle/Mobility → Station |
|---|---|---|
| Fueling Parameter Negotiation | Check whether communication is delivered | Check whether communication is delivered |
| | Fueling protocol | Maximum operating pressure |
| | Hydrogen supply (cooling) temperature | Maximum operating temperature |
| | | Maximum operating flow rate |
| | Target fueling pressure | Tank temperature |
| | Expected (estimated) tank temperature after fueling | Tank pressure |
| | | Tank volume |
| | Target fueling amount (SOC %) | Vehicle fueling pressure (350/700, etc.) |
| | Target fueling time | |
| | Ambient temperature | |
| Safety Check-In | Whether nozzle-receptacle is properly connected | Tank temperature |
| | | Tank pressure |
| | Result of hydrogen storage system leakage check | Tank volume |
| | Predicted vehicle tank volume by station (verify suitability using map) | |
| Monitoring and Control | Hydrogen supply (cooling) temperature | Tank temperature |
| | | Tank pressure |
| | Target fueling pressure | Tank volume |
| | Expected (estimated) tank temperature after fueling | Fueling stop request |
| | Target fueling amount (SOC %) | |
| | Ambient temperature | |
| | Target fueling rate | |
| | Actual fueling rate | |
| | Target fueling time | |
| | Actual fueling time | |
| | Fueling flow rate | |
| | Fueling state (start / fueling / stopped / paused) | |
| | Communication status | |
| | Reason when fueling is stopped (normal termination / insufficient station pressure / communication failure) | |
| | Whether top-off is applied | |
| | Whether cold dispenser is used | |
| | Whether fallback is applied | |
| Safety Check-Out | Whether nozzle-receptacle can be separated (separable / icing, etc.) | Tank temperature |
| | | Tank pressure |
| | | Tank volume |
| Termination | Target fueling amount vs actual fueling amount | |
| | Target fueling rate | |
| | Actual fueling rate | |
| | Target fueling pressure | |
| | Actual fueling pressure | |
| | Target tank temperature | |
| | Actual tank temperature | |
| | Target fueling time | |
| | Actual fueling time | |

Meanwhile, the error handling use case (UC10) is a functional block for terminating the fueling procedure similar to a normal termination or handling a situation in which a non-safety-critical error occurs that requires stopping communication suddenly.

The error handling step (S410) that can be adopted in the bidirectional communication process for hydrogen fueling according to an exemplary embodiment of the present disclosure may be performed as follows.

The error handling step (S410) may define error conditions related to the fueling protocol, provide detection criteria, and include response procedures such as notification, termination, and fallback mechanisms when detected.

The error handling step (S410) may be applied when a non-safety-critical error occurs and further communication becomes impossible. That is, in the error handling step (S410), the mobility and the dispenser, including the mobility, may handle occurrences of non-safety-critical errors at any time during fueling. In other words, the mobility and the dispenser may immediately stop fueling, pause the previously ongoing use case, and then move to the termination use case (UC9).

When a non-safety-critical error event is detected by the mobility, the mobility may notify the dispenser of the reason for termination through a terminate request (TerminateReq) message and stop the current fueling session or communication session. The dispenser may terminate the current communication session in response to the terminate request message. If further communication is impossible, the current session may be terminated without additional notification.

Additionally, when a non-safety-critical error is detected by the mobility and the communication channel remains functional, the mobility may transmit a terminate request (TerminateReq) message to the dispenser in which the "action" is set to "stop" and the "reason" is set to an appropriate reason or reason code. The appropriate reason or reason code may include, for example, "message is corrupted".

The above terminate request message may be transmitted in error situations related to non-safety-critical communication errors, system errors, and qualitative errors, except when recovery is impossible.

That is, for successful fueling, the communication must behave as expected according to the protocol, and the fueling operation must remain within the allowable range of the fueling protocol. However, in practice, various abnormal events may occur. Some errors may be minor and easily handled, while others may be unrecoverable and prevent fueling from continuing. Therefore, in the error handling step (S410), non-safety-critical error conditions are defined and exemplary error conditions and possible responses are provided.

Examples of communication errors may include cases where communication is disconnected, where received data cannot be recognized due to encoding or syntax errors, or where received data is outside the allowable range. System errors may include cases where the dispenser or the mobility detects its own critical system failure. Qualitative errors may include cases where communication performance quality does not meet required specifications or where data integrity or accuracy quality does not satisfy required levels.

The bidirectional communication process for hydrogen fueling according to this exemplary embodiment may perform the following detailed error handling steps (S410) for the above error conditions:
(1) If a non-safety-critical error occurs and further communication becomes impossible, the mobility and the dispenser may immediately stop fueling but may take safe measures and terminate the session by stopping communication.
(2) If a non-safety-critical error occurs and fueling is interrupted before completion, the fueling protocol may define a fallback mechanism, for example, by defining a non-communication fueling method.
(3) When a non-safety-critical error is detected by the mobility and the communication channel is still operational, the mobility may transmit a terminate request message to the dispenser in which the "action" is set to "stop" and the "reason" is set to an appropriate reason code.
(4) When a non-safety-critical error is detected by the dispenser and the communication channel is still operational, the dispenser may first immediately stop fueling and then transmit a terminate request message to the mobility in which the "action" is set to "stop" and the "reason" is set to an appropriate reason or reason code.

As described above, the bidirectional communication process for hydrogen fueling including the fueling protocol may define error conditions related to the fueling protocol, provide detection criteria, and perform the error handling step (S410), including notification, the termination step (S410), and fallback mechanisms when errors are detected based on the detection criteria.

Meanwhile, during fueling in a hydrogen fueling system, a safety-critical problem may occur that requires urgent response.

The emergency handling step (S411) that can be adopted in the bidirectional communication process for hydrogen fueling according to an exemplary embodiment of the present disclosure may be performed as follows.

The emergency handling step (S411) may define safety-critical conditions requiring emergency response during fueling and may include response steps to prevent safety-critical incidents.

For safe fueling, communication must exhibit expected behavior according to the protocol, and fueling actions must remain within the safe range of the fueling protocol. However, during fueling, issues may occur that could cause the fueling system (or hydrogen fueling system) to reach a critical condition that must be prevented at all costs. Therefore, in the emergency handling step (S411), safety-critical emergency conditions and possible responses are defined, and important cases to consider are provided.

The fueling protocol may define emergency conditions related to the protocol and may provide detection criteria and performance requirements, and may specify the emergency handling step (S411) so that harmful situations are not reached.

Specifically, during the hydrogen fueling step (S411), when a high-pressure condition exceeding a preset threshold is detected by the mobility, the mobility may transmit a first emergency stop request message to the dispenser including information requesting fueling stop due to high pressure (e.g., "Emg: Stop (high pressure)"). The dispenser may transmit a response message to the mobility including information indicating that emergency fueling stop is in progress (e.g., "Emg: Stopping") in accordance with the first emergency stop request message.

Additionally, after receiving the response message, either immediately or after a predefined time has elapsed, the mobility may retransmit the first emergency stop request message to the dispenser. The dispenser may transmit a response message to the mobility including information indicating that the fueling has been emergency stopped according to the first emergency stop request message (e.g., "Emg: Stopped").

Meanwhile, during the hydrogen fueling step (S411), if hydrogen fuel leaking is detected by the dispenser, the dispenser may transmit a second emergency stop request message to the mobility including information indicating that the fueling stop due to leakage is being processed (e.g., "Emg: Stopping (leaking)"). The mobility may transmit a response message to the dispenser including information indicating that the second emergency stop request message has been acknowledged (e.g., "Emg: Confirmed").

Additionally, the dispenser may transmit a third emergency stop notification message to the mobility including information indicating that the fueling stop due to leakage has been processed (e.g., "Emg: Stopped (leaking)"). The mobility may transmit a response message to the dispenser including information indicating that the third emergency stop notification message has been acknowledged (e.g., "Emg: Confirmed").

According to the above configuration, when a critical situation affecting safety is detected in either the mobility including the mobility or in the dispenser, necessary actions may be immediately taken so that a hazardous event does not occur, and if possible, an emergency notification message including information regarding the situation may be transmitted to the counterpart, and communication may be blocked.

When the emergency notification message is received, the mobility or the dispenser may immediately respond according to the action indicated in the emergency notification message and terminate the communication without excessive delay. The emergency notification message may include a message having a header and a body connected to the header, wherein the header includes information indicating that it is an emergency notification, and the message may include a value, information, or parameter regarding a class, type, and action of the emergency notification.

The emergency notification message may be transmitted as a TLS or DTLS message depending on the communication technology used.

Referring back to FIG. 4, the purpose, preconditions, and postconditions of the safety check-in step (S406) may be illustrated by Table 20 below.

**[Table 20]**

| Type | Description |
|---|---|
| Use case name | UC-6: "Safety Check-in" |
| Objectives | Vehicle and Dispenser confirms that all the necessary safety conditions are met and the communication link is correctly paired with the pairing channel before actual fuelling is started. |
| Short Description | Once fuelling parameters are exchanged and vehicle and dispenser are considered compatible, vehicle and dispenser performs safety condition checks and pairing checks to make sure the fuelling is safe and the communication is reliable. Depending on the fuelling protocol and the communication physical layer, the safety checks can be implicitly done within the protocol or physical association and this step may be omitted. |
| Pre-conditions | Necessary fuelling parameters are exchanged. |
| Post-conditions | The vehicle and the dispenser confirmed all the safety conditions and correctness of the pairing, and ready to begin fuelling. |

Once the fueling parameter negotiation step (S405) is successfully performed, the fueling protocol may perform the safety check-in step (S406), as described above.

If the communication physical layer is specified to require a pairing procedure, the mobility and the dispenser may re-check the pairing before dispensing hydrogen during the safety check-in step (S406).

Even when the communication physical layer is not specified to require a pairing procedure, the mobility and the dispenser may re-check the pairing before dispensing hydrogen during the safety check-in step (S406).

After receiving, from the dispenser, a message indicating completion of step (S405) (for example, FuelParamNegoRes), if the fueling protocol supports the safety check-in step (S406), the mobility may transmit, within a predetermined time interval (for example, MessageSequenceTimeout), a message indicating the start of the safety check-in step (S406) (for example, SafetyCheckInReq) to the dispenser.

As an alternative embodiment, when a message indicating completion of step (S405) is transmitted from either the mobility or the dispenser to the other party, the transmitting party or the receiving party may transmit a message indicating the start of the safety check-in step (S406).

According to an embodiment of the present disclosure, the messages transmitted and received in the safety check-in step (S406) may be defined based on the content of each fueling protocol specified in standards such as ISO 19885-3.

According to an embodiment of the present disclosure, the messages transmitted and received in the safety check-in step (S406) may include, as a result element, a result value obtained by processing the request message. In this case, the result value provided as the result element may include "OK" when successful, "FAILED" when failed, and "PENDING" in other cases.

If all safety conditions are satisfied when the mobility transmits the SafetyCheckInReq message to the dispenser, the result value of the message may be set to "OK".

If several safety conditions are not yet satisfied when the mobility transmits the SafetyCheckInReq message to the dispenser, the result value of the message may be set to "PENDING".

After receiving the SafetyCheckInReq message, the dispenser may transmit a SafetyCheckInRes message with safety-check parameters to the mobility within a MessageResponseTimeout period.

If all safety conditions are satisfied when the dispenser transmits the SafetyCheckInRes message to the mobility, the result value of the message may be set to "OK".

If several safety conditions are not yet satisfied when the dispenser transmits the SafetyCheckInRes message to the mobility, the result value of the message may be set to "PENDING".

When a SafetyCheckInRes message with the result value set to "PENDING" is received, the mobility may transmit another SafetyCheckInReq message to the dispenser within the MessageResponseTimeout period.

When a SafetyCheckInReq message with the result value set to "PENDING" is received, the dispenser may transmit another SafetyCheckInReq message to the mobility within the MessageResponseTimeout period.

If the mobility or the dispenser cannot confirm all safety conditions within a predetermined time (for example, UCSafetyCheckInTimeout), an ErrNotifReq message may be transmitted with the "reason" field set to an appropriate error code.

As an alternative embodiment, the mobility or the dispenser may transmit a request message indicating the start of safety check-in to the counterpart, and the counterpart may respond with a response message to the safety check-in request message within a predetermined time interval.

Referring back to FIG. 4, the purpose, preconditions, and postconditions of the monitoring and control step (S407) may be illustrated in Table 21 below.

**[Table 21]**

| Type | Description |
|---|---|
| Use case name | UC-7: "Fuelling control and monitoring" |
| Objectives | Vehicle and Dispenser monitors the fuelling status and control the fuelling if necessary. |
| Short Description | Once all the safety checks are confirmed, the vehicle and dispenser starts the fuelling according to the chosen fuelling protocol with given parameters. During the fuelling, vehicle and dispenser exchange various measured data to understand the fuelling status and detect any safety-critical incidents as early as possible. Vehicle can also submit certain commands to dispenser to control the fuelling procedure, such as starting and ending the fuelling. To support black-channel communication, UDP with DTLS is used for the communication. |
| Pre-conditions | All the safety checks are confirmed and vehicle and dispenser are ready to fuel. |
| Post-conditions | The fuelling is finished successfully. |

Once the safety check-in step (S406) is successfully performed, the fueling protocol may perform the monitoring and control step (S407), as previously described.

When the safety check-in step (S406) is omitted, the fueling protocol may perform the monitoring and control step (S407) once the fueling parameter negotiation step (S405) is successfully completed.

During the monitoring and control step (S407), the dispenser may perform all necessary steps to supply fuel to the mobility.

When the TCP specification is used in the fueling control and monitoring use case, after the mobility receives the SafetyCheckInRes message, or in an embodiment where the safety check-in step (S406) is omitted, after the mobility receives the FuelParamNegoRes message, the mobility may transmit, within a predetermined time interval (for example, MessageSequenceTimeout), a message requesting the start of the monitoring and control step (S407) (for example, a FuelLoopReq message) to the dispenser.

When the above-described black channel is used, after transmitting the SafetyCheckInRes message or, in an embodiment where the safety check-in step (S406) is omitted, after transmitting the FuelParamNegoRes message, the mobility (as client) and the dispenser (as server) may initiate a DTLS 1.3 handshake following RFC 9147 with session resumption using a NewSessionTicket. The NewSessionTicket may be received from the dispenser.

After the DTLS 1.3 handshake is successfully finished, the mobility may transmit, within a predetermined time interval (for example, MessageSequenceTimeout), a message requesting the start of the monitoring and control step (S407) (for example, a FuelLoopReq message) to the dispenser.

In this case, 0-RTT may not be used for DTLS session resumption.

Both the FuelLoopReq message and its response message (for example, FuelLoopRes) may be transmitted following DTLS messaging specifications.

Additional requirements necessary for implementing the black channel method may also be included.

The FuelLoopReq message may be implemented based on the specifications of each fueling protocol.

The fueling protocol may specify static or dynamic data to be included in the FuelLoopReq and FuelLoopRes messages, where such static or dynamic data may be used to monitor fueling status and exchange safety-related information.

The element names included in the FuelLoopReq message may include action and reason, and may be illustrated in Table 22 below. Elements not shown in Table 22 may be specified in the fueling protocol specification, such as ISO 19885-3.

**[Table 22]**

| Element Name | Type | Semantics | |
|---|---|---|---|
| action | actionType | Optional: Action that Vehicle requests to Dispenser. | |
| | | | - start |
| | | | - stop |
| | | | - (Any custom actions defined by fuelling protocol) |
| reason | reasonType | Optional: Reason for why the "action" is requested. | |

The element names included in messages transmitted and received in step S407 (for example, a FuelLoopRes message) may include status, reason, and result, and may be illustrated in Table 23 below. Elements not shown in Table 23 may be defined according to each fueling protocol specification, such as ISO 19885-3.

**[Table 23]**

| Element Name | Type | Semantics | |
|---|---|---|---|
| status | statusType | Optional: - preparing | |
| | | | - precooling |
| | | | - fuelling |
| | | | - standby |
| | | | - faulted |
| | | | - ramping-up |
| | | | - ramping-down |
| | | | - stopping |
| | | | - finished |
| | | | - stopped_error |
| | | | - stopped_requested |
| | | | - stopped_unknown |
| | | | - (Any custom status codes defined by fuelling protocol) |
| reason | reasonType | Optional: Reason for stopping when the fuelling is stopped abnormally | |
| result | resultType | Result of processing the request message. 'OK' if successful. 'FAILED' otherwise. | |
| | | See Table XYZ for the list of result codes. | |

According to an exemplary embodiment of the present disclosure, when transmitting the FuelLoopReq message, the dispenser may be expected to conduct the action. The mobility may transmit the message by setting the element "action" to a desired action code. The action code may be defined by the fueling protocol.

After receiving the FuelLoopReq message (for example, where "action" is set to "start"), when the dispenser is ready to start, the dispenser may initiate the fueling procedure using the negotiated method and respond with a FuelLoopRes message in which the element "result" is set to "OK".

After receiving the FuelLoopReq message (for example, where "action" is set to "start"), when the dispenser is not ready to start, the dispenser may respond with a FuelLoopRes message in which the element "result" is set to "PENDING".

After receiving the FuelLoopReq message (for example, where "action" is set to "stop"), when the dispenser is ready to stop, the dispenser may stop the fueling procedure as defined in the fueling protocol and respond with a FuelLoopRes message in which the element "result" is set to "ONGOING".

After receiving the FuelLoopReq message (for example, where "action" is set to "stop"), when the dispenser is ready to stop, the dispenser may immediately stop the fueling procedure and respond with a FuelLoopRes message in which the element "result" is set to "OK".

After receiving the FuelLoopReq message, the dispenser may respond with a FuelLoopRes message within a predetermined time duration (for example, MessageSequenceTimeout).

If the received FuelLoopReq message is successfully processed, the dispenser may transmit a FuelLoopRes message in which the element "result" is set to "OK".

If the received FuelLoopReq message is not successfully processed, the dispenser may transmit a FuelLoopRes message in which the element "result" is set to "FAILED," or another suitable error code.

The dispenser may transmit a FuelLoopRes message in which the element "status" is set using one of the supported codes defined in Table 23 or by the fueling protocol.

When fueling is completed and the intended fueling goal is achieved, the dispenser may transmit a FuelLoopRes message in which the element "status" is set to "finished".

When fueling is stopped due to an error, the dispenser may transmit a FuelLoopRes message in which the element "status" is set to "stop_error," and the element "reason" is set to an appropriate reason code.

When the latest FuelLoopReq message has the element "action" set to "stop" and fueling has not been completely stopped, the dispenser may transmit a FuelLoopRes message in which the element "status" is set to "stopping".

When the latest FuelLoopReq message has the element "action" set to "stop" and fueling has been completely stopped, the dispenser may transmit a FuelLoopRes message in which the element "status" is set to "stopped_requested".

When the mobility transmits a FuelLoopReq message in which the element "action" is set to "stop," and receives a FuelLoopRes message in which the element "status" is set to "stopping," the mobility may transmit another FuelLoopReq message in which the element "action" is set to "stop".

When the mobility receives a FuelLoopRes message and fueling is not finished, the mobility may transmit another FuelLoopReq message within a predetermined time duration (for example, MessageSequenceTimeout).

When a safety-critical event occurs, the mobility or the dispenser may immediately transmit an EmergencyReq message, stop the fueling procedure, and terminate the communication.

The above-described exemplary embodiments related to step S407 have been explained mainly with the mobility initiating each step and the dispenser responding. However, the spirit of the present disclosure is not limited thereto. In an alternative embodiment of the present disclosure, either the mobility or the dispenser may first transmit a message requesting the start of step S407, and the counterpart may respond to the request message, thereby executing step S407.

In step S407, a message transmitted by either one of the mobility or the dispenser may include a monitoring request related to the status of the hydrogen fueling procedure. The response message transmitted by the counterpart may include status information corresponding to the requested monitoring target.

The status and related parameters that may be subject to monitoring requests may include the parameter set exchanged in step S405. The status and related parameters that may be subject to monitoring requests may include the status and parameters of the mobility or the dispenser. The status and related parameters that may be subject to monitoring requests may include fueling status and/or related parameters of the mobility and/or the dispenser that change or remain unchanged due to the hydrogen fueling procedure.

The status that may be subject to monitoring requests may further include the status and/or information of the fueling procedure itself being performed from the dispenser to the mobility. For example, whether the fueling procedure is ongoing, paused, completely terminated, or if terminated, whether it is due to an error or due to achieving the intended goal (finished).

Referring again to FIG. 4, the purpose, preconditions, and postconditions of the safety check-out step (S408) may be illustrated by Table 24.

**[Table 24]**

| Type | Description |
|---|---|
| Use case name | UC-8: "Safety Check-out" |
| Objectives | Vehicle and Dispenser confirms that all the necessary safety conditions are met before the nozzle can be detached from the receptacle |
| Short Description | After the fuelling has been finished, the vehicle and dispenser ensure that it is absolutely safe for the user or operator to unplug the nozzle from the vehicle. The vehicle and dispenser repeatedly report their condition until the safety checks are all confirmed. This use case may be omitted if the fuelling protocol does not require such safety checks at the end. |
| Pre-conditions | Fuelling is finished. |
| Post-conditions | It is safe to unplug the nozzle from the receptacle. |

After fueling is finished and before terminating the session and unplugging the nozzle from the mobility, a safety check-out step (S408) may be performed to ensure that the mobility and the dispenser verify that safety conditions are satisfied. This step (S408) is optional but it may be strongly recommended that a dedicated safety check-out procedure be defined in the fueling protocol to ensure the desired level of safety in a precise and explicit manner.

The information exchange used in the safety check-out step may be used for diagnostic purposes and for determining accountability when safety-related events occur.

As described above, when the monitoring and control step (S407) and the related fueling procedure are successfully finished, the fueling protocol may perform the safety check-out step (S408).

Regardless of whether the safety check-out step is performed, a fueling protocol compliant with ISO 19885-2 may define a set of safety conditions to be confirmed between the mobility and the dispenser before unplugging the nozzle.

After receiving a FuelLoopRes message where "result" is set to "OK" and "status" is set to "finished" or a value prefixed with "stopped," if the fueling protocol supports safety check-out, the mobility may transmit, within a predetermined time duration (for example, MessageSequenceTimeout), a message requesting the start of the safety check-out step (S408) (for example, a SafetyCheckOutReq message) to the dispenser via a TLS channel.

If the TCP/TLS channel connection is released, the mobility may re-establish the TCP/TLS channel with the dispenser. The re-establishment procedure may be initiated through a TLS-resumption handshake using a NewSessionTicket received prior to sending the SafetyCheckOutReq message.

In an alternative embodiment, the message requesting the start of step (S408) may be transmitted by either the mobility or the dispenser to the counterpart. The counterpart may respond to the request message for the start of step (S408) and step (S408) may thus be executed.

According to an exemplary embodiment of the present disclosure, messages transmitted and received in the safety check-out step (S408) may be defined based on the contents of the respective fueling protocol specified in a standard such as ISO 19885-3.

According to an exemplary embodiment of the present disclosure, the messages transmitted and received in the safety check-out step (S408) may include a result type representing the processing outcome of the request message. The result type may include, for example, "OK" when successful, "FAILED" when unsuccessful, and "PENDING" otherwise.

When the mobility transmits a SafetyCheckOutReq message to the dispenser and confirms that all safety conditions are satisfied, the result value of the message may be set to "OK".

When the mobility transmits a SafetyCheckOutReq message to the dispenser and some safety conditions are not yet satisfied, the result value of the message may be set to "PENDING".

After receiving the SafetyCheckOutReq message, the dispenser may respond with a SafetyCheckOutRes message along with safety-check parameters within a MessageResponseTimeout time duration.

When the dispenser transmits a SafetyCheckOutRes message to the mobility and confirms that all safety conditions are satisfied, the result value of the message may be set to "OK".

When the dispenser transmits a SafetyCheckOutRes message to the mobility and some safety conditions are not yet satisfied, the result value of the message may be set to "PENDING".

If a SafetyCheckOutRes message in which the result value is set to "PENDING" is received, the mobility may transmit another SafetyCheckOutReq message to the dispenser within a MessageResponseTimeout time duration.

If a SafetyCheckOutReq message in which the result value is set to "PENDING" is received, the dispenser may transmit another SafetyCheckOutReq message to the mobility within a MessageResponseTimeout time duration.

When the mobility or the dispenser cannot confirm all safety conditions within a predetermined time (for example, UCSafetyCheckOutTimeout), an ErrNotifReq message may be transmitted with the "reason" field set to an appropriate error code.

In an alternative embodiment, either the mobility or the dispenser may transmit a request message indicating the start of the safety check-out step to the counterpart, and the counterpart may respond with a reply message to the request within a predetermined time duration.

According to an exemplary embodiment of the present disclosure, when a non-critical safety error is detected in the monitoring and control step (S407) and fueling is interrupted before fueling is completed, the fueling protocol may define a fallback mechanism that ensures backward compatibility among mutually supported mechanisms between the mobility and the dispenser and resume fueling based on the fallback mechanism to complete the fueling.

The fallback mechanism may be, for example, a non-communication fueling method.

In an alternative embodiment, when a non-critical safety error is detected in the monitoring and control step (S407) and fueling is interrupted before completion, the mobility and the dispenser may re-perform some or all of the communication protocol negotiation step (S403), the fueling protocol negotiation step (S404), and the fueling parameter negotiation step (S405).

In an alternative embodiment, the mobility and the dispenser may reduce the information exchanged during the process of re-performing some or all of the communication protocol negotiation step (S403), the fueling protocol negotiation step (S404), and the fueling parameter negotiation step (S405), by referring to interoperability information obtained during the discovery and pairing step (S401). For example, if communication conditions or fueling conditions indicate that a previously selected protocol cannot be maintained, some or all of steps (S403), (S404), and (S405) may be performed again excluding the previously selected protocol.

In an alternative embodiment, when a non-critical safety error such as a change in communication environment or fueling infrastructure is detected in the monitoring and control step (S407) and fueling is interrupted before completion, the mobility and the dispenser may re-perform some or all of the communication protocol negotiation step (S403), the fueling protocol negotiation step (S404), and the fueling parameter negotiation step (S405).

A change in communication environment may include the case where the communication channel becomes disconnected.

A change in communication environment may include the case where received data is not recognized, and may include the case where received data is in an unacceptable range.

A change in communication environment may include a case where the quality of communication performance does not meet the required level.

A change in communication environment may include a case where the integrity or precision of data exchanged through communication does not meet the required level.

A change in fueling infrastructure may include a case where fueling parameters on the mobility side change or remain unchanged based on control parameters for fueling on the dispenser side, but such change or retention of fueling parameters on the mobility side does not meet the required level.

Although some safety conditions checked or monitored in the safety check-in step (S406), the monitoring and control step (S407), and the safety check-out step (S408) are illustrated in Table 19, the following additional or supplementary items may also be considered.

Safety conditions may include elements related to the safety of both the mobility for hydrogen fueling (fueling) and the hydrogen fueling equipment or dispenser, and/or the coupling status of the nozzle and receptacle of both sides required for initiating hydrogen fueling.

On the hydrogen mobility side, pressure and temperature inside the hydrogen tank may further be included.

On the hydrogen station side, temperature inside cylinders, fueling pressure, and ambient temperature may be included.

Safety conditions on the connection and fueling path between both sides may include the nozzle-receptacle coupling status - i.e., whether it is coupled, the coupling condition, and leakage condition.

The nozzle-receptacle coupling status may include information indicating whether the status is appropriate and/or sufficient to perform the hydrogen fueling procedure.

In an alternative embodiment of Figure 4, when the safety check-in step (S406) performs a safety check including at least confirming conditions such as whether the nozzle and receptacle are coupled and the coupling status, the safety check-in step (S406) may be executed before the fueling parameter negotiation step (S405).

In an alternative embodiment of Figure 4, when the safety check-in step (S406) performs a safety check including at least confirming conditions such as whether the nozzle and receptacle are coupled and the coupling status, remaining safety elements not checked in the safety check-in step (S406) may be negotiated and checked in the fueling parameter negotiation step (S405).

In an alternative embodiment of Figure 4, when the safety check-in step (S406) performs a safety check including at least confirming conditions such as whether the nozzle and receptacle are coupled and the coupling status, remaining safety elements not checked in the safety check-in step (S406) may be monitored and checked in the monitoring and control step (S407). In this case, the safety elements may be monitored and checked in the monitoring and control step (S407) regardless of (or independent from) whether such safety elements are negotiated and checked in the fueling parameter negotiation step (S405).

In an alternative embodiment of Figure 4, a plurality of safety elements including the safety elements checked in the safety check-in step (S406) may be negotiated and checked in the fueling parameter negotiation step (S405).

In an alternative embodiment of Figure 4, a plurality of safety elements including the safety elements checked in the safety check-in step (S406) may be monitored and checked in the monitoring and control step (S407). In this case, the safety elements may be monitored and checked in the monitoring and control step (S407) regardless of (or independent from) whether such safety elements are negotiated and checked in the fueling parameter negotiation step (S405).

In an alternative embodiment of Figure 4, sharing, identifying, monitoring, updating, and/or utilizing interoperability and/or compatibility may be performed throughout the entire process.

For example, interoperability-related information shared between the mobility and the dispenser/station in the discovery and pairing step (S401) may be checked in the following steps (S402-S411) according to each situation, and may be updated with available interoperability information in each step or reconfirmed, depending on the embodiment.

For example, when ten combinations of interoperable available protocols (combinations of communication protocols and fueling protocols) between the mobility and the dispenser are identified in step (S401), some of the ten protocols may become incompatible or unavailable due to communication/system errors, communication/system environmental changes, or changes in fueling infrastructure in subsequent steps, reducing the number of available protocol combinations to fewer than ten. Such situations may be checked in the steps corresponding to each use case (S402-S411), and the interoperability information may be updated as available interoperability information, and each step may be executed based on the updated interoperability information.

For example, if during the process a temporarily available interoperable protocol combination A is determined to be incompatible or unavailable, another interoperable protocol may replace or fall back to allow the corresponding step to be performed.

For example, if multiple interoperable protocol combinations are identified in steps S401 to S403, and based on preference and priority, interoperable protocol combination A is selected as a result of the communication protocol negotiation, and later in step S404, due to communication/system environment changes, errors, and/or fueling environment changes, interoperable protocol combination A is identified as unavailable, then based on preference and priority, another interoperable protocol combination B may be selected or used as fallback as a result of the fueling protocol negotiation, and step S404 and subsequent steps may be performed accordingly.

In another similar embodiment, when multiple available interoperable protocol combinations are identified in steps S401 through S404, and interoperable protocol combination A is selected based on preference and priority as a result of the fueling protocol negotiation, if interoperable protocol combination A is determined to be unavailable in step S405 due to communication/system environment changes, errors, and/or fueling environment changes, another interoperable protocol combination B selected or used as fallback based on preference and priority may replace interoperable protocol combination A as a result of the communication protocol negotiation and the fueling protocol negotiation, and step S405 and subsequent steps may then be performed.

In another similar embodiment, when multiple available interoperable protocol combinations are identified in steps S401 through S406, and interoperable protocol combination A is selected based on preference and priority as a result of the communication protocol negotiation, fueling protocol negotiation, and fueling parameter negotiation, if interoperable protocol combination A is determined to be unavailable in step S407 due to communication/system environment changes, errors, and/or fueling environment changes, another interoperable protocol combination B selected or used as fallback based on preference and priority may replace interoperable protocol combination A as a result of the communication protocol negotiation, fueling protocol negotiation, and fueling parameter negotiation, and hydrogen fueling according to step S407 and subsequent steps may then be performed.

In another alternative embodiment, for example, when interoperable protocol combination A becomes temporarily unavailable in a step during the process and another interoperable protocol is substituted or used as fallback to perform that step, and later interoperable protocol combination A becomes available again in a subsequent step, interoperable protocol combination A may be adopted in the subsequent step based on re-negotiation or predetermined policy, and the subsequent step may then be performed.

For example, assume that interoperable protocol combination A is selected among multiple available interoperable protocol combinations in steps S401 through S406 based on preference and priority as a result of communication protocol negotiation, fueling protocol negotiation, and fueling parameter negotiation, and hydrogen fueling according to step S407 and subsequent steps is performed based on another interoperable protocol combination B that was selected or used as fallback after interoperable protocol combination A was determined to be unavailable in step S407 due to communication/system environment changes, errors, and/or fueling environment changes. In this case, if interoperable protocol combination A is later determined to be available again due to communication/system environment changes, errors, and/or fueling environment changes, interoperable protocol combination A may be restored via re-negotiation or a predetermined recovery process between the mobility and the dispenser/station.

In an alternative embodiment of Figure 4, when a previously selected most-preferred/priority interoperable protocol combination becomes incompatible or unavailable among interoperable protocol combinations available between the mobility and the dispenser, a substitute lower-priority protocol combination may be determined by searching combinations in which the same communication protocol remains unchanged while the fueling protocol is replaced, or by searching combinations in which the same fueling protocol remains unchanged while the communication protocol is replaced.

In an alternative embodiment of Figure 4, when generating first interoperability information by searching available protocol combinations in the discovery and pairing process (step S401), priority may be predetermined to favor cases where the communication protocol and fueling protocol match. For example, when the combination of communication protocol A1 and fueling protocol B1 is determined as the highest-priority/most-preferred combination, substitute combinations that maintain communication protocol A1 and include fueling protocols B2, B3, ... that coexist with communication protocol A1 may be pre-assigned higher priority as substitute combinations for the highest-priority/most-preferred combination. Alternatively, substitute combinations that maintain fueling protocol B1 and include communication protocols A2, A3, ... that coexist with fueling protocol B1 may be pre-assigned higher priority as substitute combinations for the highest-priority/most-preferred combination.

In an alternative embodiment of Figure 4, during execution of steps S403 through S409, the update process for the highest-priority/most-preferred interoperable protocol combination may be performed by re-negotiating some or all of steps S403 through S405.

In an alternative embodiment of Figure 4, during execution of steps S403 through S409, the update process for the highest-priority/most-preferred interoperable protocol combination may be performed by some or all of step S410 or step S411.

In an alternative embodiment of Figure 4, during execution of steps S403 through S409, the update process for the highest-priority/most-preferred interoperable protocol combination may pass through some or all of step S410 or step S411 while performing re-negotiation of some or all of steps S403 through S405.

In a communication method for hydrogen fueling according to an embodiment of the present disclosure, after the mobility, the dispenser, or the mobility and dispenser cooperatively determine the highest-priority/most-preferred interoperable protocol combination in step S401, the highest-priority/most-preferred interoperable protocol combination may be determined during execution of steps S403 through S409 (with assistance from steps S410 and S411). In this case, the communication method may further include performing at least one of a first process or a subsequent process of the first process based on a first communication protocol and a first fueling protocol. In this case, since the interoperable communication protocol and fueling protocol determined based on updated interoperability information may partially restrict mobility-side functions or partially restrict communication functions between the mobility and the dispenser, depending on circumstances the dispenser alone or the dispenser in a leading role may perform the hydrogen fueling process or subsequent processes. That is, when interoperability is downgraded or falls back, the dispenser may perform more roles than the mobility.

Referring back to FIG. 4, when fueling is successfully completed (finished) and optionally all safety conditions are confirmed, the mobility and the dispenser may perform the termination use case.

The purpose, preconditions, and postconditions of the termination step (S409) may be illustrated by Table 25 below.

**[Table 25]**

| Type | Description |
|---|---|
| Use case name | UC-9: "Termination" |
| Objectives | As the last step of fuelling, vehicle and dispenser finalizes the fuelling by exchanging information about fuelling results regarding fuelling performance and methods, and any reasons if the fuelling stopped unexpectedly. This use case also handles the house-keeping when a non-safety-critical problem occurred. |
| Short Description | After the fuelling has been finished and safety checks are confirmed, vehicle and dispenser exchanges some book-keeping information regarding the fuelling session. When a non-safety-critical problem occurred, this use case allows the vehicle and dispenser to exchange wrap-up information about the fuelling session before leaving. |
| Pre-conditions | The fuelling is finished and the nozzle is safe to unplug. Or a non-safety-critical problem occurred during any other use cases. |
| Post-conditions | Information about the fuelling session is stored and the fuelling session is completely finished. |

After receiving a SafetyCheckOutRes message in which the "Result" is set to "DONE," or after receiving a FuelLoopRes message in which the "status" is set to a value prefixed with "finished" or "stopped," if the safety check-out use case is omitted, the mobility may transmit a termination request message (e.g., "TerminateReq") to the dispenser.

Details regarding the termination request message (e.g., "TerminateReq") may be defined in each fueling protocol specification. For example, the parameters included in the TerminateReq message and exchanged between the mobility and the dispenser may be defined differently depending on the individual fueling protocol.

The element names included in the TerminateReq message may include tank_press, tank_temp, amount, soc, and reason, and may be illustrated by Table 26 below. Element names not shown in Table 26 may be specified according to each fueling protocol standard, for example, ISO 19885-3.

**[Table 26]**

| Element Name | Type | Semantics |
|---|---|---|
| tank_press | | Final tank pressure |
| tank_temp | | Final tank temperature |
| amount | | Optional:The amount of hydrogen that is fuelled. |
| soc | | Optional:The final state of charge from vehicle's measurement |
| reason | reasonType | Reason for termination from Vehicle's point of view. "finished" if dispenser indicated so. "stopped_user" if the user requested to stop. "complete" if the fuelling goal is achieved. "unknown" otherwise. Other reason code can be defined by fuelling protocol. |

When the dispenser receives the TerminateReq message from the mobility, the dispenser may respond with a termination response message (e.g., TerminateRes) within a predetermined time interval (e.g., MessageResponseTimeout).

Details regarding the termination response message (e.g., "TerminateRes") may be defined in each fueling protocol specification. For example, the parameters included in the TerminateRes message and exchanged between the mobility and the dispenser may be defined differently depending on the individual fueling protocol.

The element names included in the TerminateRes message may include aprr, duration, amount, soc, and result, and may be illustrated by Table 27 below. Element names not shown in Table 27 may be specified according to each fueling protocol standard, for example, ISO 19885-3.

**[Table 27]**

| Element Name | Type | Semantics |
|---|---|---|
| aprr | | Optional: Average Pressure Ramping Rate |
| duration | | Optional: Duration of the fuelling |
| amount | | Optional: The amount of hydrogen that is fuelled. |
| soc | | Optional: The final state of charge from dispenser's measurement |
| result | resultType | |

As an alternative exemplary embodiment, the message requesting the start of the termination step (S409) may be transmitted by either the mobility or the dispenser to the other party. In such a case, the other party may respond to the message requesting the start of the termination step (S409), whereby the termination step (S409) may be performed.

For successful fueling, communication shall provide the expected behaviors according to the protocol. Fueling behaviors shall remain within the acceptable range defined by the fueling protocol. However, in practice, various abnormal events may occur. Some errors may be minor and easily handled, while others may be unrecoverable and may prevent continuation of fueling.

In this specification, the term "error" may refer to incidents occurring during UC1 through UC9 (S401 through S409) or during hydrogen fueling that may interrupt the corresponding ongoing process.

In step (S410), conditions for non-safety-critical errors, exemplary error conditions, and corresponding responses may be specified.

Referring back to FIG. 4, the purpose, pre-conditions, and post-conditions of the error handling step (S410) may be illustrated by Table 28 below.

**[Table 28]**

| Type | Description |
|---|---|
| Use case name | UC-10: "Error Handling" |
| Objectives | This use case handles the situation when a non-safety-critical error occurred by terminating the fuelling procedure similar to normal terminations or abruptly stopping the communication. |
| Short Description | At any time during the fuelling, a non-safety critical error can occur. In this case, vehicle and dispenser stops the use case at the moment and then move to Termination use case (UC-9) to finish the fuelling procedure with both ends informed about the termination reasons. If further communication is not possible, the communication channel is dropped without further notification. |
| Pre-conditions | A non-safety critical error occurred and fuelling cannot be performed further. |
| Post-conditions | Vehicle and dispenser is informed about the error and stopped the fuelling. |

The non-safety-critical error conditions may include, for example, the following.

As communication errors, 1) cases in which communication is disconnected, 2) cases in which received data cannot be recognized due to an encoding or syntactic error, and 3) cases in which the received data is in an unacceptable range may be included.

As system errors, cases in which the dispenser or the mobility detects its own critical system error may be included.

As qualitative errors, 1) cases in which communication performance fails to satisfy the required level, and 2) cases in which the quality of data integrity or precision fails to satisfy the required level may be included.

When a non-safety-critical error occurs and further communication is impossible, the mobility and the dispenser may stop fueling immediately while taking safe steps, and may stop the communication to end the session.

When a non-safety-critical error occurs and fueling is interrupted while it is far from being completed, the fueling protocol may define a fallback mechanism, for example, by defining a non-communication fueling method.

When a non-safety-critical error is detected by the mobility and the communication channel is still operational, the mobility may transmit a TerminateReq message in which "action" is set to "stop" and "reason" is set to an appropriate reason code.

When a non-safety-critical error is detected by the dispenser and the communication channel is still operational, the dispenser may first stop fueling immediately and may transmit a TerminateReq message in which "action" is set to "stop" and "reason" is set to an appropriate reason code.

The fueling protocol may define error conditions according to the protocol, and may provide prescribed response procedures including detection criteria, notification, termination procedures, and fallback mechanisms.

Referring back to FIG. 4, the purpose, pre-conditions, and post-conditions of the emergency handling step (S411) may be illustrated by Table 29 below.

**[Table 29]**

| Type | Description |
|---|---|
| Use case name | UC-11: "Emergency Handling" |
| Objectives | Define safety-critical conditions that warrant an urgent response and prescribe the response procedure to avoid safety-critical incidents. |
| Short Description | For safe fueling, communication must exhibit expected behaviors according to the protocol and the fueling behavior must stay within the safe range of the fueling protocol. However, it is possible that something goes wrong and the fueling system approaches a critical condition that the system must avoid at all cost. In this use case, we define safety-critical emergency conditions and possible reactions, and provide exemplary cases to consider. |
| Pre-conditions | A safety-critical problem occurred during any moment of fuelling and an urgent response is necessary. |
| Post-conditions | Safety-critical incidents are avoided or minimized, and the fuelling session has been stopped completely. |

The fueling protocol may define emergency conditions according to the protocol, and may provide prescribed response procedures, including detection criteria, notification, termination procedures, and fallback mechanisms, to avoid entering a detrimental situation by all means.

When a safety-critical situation is detected by either the mobility or the dispenser, the necessary actions to prevent catastrophic events may be executed immediately. In addition, if possible, an EmergencyNotif message may be transmitted with information regarding the event, and the communication may be closed.

When the mobility or the dispenser receives an EmergencyNotif message, it may respond immediately according to the action indicated in the message and may close the communication without undue delay.

The EmergencyNotif message may be a TLS or DTLS message depending on the communication technology used.

For the criticality of the message and the efficiency of delivery, the fueling protocol may not allow modification of the message format of the EmergencyNotif message.

The element names included in the EmergencyNotif message may include class, type, action, and the content may be illustrated in Table 30 below. Elements not shown in Table 30 may be specified by each fueling protocol specification, such as ISO 19885-3. For example, additional emergency reason codes and action codes may be defined for each protocol.

**[Table 30]**

| Element Name | Type | Semantics |
|---|---|---|
| class | unsignedByte | Optional: Severity class of this emergency, from 1 to 5 with decreasing severity. |
| type | unsignedByte | Emergency reason code by number defined in Table XYZ |
| action | unsignedByte | Optional: Pre-defined action code necessary or recommended to be performed by the receiving party |

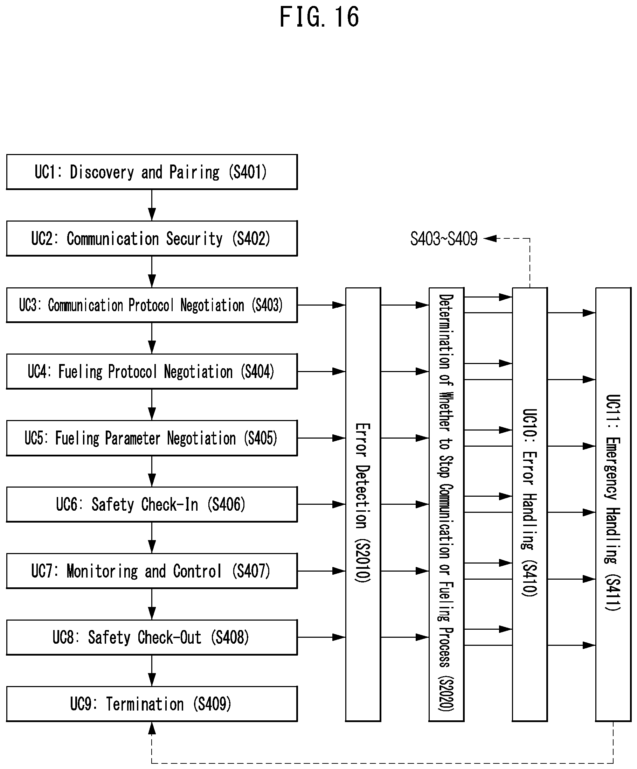

FIG. 16 is an operational flowchart illustrating an alternative embodiment of FIG. 4.

As shown in FIG. 16, the relationship between steps S2010 and S2020 that are added to steps S401 to S409 of FIG. 4 is depicted.

As shown in FIG. 4 and FIG. 16 together, a communication method for hydrogen fueling performed by a communication device of hydrogen fuel mobility according to an embodiment of the present disclosure may include: detecting an error occurring during a communication process (steps S403 to S406 or steps S408 to S409) for preparing hydrogen fueling between a dispenser fueling hydrogen to mobility and the mobility, or during a process of the dispenser fueling hydrogen to the mobility (step S407) (step S2010; may be performed as part of steps S403 to S409); determining whether to stop the communication process (steps S403 to S406 or steps S408 to S409) or the hydrogen fueling process (step S407) in response to the detected error (step S2020; may be performed as part of step S410 or step S411); and performing a subsequent process defined based on the detected error (not shown as a separate step; performed as part of steps S403 to S411).

The following embodiments may be performed based on interoperability or compatibility information shared between the mobility and the dispenser in step S401 of FIG. 4. In particular, the negotiation and determination processes of a communication protocol, fueling protocol, and fueling parameters in steps S403 to S405 may be performed within the scope of interoperability or compatibility information.

Although interoperability or compatibility information is identified and shared in step S401, it may be re-identified according to current circumstances in subsequent processes and shared in an updated state.

In the communication method for hydrogen fueling performed by the communication device of mobility according to an embodiment of the present disclosure, determining whether to stop the communication process or hydrogen fueling process in response to the detected error (step S2020; may be performed as part of step S410 or step S411) may include classifying the detected error as either a safety-critical error or a non-safety-critical error.

The process of classifying the detected error as a safety-critical error may be performed by step S2020, or as part of step S411 of FIG. 4, and if the detected error is classified as a safety-critical error, the subsequent process may be performed by a separate step (steps S403 to S409) or as part of step S411 of FIG. 4. In this case, the error classified as a safety-critical error may be treated as an emergency.

In the communication method for hydrogen fueling performed by the communication device of mobility according to an embodiment of the present disclosure, determining whether to stop the communication process or hydrogen fueling process in response to the detected error (step S2020) may further include classifying the detected non-safety-critical error as a communication error, system error, or qualitative error (performed as part of step S410).

In the communication method for hydrogen fueling performed by the communication device of mobility according to an embodiment of the present disclosure, performing a subsequent process defined based on the detected error may include performing at least a portion of an emergency handling process (step S411) if the detected error is a safety-critical error.

In the communication method for hydrogen fueling performed by the communication device of mobility according to an embodiment of the present disclosure, determining whether to stop the communication process or hydrogen fueling process in response to the detected error (step S2020) may further include determining whether to replace a first fueling protocol used in the communication process or hydrogen fueling process with a fallback second fueling protocol when the detected error is a non-safety-critical error.

In the communication method for hydrogen fueling performed by the communication device of mobility according to an embodiment of the present disclosure, performing a subsequent process defined based on the detected error may include transmitting a message including whether the communication process or hydrogen fueling process is stopped to the dispenser.

Various types of incidents occurring during execution of steps S403 to S409 may be detected by the mobility or the dispenser (step S2010). The detected incidents may be classified as errors if they satisfy predetermined conditions (steps S2010 and S2020). If the detected error is a non-safety-critical error, it may be processed by the error handling process of step S410 or by another subsequent step; if the error is a safety-critical error, it may be processed by the emergency handling process of step S411.

In an embodiment of the present disclosure, criteria for determining whether the detected error is to be classified as a non-safety-critical error or a safety-critical error (emergency) may be predefined by the fueling protocol of steps S403 to S409, and the detected error may be classified by each of steps S403 to S409 at the time the error is detected.

In an alternative embodiment of the present disclosure, after an error is detected, it may be passed to the processes of step S410 and/or step S411, and each of steps S410 and/or step S411 may classify whether the detected error is a non-safety-critical error or a safety-critical error (emergency). That is, step S410 may classify whether the error is a non-safety-critical error and, if it is a non-safety-critical error, classify whether it is a communication error, system error, or qualitative error. Step S411 may classify whether the error is a safety-critical error.

Step S410 may classify the detected error and may determine whether to stop the fueling process based on the classification result or the state of the error. If it is determined not to stop the fueling process and the fueling process is continued using a fallback fueling protocol based on updated interoperability or compatibility information, then, as a result of step S410, the necessary step among steps S403 to S409 for continuing the fueling process may be performed again.

Additionally, in step S410 or step S411, when the cause of the error is removed and the system is restored to a normal state, the mobility or dispenser may, individually or cooperatively, return to any step among steps S403 to S409 or its next step-whichever was being performed before the error occurred-and continue the hydrogen fueling process and communication process.

A communication method for hydrogen fueling performed by a communication device of a dispenser supplying hydrogen fuel to hydrogen mobility according to an embodiment of the present disclosure may include detecting an error occurring during a communication process (steps S403 to S406 or steps S408 to S409) for preparing hydrogen fueling between the dispenser and the mobility, or during the process of the dispenser supplying hydrogen to the mobility (step S407) (step S2010; may be performed as part of steps S403 to S409); determining whether to stop the communication process (steps S403 to S406 or steps S408 to S409) or the hydrogen fueling process (step S407) in response to the detected error (step S2020; may be performed as part of step S410 or step S411); and performing a subsequent process defined based on the detected error (performed as part of steps S403 to S411).

In the communication method for hydrogen fueling performed by the communication device of the dispenser according to an embodiment of the present disclosure, determining whether to stop the communication process or hydrogen fueling process in response to the detected error (step S2020; may be performed as part of step S410 or step S411) may include classifying the detected error as either a safety-critical error or a non-safety-critical error.

In the communication method for hydrogen fueling performed by the communication device of the dispenser according to an embodiment of the present disclosure, determining whether to stop the communication process or hydrogen fueling process in response to the detected error (step S2020) may further include classifying the detected non-safety-critical error as a communication error, system error, or qualitative error (may be performed as part of step S410).

In the communication method for hydrogen fueling performed by the communication device of the dispenser according to an embodiment of the present disclosure, performing a subsequent process defined based on the detected error may include performing at least a portion of an emergency handling process (step S411) if the detected error is a safety-critical error.

In the communication method for hydrogen fueling performed by the communication device of the dispenser according to an embodiment of the present disclosure, determining whether to stop the communication process or hydrogen fueling process in response to the detected error (step S2020) may further include determining whether to replace a first fueling protocol used in the communication process or hydrogen fueling process with a fallback second fueling protocol when the detected error is a non-safety-critical error.

In the communication method for hydrogen fueling performed by the communication device of the dispenser according to an embodiment of the present disclosure, performing a subsequent process defined based on the detected error may include, when the first fueling protocol used in the communication process or hydrogen fueling process is replaced with the second fueling protocol, performing the hydrogen fueling process based on the second fueling protocol.

In the case of a communication error, the dispenser may select a second fueling protocol by applying a predefined fallback rule to the first fueling protocol or a pre-defined fallback stored rule, and may supply hydrogen fuel based on the second fueling protocol.

In the case of a communication error, the mobility or the dispenser may stop the session when it is determined that the session must be stopped.

In the case of a system error, the mobility or the dispenser may stop the session when the session needs to be stopped. In this case, the mobility or the dispenser may stop the session based on the detected error and transmit a message to the counterpart including a stop action and a reason code corresponding to the reason.

In an alternative embodiment, when the error is a qualitative error, a fallback fueling protocol based on a limited communication protocol or communication environment may be selected using updated interoperability or compatibility information shared between the mobility and the dispenser, and hydrogen fueling may be performed based on the selected fueling protocol.

In another alternative embodiment, when the error is a qualitative error, a different fueling protocol may be selected while maintaining the communication protocol between the mobility and the dispenser. In yet another alternative embodiment, a different communication protocol may be selected while maintaining the fueling protocol between the mobility and the dispenser.

In another alternative embodiment, when the error is a qualitative error, the mobility and the dispenser may perform renegotiation to select a new combination of communication protocol and fueling protocol. In this case, a portion of steps S403 to S405 may be performed again for renegotiation, or the renegotiation may be performed within step S410.

In another alternative embodiment, even when the error is an emergency and communication is still available, communication may be minimized and subsequent processes may be carried out. The mobility or the dispenser may fall back the communication protocol and fueling protocol.

In another alternative embodiment, when the error is an emergency, stopping fueling and communication may be prioritized.

In the communication method for hydrogen fueling performed by the communication device of the dispenser according to an embodiment of the present disclosure, performing a subsequent process defined based on the detected error may include transmitting a message to the mobility, the message including whether the communication process or the hydrogen fueling process is to be stopped.

In the communication method for hydrogen fueling performed by the communication device of the dispenser according to an embodiment of the present disclosure, when the message indicating whether to stop the communication process or hydrogen fueling process includes stopping, the message may further include a reason code corresponding to an appropriate reason for the stop.

In an alternative embodiment of the present disclosure, in the communication method for hydrogen fueling performed by the communication device of the mobility and/or dispenser, the severity of the error may be determined based on the available UCDC level of the communication or fueling process associated with the detected error. Further, whether to stop fueling may be determined based on the UCDC level. This process of determining the severity of the error and/or whether to stop fueling based on the UCDC level may be applied when the error is a qualitative error. However, such an embodiment does not limit the scope of the invention.

In the embodiments of FIG. 4 and FIG. 16, steps S2010, S2020, S410, and/or S411 are illustrated in relation to steps S403 to S409. In an alternative embodiment of the present disclosure, steps S2010 and S2020 may detect incidents occurring during steps S401 to S409 or during the fueling process, determine whether the incidents are errors, and classify the errors. Furthermore, in another alternative embodiment, after steps S2010 and S2020 and after passing through steps S410 and S411 as part of a separate process, a subsequent process may be performed or, if the error is resolved, one of steps S401 to S409 may be resumed to continue the existing or next process.

That is, steps S2010 and S2020 may detect incidents, determine whether the incidents are errors, detect errors, or classify errors occurring in step S401 - UC1: Discovery and Pairing, step S402 - UC2: Communication Security, step S403 - UC3: Communication Protocol Negotiation, step S404 - UC4: Fueling Protocol Negotiation, step S405 - UC5: Fueling Parameter Negotiation, step S406 - UC6: Safety Check-In, step S407 - UC7: Monitoring and Control, step S408 - UC8: Safety Check-Out, step S409 - UC9: Termination, or in parallel hydrogen fueling processes.

Additionally, after the error is classified and handled in step S410 or S411, the process may return to steps S401 to S409 or to a parallel fueling process.

Additionally, after the error is handled and resolved, the system may return to the step being executed before the error occurred or its next step to continue execution among steps S401 to S409 or the parallel fueling process.

In an alternative embodiment, criteria for determining whether the error is safety-critical may include determining whether the detected incident before/during/after fueling may cause damage to facilities and/or human life or induce fire, explosion, leakage, or similar hazardous conditions.

In the case of a safety-critical error, communication and fueling may be stopped and/or terminated. In an alternative embodiment, even when the error is safety-critical, if communication remains available or fueling is still possible, or if fueling must continue (for reasons such as evacuation from a hazardous area or transport of a patient), fueling may continue.

In the case of a non-safety-critical error, communication or fueling may be stopped or may continue based on factors such as the criticality/severity of the error, the available communication environment, available fueling protocols, the UCDC level, or the need for communication or fueling.

In the above embodiments, the continuous monitoring of interoperability, updating interoperability information, and/or updating the communication/fueling protocol combination have been described primarily in embodiments where one of the mobility or dispenser performs such processes; however, the detailed implementation of these processes may be performed by either the mobility or the dispenser, and may also be performed cooperatively. In an alternative embodiment of the present disclosure, part of the interoperability monitoring, interoperability update, and/or communication/fueling protocol update process may be performed primarily by the mobility and another part may be performed primarily by the dispenser.

Additionally, error detection may be performed by either the mobility or the dispenser, and the entity that detects the error may transmit a message to the counterpart including information such as error detection, the detected error, stop of communication and fueling based on the error, or a reason code corresponding to the reason for stopping.

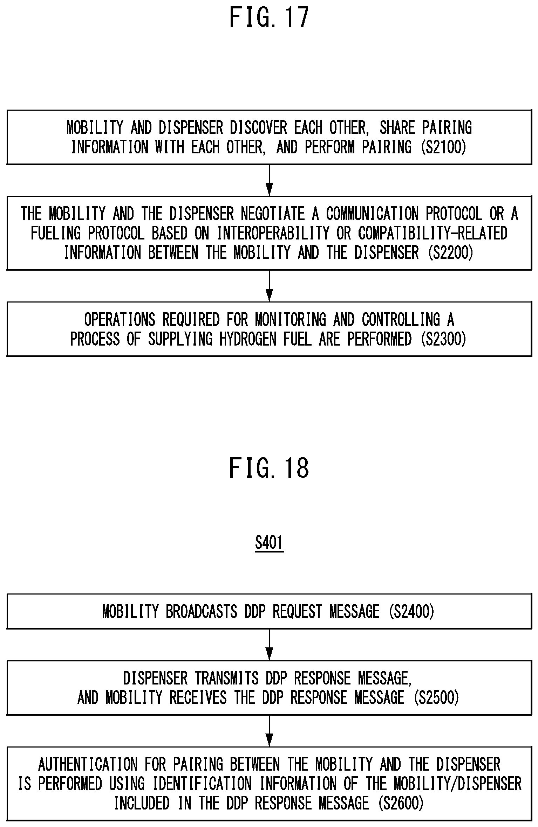

FIG. 17 is a flowchart illustrating a communication method for hydrogen fueling according to another embodiment of the present disclosure.

As shown in FIGS. 16 and 17 together, a communication method for hydrogen fueling performed by a communication device of hydrogen-fueled mobility may include: discovering a dispenser that supplies hydrogen fuel to the mobility, sharing pairing information between the mobility and the dispenser, and performing pairing between the mobility and the dispenser (S2100); negotiating a communication protocol or fueling protocol between the mobility and the dispenser based on interoperability or compatibility information shared between them for the hydrogen fueling process performed by the dispenser to the mobility (S2200); and transmitting information required for monitoring and control of the fueling process performed based on the fueling protocol to the dispenser (S2300). The operations performed during the pairing step (S2100) may include part or all of the operations of step S401 of FIGS. 4 and 16. The operations performed for monitoring and control may include part or all of the operations of step S407 of FIGS. 4 and 16. The operations performed by the dispenser in step S407 and/or the operations performed by the mobility in step S407 may be performed in step S2300.

The communication method for hydrogen fueling according to an embodiment of the present disclosure may further include, after performing the pairing step (S2100), establishing a secure channel between the mobility and the dispenser (refer to step S402 of FIGS. 4 and 16) for negotiating a communication protocol or fueling protocol.

The communication method for hydrogen fueling according to an embodiment of the present disclosure may further include, after negotiating the communication protocol or fueling protocol (S2200), performing a check-in step (refer to step S406 of FIGS. 4 and 16) to verify whether one or more first necessary safety conditions are met before the dispenser supplies hydrogen to the mobility, and performing a check-out step (refer to step S408 of FIGS. 4 and 16) to verify whether one or more second necessary safety conditions are met after hydrogen fueling is completed and before the nozzle is disconnected from the mobility.

According to an alternative embodiment of the present disclosure, the first and/or second necessary safety conditions may include the connection state between the nozzle and the receptacle, the sealing condition of the connection point, the temperature, pressure, or remaining state of charge (SoC) of the hydrogen storage tank on the mobility or dispenser side.

The communication method for hydrogen fueling according to an embodiment of the present disclosure may further include detecting and handling a non-safety-critical error occurring during negotiation of the communication protocol or fueling protocol (S2200) or during transmission of information required for monitoring and control to the dispenser (S2300) (refer to steps S2010 and S410 of FIG. 16); and detecting and handling an emergency requiring termination of the interaction between the dispenser and the mobility occurring during negotiation of the communication protocol or fueling protocol (S2200) or during transmission of information required for monitoring and control to the dispenser (S2300) (refer to steps S2020 and S411 of FIG. 16).

The step (S2200) of negotiating a communication protocol or fueling protocol in the communication method for hydrogen fueling according to an embodiment of the present disclosure may include: negotiating a communication protocol between the mobility and the dispenser (refer to step S403 of FIGS. 4 and 16); negotiating a fueling protocol between the mobility and the dispenser based on the communication protocol (refer to step S404 of FIGS. 4 and 16); and negotiating fueling parameters between the mobility and the dispenser based on the fueling protocol (refer to step S405 of FIGS. 4 and 16).

In the step (S2200) of negotiating a communication protocol or fueling protocol in the communication method for hydrogen fueling according to an embodiment of the present disclosure, the communication protocol or fueling protocol information transmitted between the dispenser and the mobility may include a protocol name, an index, a version, a priority, or a preference.

In the communication method for hydrogen fueling according to an embodiment of the present disclosure, the pairing information shared between the mobility and the dispenser in the pairing step (S2100) may include interoperability or compatibility-related information between the mobility and the dispenser.

In the communication method for hydrogen fueling according to an embodiment of the present disclosure, interoperability- or compatibility-related information between the mobility and the dispenser may be updated based on state information when the step (S2200) of negotiating a communication protocol or fueling protocol or the step (S2300) of transmitting information required for monitoring and control to the dispenser is performed, and the updated interoperability- or compatibility-related information may be used when performing the step (S2200) of negotiating a communication protocol or fueling protocol or the step (S2300) of transmitting information required for monitoring and control to the dispenser.

In the communication method for hydrogen fueling according to an embodiment of the present disclosure, when a non-safety-critical error occurring during the step (S2200) of negotiating a communication protocol or fueling protocol is detected (refer to S2010 and S410 of FIG. 16), the method may further include performing part or all of the step (S2200) of negotiating a communication protocol or fueling protocol again.

In the step (S407) of transmitting information required for monitoring and control to the dispenser in the communication method for hydrogen fueling according to an embodiment of the present disclosure, the information transmitted from the mobility to the dispenser may be determined based on whether the fueling protocol allows bidirectional communication between the mobility and the dispenser as the communication protocol.

A communication method for hydrogen fueling performed by a communication device of a dispenser supplying hydrogen fuel to a hydrogen-fueled mobility according to an embodiment of the present disclosure may include: discovering the mobility, sharing pairing information between the mobility and the dispenser, and performing pairing between the mobility and the dispenser (S2100); negotiating a communication protocol or fueling protocol between the mobility and the dispenser based on interoperability- or compatibility-related information shared between the mobility and the dispenser for the fueling process performed by the dispenser to the mobility (S2200); and monitoring and controlling the fueling process performed by the dispenser to the mobility based on the fueling protocol (S2300).

The communication method for hydrogen fueling performed by a communication device of a dispenser according to an embodiment of the present disclosure may further include, after performing the pairing step (S2100), establishing a secure channel between the mobility and the dispenser (S402) for negotiating a communication protocol or fueling protocol.

The communication method for hydrogen fueling performed by a communication device of a dispenser according to an embodiment of the present disclosure may further include, after the step (S2200) of negotiating a communication protocol or fueling protocol, performing a check-in step (S406) to verify whether one or more first necessary safety conditions between the mobility and the dispenser are satisfied before the dispenser supplies hydrogen fuel to the mobility, and performing a check-out step (S408) to verify whether one or more second necessary safety conditions between the mobility and the dispenser are satisfied after the fueling process and before the nozzle is disconnected from the mobility.

A communication method for hydrogen fueling performed by a communication device of a dispenser according to an embodiment of the present disclosure may include: detecting and handling a non-safety-critical error occurring while the step (S2200) of negotiating a communication protocol or fueling protocol or the step (S2300, S407) of monitoring and controlling the process in which the dispenser supplies hydrogen fuel to the mobility is performed (S2010 and S410); and detecting and handling an emergency situation occurring while the step (S2200) of negotiating a communication protocol or fueling protocol or the step (S2300, S407) of monitoring and controlling the process in which the dispenser supplies hydrogen fuel to the mobility is performed, wherein the emergency situation requires stopping the interaction between the dispenser and the mobility (S2020 and S411).

The step (S2200) of negotiating a communication protocol or fueling protocol in the communication method for hydrogen fueling performed by the communication device of the dispenser according to an embodiment of the present disclosure may include: negotiating a communication protocol between the mobility and the dispenser (S403); negotiating a fueling protocol between the mobility and the dispenser based on the communication protocol (S404); and negotiating fueling parameters between the mobility and the dispenser based on the fueling protocol (S405).

In the communication method for hydrogen fueling according to an embodiment of the present disclosure, as part of step S401 of FIG. 4, step S401 of FIG. 16, and step S2100 of FIG. 17, a step of checking interoperability- or compatibility-related information between the mobility and the dispenser based on pairing information may be included.

The method illustrated in FIG. 17 may be performed by the mobility or by the dispenser, or may be performed through cooperation between the mobility and the dispenser.

Although the entity communicating with the mobility is described as the dispenser in the embodiment shown in FIG. 17, a communication device of the dispenser or station may communicate with the mobility alone or in cooperation.

For example, multiple wireless LAN access points (APs) may be deployed in the station, where some APs are assigned to the dispenser, while other APs may participate in communication with the mobility without being directly assigned to the dispenser.

Step S2100 may include a process of sharing pairing-related information between the mobility and the dispenser (or station) using wireless communication, and discovering each other based on the information.

Step S2100 may be a process of verifying whether pairing between the mobility and the dispenser has been properly and/or correctly achieved. In this case, the entity performing pairing verification may be both the mobility and the dispenser (station), or one of them.

Based on step S2100 and subsequent pairing information (including interoperability and compatibility information within the pairing information), the dispenser and the mobility may perform subsequent processes related to communication protocol or fueling protocol for supplying hydrogen fuel to the mobility by transmitting and receiving at least one message. This process may correspond to step S2200 of FIG. 17 and steps S403 to S405 of FIG. 4 and/or FIG. 16.

According to an embodiment of the present disclosure, the hydrogen-fueled mobility and the dispenser/station may discover each other, check compatibility, and verify whether pairing is properly and/or correctly performed, thereby supporting the initiation of the hydrogen fueling process and shortening the process time before the fueling process begins.

Further, according to an embodiment of the present disclosure, during the discovery and pairing process, standardized data fields such as a Vendor-Specific Element (VSE) may be used, allowing the hydrogen-fueled mobility and dispenser/station to provide information regarding their capabilities and communication and/or fueling protocols to the other party.

In this case, according to an embodiment of the present disclosure, interoperability and compatibility information required in subsequent processes may be shared with the other party, thereby shortening the process time before the hydrogen fueling process begins.

In the step (S2100) of discovering the dispenser, a message transmitted and received between the dispenser and the mobility may include a Vendor Specific Element (VSE) data field, and the VSE data field may include at least a portion of pairing-related information.

The VSE data field may include, as at least a portion of pairing-related information, a standard supported by the dispenser or mobility; a version of the standard; a fueling protocol supported by the dispenser or mobility; a communication protocol supported by the dispenser or mobility; or identifier information for pairing of the dispenser or mobility.

The standard supported by the dispenser or mobility may be, for example, a known standard such as ISO 19885, or may include whether a specific standard is supported. The version of the standard may refer to a version of a specific standard.

For example, the VSE may indicate that the mobility or dispenser is an ISO 19885 device, and may include interoperability information including a list of supported communication/fueling protocols.

Additionally, identifier (ID) information for pairing may be added to the VSE data field. The pairing ID may be used for pairing between the mobility and the dispenser in step S2100.

The Vendor Specific Element (VSE) data field may be added to beacon, probe request/response, association request (Assoc Req), or reassociation request (Reassoc Req) messages.

In steps S2100 and S2200, wireless communication technologies such as WLAN may be used. Pairing information and/or interoperability/compatibility information may be shared between the mobility and the dispenser/station using the Vendor Specific Element (VSE) data field.

The pairing information may include positional or precise positioning information of the dispenser. Meanwhile, additional pairing information may also be performed through a fueling cable between the mobility and the dispenser.

The pairing information may be exchanged using additional communication technologies such as cable, NFC, RFID, or barcode rather than WLAN. In such a case, short-range communication technology may support precise location measurement and positioning.

The pairing check/verification process may be performed as one-way pairing. In the case of one-way pairing, the mobility may check the dispenser. Depending on the embodiment, the dispenser may check the mobility, or both sides may check each other.

Although the above embodiment illustrates that the message includes a communication protocol list, in another embodiment of the present disclosure, the message may include a fueling protocol list or fueling parameters. The communication protocol list may also be exchanged in association with a supported fueling protocol list.

In this case, the first message may refer to a message transmitted based on wireless communication technology by at least one wireless communication entity (2310, 2320, 2330). For example, in the case of Bluetooth-based communication, the message may be transmitted in the form of a beacon message, and in the case of WLAN-based communication, the message may be transmitted in a form permitted by WLAN communication. In the embodiments of the present disclosure, the communication technology on which the first message depends is not limited to a specific communication medium.

In the communication method for hydrogen fueling performed by a communication device of the hydrogen-fueled mobility according to an embodiment of the present disclosure, interoperability or compatibility information between the dispenser and the mobility may include: whether bidirectional communication between the dispenser and the mobility is supported; whether sharing of measurement data through bidirectional communication between the dispenser and the mobility is supported; whether the measurement data can be used for control or management of the process in which the dispenser supplies hydrogen fuel to the mobility; or whether fallback or alternative protocols for a communication protocol or fueling protocol can be determined based on a change in communication environment between the dispenser and the mobility during the process in which the dispenser supplies hydrogen fuel to the mobility.

In an alternative embodiment of FIG. 17, items identified in the communication protocol list supported by the dispenser or mobility may be used to guide the scope of commonly supported fueling protocols depending on whether bidirectional communication is supported between the dispenser and the mobility.

In an alternative embodiment of FIG. 17, whether real-time measurement data (actual measurement data from the dispenser side or mobility side) can be shared through bidirectional communication between the dispenser and the mobility may be shared as interoperability/compatibility information.

In an alternative embodiment of FIG. 17, whether real-time measurement data can be used for control or management of the fueling protocol for the process in which hydrogen is fueled from the dispenser to the mobility may be shared as interoperability/compatibility information.

In an alternative embodiment of FIG. 17, whether a situation such as UC10 or UC11 occurs based on real-time measurement data may be shared between the mobility and the dispenser. In this case, fallback of interoperability/compatibility information may be determined based on whether bidirectional communication is supported, whether real-time measurement data can be shared, or whether real-time measurement data can be utilized. In addition to fallback, an alternative communication/fueling protocol or a secondary communication/fueling protocol may be selected, and the hydrogen fueling process may be performed based on the selected protocol, or may be terminated depending on circumstances.

In an embodiment of the present disclosure, specific details of a hydrogen fueling protocol may be identified in advance during the pairing and discovery step (S401), thereby supporting the subsequent agreement process such as protocol negotiation (S403 to S405) and additionally shortening the negotiation process.

In an embodiment of the present disclosure, when a situation corresponding to UC10 or UC11 occurs, the overall success likelihood of the hydrogen fueling process may be improved and the time required for the hydrogen fueling process may be reduced by efficiently and rapidly processing the response procedure using the interoperability/compatibility information shared in S401.

FIG. 18 is an operational flowchart illustrating an embodiment of the step S401 of the communication method for hydrogen fueling according to an embodiment of the present disclosure.

The communication method for hydrogen fueling according to an embodiment of the present disclosure is performed by a communication device of a hydrogen fueled mobility and is a communication method for hydrogen fueling. The method may include broadcasting a Dispenser Discovery Protocol (DDP) request message via a communication network including a dispenser configured to supply hydrogen fuel to the mobility (S2400); receiving, from the dispenser, a DDP response message including identification information of the dispenser on the communication network (S2500); and performing authentication for pairing between the mobility and the dispenser using the dispenser identification information included in the DDP response message (S2600).

In an embodiment of the present disclosure, the communication method for hydrogen fueling performed by the communication device of the hydrogen fueled mobility may further include, prior to the step of broadcasting the DDP request message (S2400), determining an IP address of the mobility to be used in the communication network including the dispenser and connecting the mobility to the communication network via a communication channel based on the IP address of the mobility.

In this case, in the process of determining the IP address of the mobility, the IP address may be determined by the communication network and assigned to the mobility; alternatively, in another embodiment, the mobility may select one available IP address among available IP addresses in the communication network and assign it to itself. In this case, the process of determining the IP address of the mobility may be performed cooperatively by the communication network side and/or the mobility, and the technical idea of the present disclosure is not limited thereby.

In an alternative embodiment of the present disclosure, after a Layer 1/2 connection is established in step S401, the mobility may join the network of the dispenser (the network to which the dispenser belongs or a network managed by an FSO (Fueling Station Operator) or FSMS (Fueling Station Managing System) including the dispenser and other surrounding dispensers). In this case, the mobility may join the network by assigning or receiving an IP address. In another embodiment, after joining the network, the mobility may announce connection information or identification information of the mobility.

The mobility and the dispenser may support IPv6 as defined in IETF RFC 8200 and 8504.

After the mobility activates a data-link with the network to which the dispenser belongs (communication channel is successfully discovered, connected, and paired), the mobility may join the network by obtaining or assigning its own IP address from the communication network as defined in IETF RFC 4291, 4861, 4862, 4429, and 7527. In this case, the process of connecting or pairing the mobility with the communication network may refer to a process different from the pairing process between the mobility and the dispenser.

In an alternative embodiment of the present disclosure, after the mobility receives an IPv6 address, the mobility may announce the mobility's IP address and TCP/UDP port numbers based on the Dispenser Discovery Protocol (DDP).

In the communication method for hydrogen fueling performed by the communication device of the mobility according to an embodiment of the present disclosure, the IP address of the mobility may be generated based on a random number.

In the communication method for hydrogen fueling performed by the communication device of the mobility according to an embodiment of the present disclosure, when the IPv6 address is exposed or shared with the dispenser, the mobility may generate the IPv6 address using a method defined in, for example, RFC 3041 in order to avoid exposing a permanent MAC address of the mobility.

In the communication method for hydrogen fueling performed by the communication device of the mobility according to an embodiment of the present disclosure, when the IPv6 address is exposed or shared with the dispenser, the mobility may generate the IPv6 address based on a random number using a method defined in, for example, RFC 3041 in order to avoid exposing a permanent MAC address of the mobility.

To perform the DDP protocol, the mobility may broadcast a DDP request message (DDPRequest message) via the communication network including the dispenser.

In this case, the DDP request message may include or may not include identification information of the mobility, and may be broadcast using predetermined information (for example, a TCP port number, a UDP port number, etc.).

For example, the message may be broadcast using a link-local multicast address "0xff02::1" on port number 19885.

An embodiment in which the DDP request message is implemented based on XML may be illustrated in Table 31 below.

**[Table 31]**

| |
|---|
| ```
 DDPRequest = {
  "pairing_id" : <vehicle's pairing ID> (optional)
 }
``` |

The dispenser may open UDP port 19885 and may be prepared to receive a subsequent message transmitted from the mobility. In this case, a pairing ID of the mobility may be included in the initial DDP request message.

An embodiment in which the DDP response message is implemented based on XML may be illustrated in Table 32 below.

**[Table 32]**

| |
|---|
| ```
 DDPResponse = {
  "IPaddress" : <dispenser IP address>,
  "TCPPort": <dispenser's TCP port number>,
  "UDPPort": <dispenser's UDP port number>
  "pairing_id" : <dispenser's pairing ID> (optional)
 }
``` |

In an alternative embodiment, pairing IDs of the mobility and dispenser may be shared with the counterpart using a separate procedure within the DDP protocol other than the DDP request message or the DDP response message, and may be used for an authentication process for pairing.

In a hydrogen fueling communication method performed by a communication apparatus of a hydrogen-fueled mobility according to an alternative embodiment of the present disclosure, identification information of the mobility included in a DDP request message or in a message transmitted in a subsequent procedure may include an IP address of the mobility (generated to avoid exposure of the permanent MAC address), and the identification information of the dispenser included in the DDP response message may include an IP address of the dispenser, a TCP port number of the dispenser, or a UDP port number of the dispenser.

In a hydrogen fueling communication method performed by a communication apparatus of a hydrogen-fueled mobility according to an embodiment of the present disclosure, the identification information of the mobility included in the DDP request message or in a message transmitted in a subsequent procedure may include a pairing identifier (ID) of the mobility, and the identification information of the dispenser included in the DDP response message may include a pairing identifier (ID) of the dispenser.

In a hydrogen fueling communication method performed by a communication apparatus of a hydrogen-fueled mobility according to an embodiment of the present disclosure, the step S2600 of performing authentication for pairing between the mobility and the dispenser may be performed using the pairing identifier of the mobility and the pairing identifier of the dispenser.

In the step S2600 of performing authentication for pairing between the mobility and the dispenser, the mobility may perform authentication for pairing with the dispenser through a pairing channel that is different from the communication channel used for connecting the mobility to the communication network, using the pairing identifier of the mobility and the pairing identifier of the dispenser.

The step S2600 of performing authentication for pairing between the mobility and the dispenser may include: binding the pairing channel for pairing between the mobility and the dispenser to the communication channel using the pairing identifiers of the mobility and the dispenser; and performing authentication for pairing between the mobility and the dispenser within the pairing channel using the pairing identifiers of the mobility and the dispenser.

In an embodiment of the present disclosure, the communication channel and the pairing channel may be the same channel, and in another embodiment, the communication channel and the pairing channel may be different instances of the same type of channel, and in another embodiment, the communication channel and the pairing channel may be different types of channels.

A pairing ID field in the DDP request message and/or the DDP response message may be particularly useful where a pairing channel different from the communication channel is used. For example, the pairing ID may be used when binding the pairing channel to the communication channel.

The pairing channel may be implemented as a separate secure channel (for example, TCP and/or TLS). In an alternative embodiment, the pairing channel may be implemented using a heterogeneous communication technology different from the communication channel. For example, while the communication channel may be WLAN, the pairing channel may be UWB, or may be established using short-range communications such as BLE, IrDA, or RFID.

In a hydrogen fueling communication method performed by a communication apparatus of the mobility and/or the dispenser according to an embodiment of the present disclosure, mutual authentication between the mobility and the dispenser may be required.

Although the mobility may act as a client and the dispenser may act as a server in TCP/TLS/DTLS communication, the spirit of the present disclosure is not limited to a specific embodiment.

The DDP request message from the mobility may include information requesting where the dispenser is located, or identifying which dispenser is present.

The DDP response message from the dispenser may include information indicating its identity, location, IP address, or port information.

After the DDP request message and the DDP response message are exchanged, a TCP 3-way handshake and/or a TLS 3-way handshake may be performed between the mobility and the dispenser.

In the TCP 3-way handshake, the mobility may transmit a SYN message, the dispenser may respond with a SYN/ACK message, and the mobility may respond with an ACK message.

In the TLS 3-way handshake, the mobility may transmit a ClientHello message, the dispenser may respond with a ServerHello message, and the mobility may transmit a ClientFinished message along with a first fueling message.

In a hydrogen fueling communication method performed by a communication apparatus of the mobility and/or the dispenser according to an embodiment of the present disclosure, during the mutual authentication between the mobility and the dispenser, each of the mobility and the dispenser may prove its identity using a certificate and a signature.

If the dispenser acts as the server, the dispenser may request authentication of the client (the mobility) at any time.

If dispenser authentication fails, the mobility may record such a security event in the mobility's EVCC or an associated database, may notify the user of the security event if possible, and may stop the fueling based on emergency handling (UC11, S411).

If mobility authentication fails, the dispenser may record such a security event in the dispenser's SECC or an associated database and may stop the fueling based on emergency handling (UC11, S411).

In an alternative embodiment within step S401, during the process of exchanging pairing information between the mobility and the dispenser after broadcasting the DDP request message (S2400), a message transmitted from the mobility may include information on communication protocols or fueling protocols supported by the mobility as interoperability or compatibility information shared between the mobility and the dispenser.

In an alternative embodiment, in the step S2400 of broadcasting the DDP request message, the DDP request message may include information on communication protocols or fueling protocols supported by the mobility as interoperability or compatibility information shared between the mobility and the dispenser.

In a hydrogen fueling communication method performed by a communication apparatus of a hydrogen-fueled mobility according to an embodiment of the present disclosure, information on the communication protocol or fueling protocol supported by the mobility may include a protocol name, index, version, priority, or preference.

In an alternative embodiment within step S401, during the process of exchanging pairing information between the mobility and the dispenser after transmitting/receiving the DDP response message (S2500), a message transmitted from the dispenser may include information on communication protocols or fueling protocols supported by the dispenser as interoperability or compatibility information shared between the mobility and the dispenser.

In an alternative embodiment, in the step S2500 of transmitting/receiving the DDP response message, the DDP response message may include information on communication protocols or fueling protocols supported by the dispenser as interoperability or compatibility information shared between the mobility and the dispenser.

In a hydrogen fueling communication method performed by a communication apparatus of the mobility and/or the dispenser according to an embodiment of the present disclosure, information on the communication protocol or fueling protocol supported by the dispenser may include a protocol name, index, version, priority, or preference.

In a hydrogen fueling communication method performed by a communication apparatus of a hydrogen-fueled mobility according to an embodiment of the present disclosure, after pairing is performed between the mobility and the dispenser, a step (S403, S404, S405) of negotiating a communication protocol or fueling protocol between the mobility and the dispenser may further be included.

In a hydrogen fueling communication method performed by a communication apparatus of a hydrogen-fueled mobility according to an embodiment of the present disclosure, after pairing is performed between the mobility and the dispenser, a step (S402) of establishing a secure channel between the mobility and the dispenser for negotiating a communication protocol or fueling protocol may further be included.

In a hydrogen fueling communication method performed by a communication apparatus of a hydrogen-fueled mobility according to an embodiment of the present disclosure, the step (S403, S404, S405) of negotiating a communication protocol or fueling protocol between the mobility and the dispenser may include: negotiating a communication protocol between the mobility and the dispenser (S403); negotiating a fueling protocol between the mobility and the dispenser based on the communication protocol (S404); and negotiating fueling parameters between the mobility and the dispenser based on the fueling protocol (S405).

A hydrogen fueling communication method performed by a communication apparatus of a dispenser configured to supply hydrogen fuel to a hydrogen-fueled mobility according to an embodiment of the present disclosure may include: receiving, via a communication network including the dispenser, a DDP (Dispenser Discovery Protocol) request message broadcast from the mobility (S2400); transmitting, to the mobility, a DDP response message including identification information of the dispenser on the communication network (S2500); and performing authentication for pairing between the mobility and the dispenser using the identification information of the dispenser included in the DDP response message (S2600).

In a hydrogen fueling communication method performed by a communication apparatus of a dispenser according to an embodiment of the present disclosure, identification information of the mobility included in the DDP request message may include a pairing identifier (ID, Identification) of the mobility, and identification information of the dispenser included in the DDP response message may include a pairing identifier (ID, Identification) of the dispenser.

In a hydrogen fueling communication method performed by a communication apparatus of a dispenser according to an embodiment of the present disclosure, the step (S2600) of performing authentication for pairing between the mobility and the dispenser may be performed using the pairing identifier of the mobility and the pairing identifier of the dispenser.

During the step of performing authentication for pairing between the mobility and the dispenser, authentication for pairing between the mobility and the dispenser may be performed using the pairing identifier of the mobility and the pairing identifier of the dispenser through a pairing channel different from a communication channel connected to the communication network by the mobility.

In a hydrogen fueling communication method performed by a communication apparatus of a dispenser according to an embodiment of the present disclosure, the identification information of the dispenser included in the DDP response message may include an IP address of the dispenser, a TCP port number of the dispenser, or a UDP port number of the dispenser.

In a hydrogen fueling communication method performed by a communication apparatus of a dispenser according to an embodiment of the present disclosure, after pairing is performed between the mobility and the dispenser, a step (S403, S404, S405) of negotiating a communication protocol or fueling protocol between the mobility and the dispenser; and a step (S407) of monitoring and controlling a hydrogen fueling process performed by the dispenser to supply hydrogen to the mobility based on the fueling protocol may further be included.

In a hydrogen fueling communication method performed by a communication apparatus of a dispenser according to an embodiment of the present disclosure, the method may further include a step (not shown) in which the dispenser opens a UDP port based on a UDP port number of the mobility included in a predefined DDP request message.

In alternative embodiments, authentication for pairing (S2600) may be performed by being requested or initiated by the mobility, as needed.

In alternative embodiments, authentication for pairing (S2600) may be performed by being continuously requested or initiated by the dispenser. In particular, after hydrogen fueling has started, the dispenser may periodically or continuously request or initiate a process related to the authentication for pairing (S2600) in order to perform the step (S407) of monitoring and controlling the hydrogen fueling process.

In alternative embodiments, authentication for pairing (S2600) may be executed as unilateral authentication.

In other alternative embodiments, authentication for pairing (S2600) may be executed as mutual authentication.

In alternative embodiments, during the authentication process for pairing (S2600), an entity acting as a server may transmit a certificate, signature, or similar information to the counterpart.

In other alternative embodiments, during the authentication process for pairing (S2600), an entity acting as a server may transmit a certificate, signature, and a certificate request to the counterpart.

In further alternative embodiments, when the authentication for pairing (S2600) is executed as mutual authentication, the mobility may act as the server at one time and the dispenser may act as the server at another time.

In embodiments of the present disclosure, for convenience of explanation, protocol messages are expressed or encoded as JSON-based messages. In alternative embodiments of the present disclosure, protocol messages may be generated using various message coding and/or representation technologies, and protocol messages generated using various technologies may be transmitted and received among the mobility, dispenser, and fueling station.

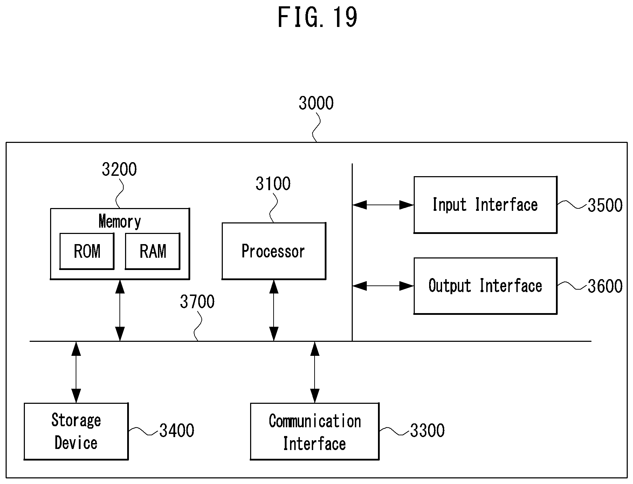

FIG. 19 is a conceptual block diagram of an internal structure of a generalized computing system that may be mounted on a hydrogen-fueled mobility, a dispenser, and/or a fueling station as a communication apparatus, communication control device, and/or electronic control unit according to an embodiment of the present disclosure.

Although omitted from the drawings in the embodiments of FIGS. 1 through 18, a processor and a memory are electronically connected to respective elements, and operations of the elements may be controlled or managed by the processor.

At least a portion of the processes of the fuel supply communication method for electric vehicle fueling according to an embodiment of the present disclosure may be executed by the computing system 3000 of FIG. 19.

According to an embodiment of the present disclosure, the computing system 3000 may include at least one processor 3100 and a memory 3200 storing instructions for directing the at least one processor 3100 to perform at least one step. At least a portion of the steps of the method according to an embodiment of the present disclosure may be executed by the at least one processor 3100 loading and executing the instructions from the memory 3200.

The processor 3100 may refer to a central processing unit (CPU), a graphics processing unit (GPU), or a dedicated processor configured to perform the methods according to the embodiments of the present disclosure.

Each of the memory 3200 and the storage device 3400 may include at least one of a volatile storage medium and a non-volatile storage medium. For example, the memory 3200 may include at least one of a read-only memory (ROM) and a random-access memory (RAM).

In addition, the computing system 3000 may include a communication interface 3300 configured to perform communication through a wired and/or wireless network.

The computing system 3000 may further include the storage device 3400, an input interface 3500, and an output interface 3600.

Each component included in the computing system 3000 may be connected through a bus 3700 to communicate with each other.

A device including the processor 3100 according to an embodiment of the present disclosure may be, for example, a communication-capable desktop computer, laptop computer, notebook, smartphone, tablet PC, mobile phone, smartwatch, smart glasses, e-book reader, PMP (portable multimedia player), portable game console, navigation device, digital camera, DMB (digital multimedia broadcasting) player, digital audio recorder, digital audio player, digital video recorder, digital video player, PDA (Personal Digital Assistant), or the like.

A communication device for hydrogen fueling according to an embodiment of the present disclosure may be mounted in the hydrogen-fueled mobility and/or the dispenser and perform communication between the hydrogen-fueled mobility and the dispenser, and may include a processor 3100 configured to receive and execute at least one command from the memory 3200.

The communication device or communication control device of the hydrogen-fueled mobility 100 according to an embodiment of the present disclosure may include the memory 3200 storing at least one instruction and the processor 3100 executing at least one instruction. The processor 3100, based on at least one instruction, may broadcast a Dispenser Discovery Protocol (DDP) request message via a communication network including the dispenser (S2400), may receive a DDP response message including identification information of the dispenser on the communication network from the dispenser (S2500), and, using the dispenser identification information included in the DDP response message, may perform authentication for pairing between the mobility and the dispenser (S2600).

In the communication device of the hydrogen-fueled mobility according to an embodiment of the present disclosure, before the DDP request message is broadcasted (S2400), the IP address of the mobility to be used in the communication network including the dispenser may be determined, and the mobility may connect to the communication network through a communication channel based on the IP address of the mobility.

In the communication device of the hydrogen-fueled mobility according to an embodiment of the present disclosure, the DDP request message may include a pairing identifier (ID, Identification) of the mobility, and the identification information included in the DDP response message may include a pairing identifier (ID, Identification) of the dispenser.

When authentication for pairing between the mobility and the dispenser is performed (S2600) in the communication device of the hydrogen-fueled mobility according to an embodiment of the present disclosure, authentication for pairing between the mobility and the dispenser may be performed using the pairing identifier of the mobility and the pairing identifier of the dispenser.

When authentication for pairing between the mobility and the dispenser is performed (S2600) in the communication device of the hydrogen-fueled mobility according to an embodiment of the present disclosure, the authentication for pairing between the mobility and the dispenser may be performed using the pairing identifier of the mobility and the pairing identifier of the dispenser through a pairing channel different from a communication channel connected to the communication network.

In the communication device of the hydrogen-fueled mobility according to an embodiment of the present disclosure, the identification information included in the DDP response message may include an IP address of the dispenser, a TCP port number of the dispenser, or a UDP port number of the dispenser.

A communication device or communication control device of the dispenser supplying hydrogen to the hydrogen-fueled mobility according to an embodiment of the present disclosure may include a memory 3200 storing at least one instruction and a processor 3100 executing at least one instruction. The processor 3100, based on at least one instruction, may receive a Dispenser Discovery Protocol (DDP) request message broadcasted from the mobility via a communication network including the dispenser (S2400), may transmit a DDP response message including identification information of the dispenser over the communication network to the mobility (S2500), and may perform authentication for pairing between the mobility and the dispenser using the identification information of the dispenser included in the DDP response message (S2600).

Meanwhile, although most of the embodiments described above focus on configurations in which the hydrogen-fueled mobility first transmits its communication protocol or parameters to the dispenser, the present disclosure is not limited to the specific embodiments, and a configuration may also be implemented in which the dispenser first transmits its communication protocol or parameters to the hydrogen-fueled mobility. In such a case, it is apparent that the sender becomes the receiver and the receiver becomes the sender while retaining the same technical characteristics.

The operations of the method according to an embodiment of the present disclosure may be implemented as a program or code stored in a computer-readable recording medium. The computer-readable recording medium includes any type of recording device in which information readable by a computer system is stored. The computer-readable recording medium may also be distributed across a computer system connected over a network, allowing the distributed program or code to be stored and executed.

Further, the computer-readable recording medium may include hardware devices specially configured to store and execute program instructions, such as ROM, RAM, and flash memory. The program instructions may include machine code generated by a compiler, and high-level language code executable by a computer through an interpreter or the like.

Some aspects of the present disclosure have been described in the context of a device, but may also be expressed as a corresponding method, where a block or device corresponds to a method step or feature of the method. Likewise, aspects described in the context of a method may also be expressed as a corresponding block, item, or feature of a device. Some or all of the method steps may be performed by (or using) hardware such as a microprocessor, a programmable computer, or an electronic circuit. In some embodiments, at least one of the essential method steps may be performed by such devices.

In some embodiments, a programmable logic device (for example, a field-programmable gate array) may be used to perform some or all of the functions of the methods described herein. In some embodiments, a field-programmable gate array may operate together with a microprocessor to perform a method described herein. In general, it is preferable that the methods be performed by some type of hardware device.

While the preferred embodiments of the present disclosure have been described above, those skilled in the art will appreciate that various modifications and changes can be made without departing from the spirit and scope of the invention as defined by the following claims.

## Claims

1. A communication method for hydrogen fueling performed by a hydrogen-fueled mobility, the method comprising:
broadcasting, via a communication network including a dispenser configured to supply hydrogen to the mobility, a Dispenser Discovery Protocol (DDP) request message;
receiving, from the dispenser, a DDP response message including identification information of the dispenser on the communication network; and
performing authentication for pairing between the mobility and the dispenser based on the identification information of the dispenser included in the DDP response message.

2. The communication method of claim 1, further comprising:
prior to the broadcasting of the DDP request message, an IP address of the mobility being determined, which is to be used in the communication network including the dispenser, and the mobility being connected to the communication network via a communication channel based on the IP address of the mobility.

3. The communication method of claim 2, wherein the IP address of the mobility is generated based on a random number.

4. The communication method of claim 1, wherein the DDP request message includes a pairing identifier (ID) of the mobility,
wherein the identification information of the dispenser included in the DDP response message includes a pairing identifier (ID) of the dispenser, and
in the performing of the authentication for pairing between the mobility and the dispenser, the authentication is performed using the pairing identifier of the mobility and the pairing identifier of the dispenser.

5. The communication method of claim 4, wherein in the performing of the authentication for pairing between the mobility and the dispenser, the authentication for pairing between the mobility and the dispenser is performed using the pairing identifier of the mobility and the pairing identifier of the dispenser via a pairing channel different from a communication channel connected to the communication network.

6. The communication method of claim 4, wherein the performing of the authentication for pairing between the mobility and the dispenser, comprises:
binding a pairing channel for pairing between the mobility and the dispenser to the communication channel using the pairing identifier of the mobility and the pairing identifier of the dispenser; and
performing authentication for pairing between the mobility and the dispenser within the pairing channel using the pairing identifier of the mobility and the pairing identifier of the dispenser.

7. The communication method of claim 1, wherein the identification information of the dispenser included in the DDP response message comprises one or more of an IP address of the dispenser, a TCP port number of the dispenser, or a UDP port number of the dispenser.

8. The communication method of claim 1, further comprising:
after the pairing between the mobility and the dispenser is performed, negotiating one or more of a communication protocol or a fueling protocol between the mobility and the dispenser.

9. The communication method of claim 1, further comprising:
after the pairing between the mobility and the dispenser is performed, establishing a secure channel between the mobility and the dispenser for negotiating a communication protocol or a fueling protocol.

10. The communication method of claim 8, wherein the negotiating one or more of the communication protocol or fueling protocol, comprises:
negotiating the communication protocol between the mobility and the dispenser;
negotiating the fueling protocol between the mobility and the dispenser based on the communication protocol; and
negotiating fueling parameters between the mobility and the dispenser based on the fueling protocol.

11. A communication method for hydrogen fueling performed by a communication device of a dispenser configured to supply hydrogen to a hydrogen-fueled mobility, the method comprising:
receiving, via a communication network including the dispenser, a Dispenser Discovery Protocol (DDP) request message broadcasted from the mobility;
transmitting, to the mobility, a DDP response message including identification information of the dispenser on the communication network; and
performing authentication for pairing between the mobility and the dispenser based on the identification information of the dispenser included in the DDP response message.

12. The communication method of claim 11, wherein the DDP request message includes a pairing identifier (ID) of the mobility,
wherein the identification information of the dispenser included in the DDP response message includes a pairing identifier (ID) of the dispenser; and
in the performing of the authentication for pairing, the authentication is performed using the pairing identifier of the mobility and the pairing identifier of the dispenser.

13. The communication method of claim 12, wherein in the performing of the authentication for pairing between the mobility and the dispenser, the authentication for pairing between the mobility and the dispenser is performed using the pairing identifier of the mobility and the pairing identifier of the dispenser via a pairing channel different from a communication channel connected to the communication network.

14. The communication method of claim 11, wherein the identification information of the dispenser included in the DDP response message comprises one or more of an IP address of the dispenser, a TCP port number of the dispenser, or a UDP port number of the dispenser.

15. The communication method of claim 11, further comprising:
after the pairing between the mobility and the dispenser is performed, negotiating one or more of a communication protocol or a fueling protocol between the mobility and the dispenser; and
based on the fueling protocol, monitoring and controlling a hydrogen fueling process performed by the dispenser for the mobility.

16. A communication device disposed in a hydrogen-fueled mobility and configured for hydrogen fueling communication, comprising:
a processor executing at least one instruction,
wherein the processor, is configured to:
broadcast, via a communication network including a dispenser configured to supply hydrogen to the mobility, a Dispenser Discovery Protocol (DDP) request message;
receive, from the dispenser, a DDP response message including identification information of the dispenser on the communication network; and
perform authentication for pairing between the mobility and the dispenser to be performed based on the identification information of the dispenser included in the DDP response message.

17. The communication device of claim 16, wherein prior to the broadcasting of the DDP request message, an IP address of the mobility to be used in the communication network including the dispenser is determined, and the mobility is connected to the communication network via a communication channel based on the IP address of the mobility.

18. The communication device of claim 16, wherein the DDP request message includes a pairing identifier (ID) of the mobility,
wherein the identification information of the dispenser included in the DDP response message includes a pairing identifier (ID) of the dispenser, and
when authentication for pairing is performed, authentication for pairing between the mobility and the dispenser is performed using the pairing identifier of the mobility and the pairing identifier of the dispenser.

19. The communication device of claim 18, wherein authentication for pairing is performed via a pairing channel different from a communication channel connected to the communication network using the pairing identifier of the mobility and the pairing identifier of the dispenser.

20. The communication device of claim 16, wherein the identification information of the dispenser included in the DDP response message comprises one or more of an IP address of the dispenser, a TCP port number of the dispenser, or a UDP port number of the dispenser.
